# EUROPEAN PATENT SPECIFICATION

(11) **EP 3 871 432 B1**
(45) Date of publication and mention of the grant of the patent: **11.06.2025**
(21) Application number: 19805047.8
(22) Date of filing: 28.10.2019
(51) Int. Cl.: H04W 24/04, H04W 8/24, H04W 24/08

(54) **END-TO-END MACHINE LEARNING FOR WIRELESS NETWORKS**
END-ZU-END-MASCHINENLERNEN FÜR DRAHTLOSE NETZWERKE
APPRENTISSAGE AUTOMATIQUE DE BOUT EN BOUT POUR RÉSEAUX SANS FIL

(43) Date of publication of application: 01.09.2021
(73) Proprietor: Google LLC, Mountain View, CA 94043 (US)
(72) Inventor: WANG, Jibing, Mountain View, California 94043 (US); STAUFFER, Erik Richard, Mountain View, California 94043 (US)
(74) Representative: Marks & Clerk GST
(86) International application number: PCT/US2019/058328
(87) International publication number: WO 2021/086308

(56) References cited:
- US-A1- 2018 367 985
- US-A1- 2018 367 985
- US-A1- 2019 138 934
- US-A1- 2019 239 238
- US-A1- 2019 239 238

## Description

### BACKGROUND

The evolution of wireless communication systems oftentimes stems from a demand for data throughput. As one example, the demand for data increases as more and more devices gain access to wireless communication systems. Evolving devices also execute data-intensive applications that utilize more data than traditional applications, such as data-intensive streaming-video applications, data-intensive social media applications, data-intensive audio services, etc. This increased demand can, at times, deplete the data resources of a wireless communication system. Thus, to accommodate increased data usage, evolving wireless communication systems utilize increasingly complex architectures to provide more data throughput relative to legacy wireless communication systems.

As one example, fifth generation (5G) standards and technologies transmit data using higher frequency ranges, such as the above-6 Gigahertz (GHz) band (*e.g.*, 5G millimeter wave (mmW) technologies) to increase data capacity. However, transmitting and recovering information using these higher frequency ranges poses challenges. To illustrate, higher frequency signals are more susceptible to multipath fading, scattering, atmospheric absorption, diffraction, interference, and so forth, relative to lower-frequency signals. These signal distortions oftentimes lead to errors when recovering the information at a receiver. As another example, hardware capable of transmitting, receiving, routing, and/or otherwise using these higher frequencies can be complex and expensive, which increases the processing costs in a wirelessly-networked device.

US 2019/239238 Al relates to configuring a radio resource parameter of a radio cell of a radio communication system. More specifically, an agent node is configured to obtain a control policy, determine a feature representing a state of the communication system, determine a control action, and configure an instruction of the radio cell based on the determined control action. The state of the communication system is determined based on received radio environmental measurements and/or network performance measurements. US 2018/367985 Al relates to initial access configuration for coexistence of multiple wireless communication systems.

### SUMMARY

This document describes techniques and apparatuses for end-to-end (E2E) machine learning for wireless systems. Aspects describe an end-to-end machine-learning controller that obtains capabilities of device(s) associated with end-to-end communications in a wireless network. In some implementations, the end-to-end machine-learning controller obtains machine-learning (ML) capabilities for at least one device. In response to obtaining the capabilities, the end-to-end machine-learning controller determines an end-to-end machine-learning configuration (E2E ML configuration) based on the capabilities of the device(s) and communicates the end-to-end machine-learning configuration to the one or more devices. Alternately or additionally, the end-to-end machine-learning controller directs each of these devices to form a respective deep neural network based on the end-to-end machine-learning configuration and to process the end-to-end communications using the respective deep neural network.

One or more aspects describe a user equipment (UE) transmitting one or more capabilities supported by the user equipment, such as to an end-to-end machine-learning controller implemented at a network entity. The UE receives a neural network formation configuration based on an end-to-end machine-learning configuration for the processing information exchanged through the end-to-end communication. The UE forms a deep neural network using the neural network formation configuration, and then processes information exchanged through the end-to-end communication using the deep neural network.

The details of one or more implementations of end-to-end machine learning for wireless networks are set forth in the accompanying drawings and the following description. Other features and advantages will be apparent from the description and drawings, and from the claims. This summary is provided to introduce subject matter that is further described in the Detailed Description and Drawings. Accordingly, this summary should not be considered to describe essential features nor used to limit the scope of the claimed subject matter.

### BRIEF DESCRIPTION OF THE DRAWINGS

The details of one or more aspects of end-to-end machine learning for wireless networks are described below. The use of the same reference numbers in different instances in the description and the figures indicate similar elements:
FIG. 1 illustrates an example environment in which various aspects of end-to-end machine learning for wireless networks can be implemented.
FIG. 2 illustrates an example device diagram of devices that can implement various aspects of end-to-end machine learning for wireless networks.
FIG. 3 illustrates an example device diagram of a device that can implement various aspects of end-to-end machine learning for wireless networks.
FIG. 4 illustrates an example machine-learning module that can implement various aspects of end-to-end machine learning for wireless networks.
FIG. 5 illustrates example block diagrams of processing chains utilized by devices to process communications transmitted over a wireless communication system.
FIG. 6 illustrates an example operating environment in which multiple deep neural networks are utilized in a wireless communication system.
FIG. 7 illustrates an example transaction diagram between various devices for configuring a neural network using a neural network formation configuration.
FIG. 8 illustrates an example transaction diagram between various devices for updating a neural network using a neural network formation configuration.
FIGs. 9-1 and 9-2 illustrate an example transaction diagram between various devices for configuring a neural network using a neural network formation configuration.
FIG. 10 illustrates an example method for configuring a neural network for processing communications transmitted over a wireless communication system.
FIG. 11 illustrates an example method for forming a neural network based on a neural network formation configuration.
FIG. 12 illustrates an example of generating multiple neural network formation configurations.
FIG. 13 illustrates an example transaction diagram between various devices for communicating neural network formation configurations.
FIG. 14 illustrates an example transaction diagram between various network entities for communicating neural network formation configurations.
FIG. 15 illustrates an example transaction diagram between various network entities for communicating neural network formation configurations.
FIG. 16 illustrates an example method for communicating neural network formation configurations over a wireless communication system.
FIG. 17 illustrates an example method for communicating neural network formation configurations over a wireless communication system.
FIG. 18 illustrates an example environment that demonstrates example variations between QoS flows.
FIG. 19 illustrates an example environment in which various aspects of end-to-end machine learning for wireless networks can be implemented.
FIG. 20 illustrates an example environment in which various aspects of end-to-end machine learning for wireless networks can be implemented.
FIG. 21 illustrates an example transaction diagram between various devices in accordance with various implementations of end-to-end machine learning for wireless networks.
FIG. 22 illustrates an example transaction diagram between various devices in accordance with various implementations of end-to-end machine learning for wireless networks.
FIG. 23 illustrates an example transaction diagram between various devices in accordance with various implementations of end-to-end machine learning for wireless networks.
FIG. 24 illustrates an example transaction diagram between various devices in accordance with various implementations of end-to-end machine learning for wireless networks.
FIG. 25 illustrates an example method for end-to-end machine learning for wireless networks.
FIG. 26 illustrates an example method for end-to-end machine learning for wireless networks.

### DETAILED DESCRIPTION

In conventional wireless communication systems, transmitter and receiver processing chains include complex functionality. For instance, a channel estimation block in the processing chain estimates or predicts how a transmission environment distorts a signal propagating through the transmission environment. As another example, channel equalizer blocks reverse the distortions identified by the channel estimation block from the signal. These complex functions oftentimes become more complicated when processing higher frequency ranges, such as 5G mmW signals that are at or around the 6 GHz range. For instance, transmission environments add more distortion to the higher frequency ranges relative to lower frequency ranges, thus making information recovery more complex. Further, hardware capable of processing and routing the higher frequency ranges oftentimes adds increased costs and complex physical constraints.

DNNs provide solutions to complex processing, such as the complex functionality used in a wireless communication system. By training a DNN on transmitter and/or receiver processing chain operations, the DNN can replace the conventional complex functionality in a variety of ways, such as by replacing some or all of the conventional processing blocks used in end-to-end processing of wireless communication signals, replacing individual processing chain blocks, etc. Dynamic reconfiguration of a DNN, such as by modifying various parameter configurations (e.g., coefficients, layer connections, kernel sizes) also provides an ability to adapt to changing operating conditions.

This document describes aspects of end-to-end machine learning for wireless networks, which allows the system to process communications, and dynamically reconfigure DNNs used in E2E communications as operating conditions change. Aspects can be implemented by network entities that operate in the wireless communication system (*e.g.*, a base station, a core network server, a user equipment).

In implementations, a network entity obtains capabilities of device(s) associated with E2E communications in a wireless network. In some implementations, the network entity requests the capabilities, such as by requesting UE capabilities, machine-learning capabilities (ML capabilities), base station (BS) capabilities, and so forth, from one or more devices participating in the E2E communications. In response to obtaining the capabilities, the network entity determines an end-to-end machine-learning configuration (E2E ML configuration) based on the received capabilities. After determining the E2E ML configuration, the network entity communicates the E2E ML configuration to the devices, such as by communicating a first neural network (NN) format configuration to a first device, a second NN format configuration to a second device, etc. The network entity then directs devices participating in the E2E communications to form a respective deep neural network based on the E2E ML configuration (*e.g*., a first DNN formed using the first NN format configuration, a second DNN formed using the second NN format configuration) and to process the E2E communications using the respective DNNs.

In implementations, a UE transmits one or more capabilities supported by the user equipment to a network entity. For example, the UE transmits processing capabilities, memory capabilities, ML-support capabilities, and so forth. Afterward, the UE receives a NN formation configuration associated with an E2E ML configuration. The UE then forms a DNN using the NN formation configuration and processes UE-side communications (e.g., UE portion(s) of the E2E communications) using the DNN.

Determining an E2E ML configuration, where the E2E ML configuration can be partitioned between multiple devices enables the network entity to select an ML configuration that improves communication exchanges in the system. For example, in some implementations, the network entity partitions the E2E ML configuration based on device capabilities, such that the network entity directs devices with less processing resources and/or memory to form DNNs with less processing (e.g., less data, less memory, less CPU cycles, less layers) relative to devices with more processing resources and/or memory. In other words, the network entity determines an E2E ML configuration that improves an overall performance of E2E communications exchanged between devices (*e.g*., lower bit errors, improved signal quality, improved latency) and partitions the E2E ML configuration based upon device resources to allocate and/or appropriate the processing in an efficient manner.

The phrases "transmitted over," "communications exchanged," and "communications associated with" include generating communications to be transmitted over the wireless communication system (*e.g*. processing pre-transmission communications) and/or processing communications received over the wireless communication system. Thus, "processing communications transmitted over the wireless communication system," "communications exchanged over the wireless communication system," as well as "communications associated with the wireless communication system" include generating the transmissions (*e.g*., pre-transmission processing), processing received transmissions, or any combination thereof.

### Example Environment

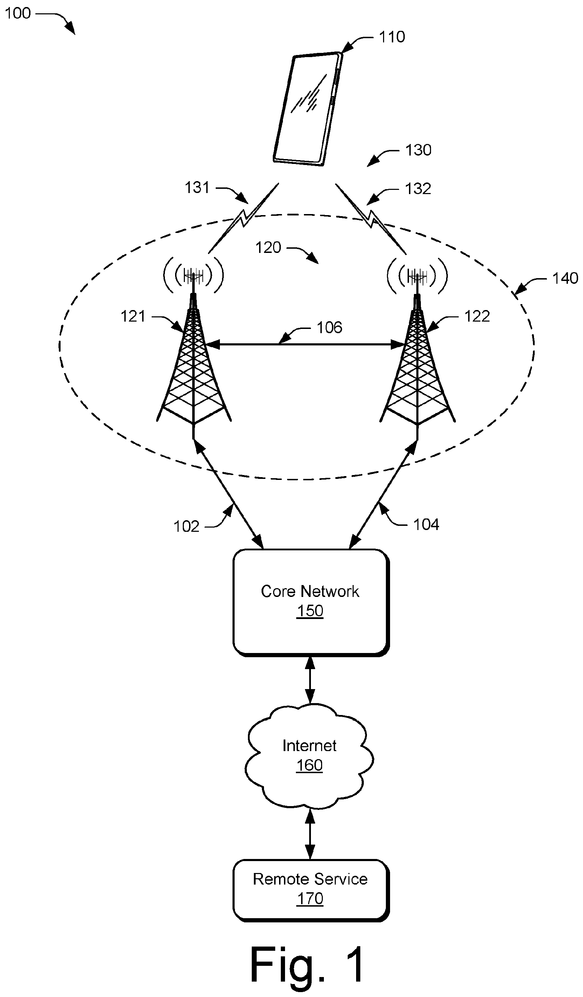

FIG. 1 illustrates an example environment 100 which includes a user equipment 110 (UE 110) that can communicate with base stations 120 (illustrated as base stations 121 and 122) through one or more wireless communication links 130 (wireless link 130), illustrated as wireless links 131 and 132. For simplicity, the UE 110 is implemented as a smartphone but may be implemented as any suitable computing or electronic device, such as a mobile communication device, modem, cellular phone, gaming device, navigation device, media device, laptop computer, desktop computer, tablet computer, smart appliance, vehicle-based communication system, or an Internet-of-Things (IoT) device such as a sensor or an actuator. The base stations 120 (*e.g.*, an Evolved Universal Terrestrial Radio Access Network Node B, E-UTRAN Node B, evolved Node B, eNodeB, eNB, Next Generation Node B, gNode B, gNB, ng-eNB, or the like) may be implemented in a macrocell, microcell, small cell, picocell, and the like, or any combination thereof.

The base stations 120 communicate with the user equipment 110 using the wireless links 131 and 132, which may be implemented as any suitable type of wireless link. The wireless links 131 and 132 include control and data communication, such as downlink of data and control information communicated from the base stations 120 to the user equipment 110, uplink of other data and control information communicated from the user equipment 110 to the base stations 120, or both. The wireless links 130 may include one or more wireless links (*e.g*., radio links) or bearers implemented using any suitable communication protocol or standard, or combination of communication protocols or standards, such as 3rd Generation Partnership Project Long-Term Evolution (3GPP LTE), Fifth Generation New Radio (5G NR), and so forth. Multiple wireless links 130 may be aggregated in a carrier aggregation to provide a higher data rate for the UE 110. Multiple wireless links 130 from multiple base stations 120 may be configured for Coordinated Multipoint (CoMP) communication with the UE 110.

The base stations 120 are collectively a Radio Access Network 140 (*e.g.*, RAN, Evolved Universal Terrestrial Radio Access Network, E-UTRAN, 5G NR RAN or NR RAN). The base stations 121 and 122 in the RAN 140 are connected to a core network 150. The base stations 121 and 122 connect, at 102 and 104 respectively, to the core network 150 through an NG2 interface for control-plane signaling and using an NG3 interface for user-plane data communications when connecting to a 5G core network, or using an S1 interface for control-plane signaling and user-plane data communications when connecting to an Evolved Packet Core (EPC) network. The base stations 121 and 122 can communicate using an Xn Application Protocol (XnAP) through an Xn interface, or using an X2 Application Protocol (X2AP) through an X2 interface, at 106, to exchange user-plane and control-plane data. The user equipment 110 may connect, via the core network 150, to public networks, such as the Internet 160 to interact with a remote service 170. The remote service 170 represents the computing, communication, and storage devices used to provide any of a multitude of services including interactive voice or video communication, file transfer, streaming voice or video, and other technical services implemented in any manner such as voice calls, video calls, website access, messaging services (*e.g*., text messaging or multi-media messaging), photo file transfer, enterprise software applications, social media applications, videogaming, streaming video services, and podcasts.

### Example Devices

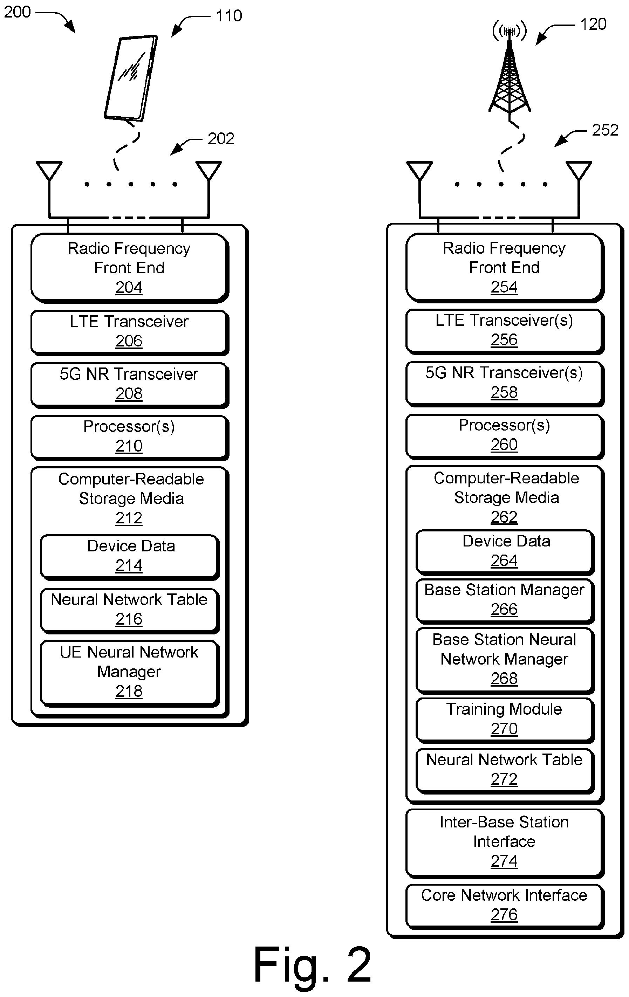

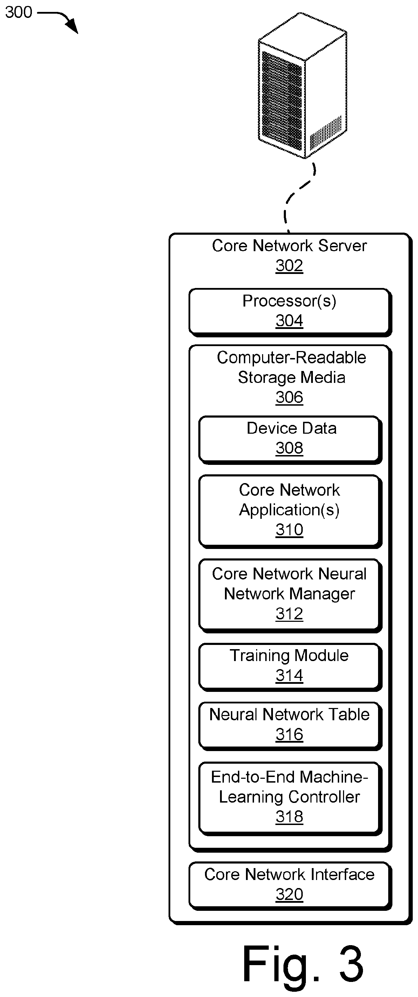

FIG. 2 illustrates an example device diagram 200 of the user equipment 110 and one of the base stations 120. FIG. 3 illustrates an example device diagram 300 of a core network server 302. The user equipment 110, the base station 120, and/or the core network server 302 may include additional functions and interfaces that are omitted from FIG. 2 or FIG. 3 for the sake of clarity.

The user equipment 110 includes antennas 202, a radio frequency front end 204 (RF front end 204), a wireless transceiver (*e.g*., an LTE transceiver 206, and/or a 5G NR transceiver 208) for communicating with the base station 120 in the RAN 140. The RF front end 204 of the user equipment 110 can couple or connect the LTE transceiver 206, and the 5G NR transceiver 208 to the antennas 202 to facilitate various types of wireless communication. The antennas 202 of the user equipment 110 may include an array of multiple antennas that are configured similar to or differently from each other. The antennas 202 and the RF front end 204 can be tuned to, and/or be tunable to, one or more frequency bands defined by the 3GPP LTE and 5G NR communication standards and implemented by the LTE transceiver 206, and/or the 5G NR transceiver 208. Additionally, the antennas 202, the RF front end 204, the LTE transceiver 206, and/or the 5G NR transceiver 208 may be configured to support beamforming for the transmission and reception of communications with the base station 120. By way of example and not limitation, the antennas 202 and the RF front end 204 can be implemented for operation in sub-gigahertz bands, sub-6 GHz bands, and/or above 6 GHz bands that are defined by the 3GPP LTE and 5G NR communication standards.

The user equipment 110 also includes processor(s) 210 and computer-readable storage media 212 (CRM 212). The processor 210 may be a single core processor or a multiple core processor composed of a variety of materials, such as silicon, polysilicon, high-K dielectric, copper, and so on. The computer-readable storage media described herein excludes propagating signals. CRM 212 may include any suitable memory or storage device such as random-access memory (RAM), static RAM (SRAM), dynamic RAM (DRAM), non-volatile RAM (NVRAM), read-only memory (ROM), or Flash memory useable to store device data 214 of the user equipment 110. The device data 214 includes user data, multimedia data, beamforming codebooks, applications, neural network tables, and/or an operating system of the user equipment 110, which are executable by processor(s) 210 to enable user-plane communication, control-plane signaling, and user interaction with the user equipment 110.

In some implementations, the computer-readable storage media 212 includes a neural network table 216 that stores various architecture and/or parameter configurations that form a neural network, such as, by way of example and not of limitation, parameters that specify a fully connected layer neural network architecture, a convolutional layer neural network architecture, a recurrent neural network layer, a number of connected hidden neural network layers, an input layer architecture, an output layer architecture, a number of nodes utilized by the neural network, coefficients (*e.g*., weights and biases) utilized by the neural network, kernel parameters, a number of filters utilized by the neural network, strides/pooling configurations utilized by the neural network, an activation function of each neural network layer, interconnections between neural network layers, neural network layers to skip, and so forth. Accordingly, the neural network table 216 includes any combination of NN formation configuration elements (*e.g*., architecture and/or parameter configurations) that can be used to create a NN formation configuration (*e.g.*, a combination of one or more NN formation configuration elements) that defines and/or forms a DNN. In some implementations, a single index value of the neural network table 216 maps to a single NN formation configuration element (*e.g.*, a 1:1 correspondence). Alternately or additionally, a single index value of the neural network table 216 maps to a NN formation configuration (*e.g*., a combination of NN formation configuration elements). In some implementations, the neural network table includes input characteristics for each NN formation configuration element and/or NN formation configuration, where the input characteristics describe properties about the training data used to generate the NN formation configuration element and/or NN formation configuration as further described.

In some implementations, the CRM 212 may also include a user equipment neural network manager 218 (UE neural network manager 218). Alternately or additionally, the UE neural network manager 218 may be implemented in whole or part as hardware logic or circuitry integrated with or separate from other components of the user equipment 110. The UE neural network manager 218 accesses the neural network table 216, such as by way of an index value, and forms a DNN using the NN formation configuration elements specified by a NN formation configuration. In implementations, UE neural network manager forms multiple DNNs to process wireless communications (*e.g*., downlink communications and/or uplink communications exchanged with the base station 120).

The device diagram for the base station 120, shown in FIG.2, includes a single network node (*e.g.*, a gNode B). The functionality of the base station 120 may be distributed across multiple network nodes or devices and may be distributed in any fashion suitable to perform the functions described herein. The base station 120 include antennas 252, a radio frequency front end 254 (RF front end 254), one or more wireless transceivers (*e.g*. one or more LTE transceivers 256, and/or one or more 5G NR transceivers 258) for communicating with the UE 110. The RF front end 254 of the base station 120 can couple or connect the LTE transceivers 256 and the 5G NR transceivers 258 to the antennas 252 to facilitate various types of wireless communication. The antennas 252 of the base station 120 may include an array of multiple antennas that are configured similar to, or different from, each other. The antennas 252 and the RF front end 254 can be tuned to, and/or be tunable to, one or more frequency band defined by the 3GPP LTE and 5G NR communication standards, and implemented by the LTE transceivers 256, and/or the 5G NR transceivers 258. Additionally, the antennas 252, the RF front end 254, the LTE transceivers 256, and/or the 5G NR transceivers 258 may be configured to support beamforming, such as Massive-MIMO, for the transmission and reception of communications with the UE 110.

The base station 120 also include processor(s) 260 and computer-readable storage media 262 (CRM 262). The processor 260 may be a single core processor or a multiple core processor composed of a variety of materials, such as silicon, polysilicon, high-K dielectric, copper, and so on. CRM 262 may include any suitable memory or storage device such as random-access memory (RAM), static RAM (SRAM), dynamic RAM (DRAM), non-volatile RAM (NVRAM), read-only memory (ROM), or Flash memory useable to store device data 264 of the base station 120. The device data 264 includes network scheduling data, radio resource management data, beamforming codebooks, applications, and/or an operating system of the base station 120, which are executable by processor(s) 260 to enable communication with the user equipment 110.

CRM 262 also includes a base station manager 266. Alternately or additionally, the base station manager 266 may be implemented in whole or part as hardware logic or circuitry integrated with or separate from other components of the base station 120. In at least some aspects, the base station manager 266 configures the LTE transceivers 256 and the 5G NR transceivers 258 for communication with the user equipment 110, as well as communication with a core network, such as the core network 150.

CRM 262 also includes a base station neural network manager 268 (BS neural network manager 268). Alternately or additionally, the BS neural network manager 268 may be implemented in whole or part as hardware logic or circuitry integrated with or separate from other components of the base station 120. In at least some aspects, the BS neural network manager 268 selects the NN formation configurations utilized by the base station 120 and/or UE 110 to configure deep neural networks for processing wireless communications, such as by selecting a combination of NN formation configuration elements. In some implementations, the BS neural network manager receives feedback from the UE 110, and selects the neural network formation configuration based on the feedback. Alternately or additionally, the BS neural network manager 268 receives neural network formation configuration directions from core network 150 elements through a core network interface 276 or an inter-base station interface 274 and forwards the neural network formation configuration directions to UE 110.

CRM 262 includes training module 270 and neural network table 272. In implementations, the base station 120 manage and deploy NN formation configurations to UE 110. Alternately or additionally, the base station 120 maintain the neural network table 272. The training module 270 teaches and/or trains DNNs using known input data. For instance, the training module 270 trains DNN(s) for different purposes, such as processing communications transmitted over a wireless communication system (*e.g*., encoding downlink communications, modulating downlink communications, demodulating downlink communications, decoding downlink communications, encoding uplink communications, modulating uplink communications, demodulating uplink communications, decoding uplink communications). This includes training the DNN(s) offline (*e.g*., while the DNN is not actively engaged in processing the communications) and/or online (*e.g*., while the DNN is actively engaged in processing the communications).

In implementations, the training module 270 extracts learned parameter configurations from the DNN to identify the NN formation configuration elements and/or NN formation configuration, and then adds and/or updates the NN formation configuration elements and/or NN formation configuration in the neural network table 272. The extracted parameter configurations include any combination of information that defines the behavior of a neural network, such as node connections, coefficients, active layers, weights, biases, pooling, etc.

The neural network table 272 stores multiple different NN formation configuration elements and/or NN formation configurations generated using the training module 270. In some implementations, the neural network table includes input characteristics for each NN formation configuration element and/or NN formation configuration, where the input characteristics describe properties about the training data used to generate the NN formation configuration element and/or NN formation configuration. For instance, the input characteristics includes, by way of example and not of limitation, power information, signal-to-interference-plus-noise ratio (SINR) information, channel quality indicator (CQI) information, channel state information (CSI), Doppler feedback, frequency bands, BLock Error Rate (BLER), Quality of Service (QoS), Hybrid Automatic Repeat reQuest (HARQ) information (e.g., first transmission error rate, second transmission error rate, maximum retransmissions), latency, Radio Link Control (RLC), Automatic Repeat reQuest (ARQ) metrics, received signal strength (RSS), uplink SINR, timing measurements, error metrics, UE capabilities, BS capabilities, power mode, Internet Protocol (IP) layer throughput, end2end latency, end2end packet loss ratio, etc. Accordingly, the input characteristics include, at times, Layer 1, Layer 2, and/or Layer 3 metrics. In some implementations, a single index value of the neural network table 272 maps to a single NN formation configuration element (*e.g.*, a 1:1 correspondence). Alternately or additionally, a single index value of the neural network table 272 maps to a NN formation configuration (*e.g*., a combination of NN formation configuration elements).

In implementations, the base station 120 synchronizes the neural network table 272 with the neural network table 216 such that the NN formation configuration elements and/or input characteristics stored in one neural network table is replicated in the second neural network table. Alternately or additionally, the base station 120 synchronizes the neural network table 272 with the neural network table 216 such that the NN formation configuration elements and/or input characteristics stored in one neural network table represent complementary functionality in the second neural network table (*e.g.*, NN formation configuration elements for transmitter path processing in the first neural network table, NN formation configuration elements for receiver path processing in the second neural network table).

The base station 120 also include an inter-base station interface 274, such as an Xn and/or X2 interface, which the base station manager 266 configures to exchange user-plane, control-plane, and other information between other base station 120, to manage the communication of the base station 120 with the user equipment 110. The base station 120 include a core network interface 276 that the base station manager 266 configures to exchange user-plane, control-plane, and other information with core network functions and/or entities.

In FIG. 3, the core network server 302 may provide all or part of a function, entity, service, and/or gateway in the core network 150. Each function, entity, service, and/or gateway in the core network 150 may be provided as a service in the core network 150, distributed across multiple servers, or embodied on a dedicated server. For example, the core network server 302 may provide the all or a portion of the services or functions of a User Plane Function (UPF), an Access and Mobility Management Function (AMF), a Serving Gateway (S-GW), a Packet Data Network Gateway (P-GW), a Mobility Management Entity (MME), an Evolved Packet Data Gateway (ePDG), and so forth. The core network server 302 is illustrated as being embodied on a single server that includes processor(s) 304 and computer-readable storage media 306 (CRM 306). The processor 304 may be a single core processor or a multiple core processor composed of a variety of materials, such as silicon, polysilicon, high-K dielectric, copper, and so on. CRM 306 may include any suitable memory or storage device such as random-access memory (RAM), static RAM (SRAM), dynamic RAM (DRAM), non-volatile RAM (NVRAM), read-only memory (ROM), hard disk drives, or Flash memory useful to store device data 308 of the core network server 302. The device data 308 includes data to support a core network function or entity, and/or an operating system of the core network server 302, which are executable by processor(s) 304.

CRM 306 also includes one or more core network applications 310, which, in one implementation, is embodied on CRM 306 (as shown). The one or more core network applications 310 may implement the functionality such as UPF, AMF, S-GW, P-GW, MME, ePDG, and so forth. Alternately or additionally, the one or more core network applications 310 may be implemented in whole or part as hardware logic or circuitry integrated with or separate from other components of the core network server 302.

CRM 306 also includes a core network neural network manager 312 that manages NN formation configurations used to process communications exchanged between UE 110 and the base stations 120. In some implementations, the core network neural network manager 312 analyzes various parameters, such as current signal channel conditions (*e.g*., as reported by base stations 120, as reported by other wireless access points, as reported by UEs 110 (via base stations or other wireless access points)), capabilities at base stations 120 (*e.g*., antenna configurations, cell configurations, MIMO capabilities, radio capabilities, processing capabilities), capabilities of UE 110 (*e.g.*, antenna configurations, MIMO capabilities, radio capabilities, processing capabilities), and so forth. For example, the base stations 120 obtain the various parameters during the communications with the UE and forward the parameters to the core network neural network manager 312. The core network neural network manager selects, based on these parameters, a NN formation configuration that improves the accuracy of a DNN processing the communications. Improving the accuracy signifies an improved accuracy in the output, such as lower bit errors, generated by the neural network relative to a neural network configured with another NN formation configuration. The core network neural network manager 312 then communicates the selected NN formation configuration to the base stations 120 and/or the UE 110. In implementations, the core network neural network manager 312 receives UE and/or BS feedback from the base station 120 and selects an updated NN formation configuration based on the feedback.

CRM 306 includes training module 314 and neural network table 316. In implementations, the core network server 302 manages and deploys NN formation configurations to multiple devices in a wireless communication system, such as UEs 110 and base stations 120. Alternately or additionally, the core network server maintains the neural network table 316 outside of the CRM 306. The training module 314 teaches and/or trains DNNs using known input data. For instance, the training module 314 trains DNN(s) to process different types of pilot communications transmitted over a wireless communication system. This includes training the DNN(s) offline and/or online. In implementations, the training module 314 extracts a learned NN formation configuration and/or learned NN formation configuration elements from the DNN and stores the learned NN formation configuration elements in the neural network table 316. Thus, a NN formation configuration includes any combination of architecture configurations (*e.g*., node connections, layer connections) and/or parameter configurations (*e.g*., weights, biases, pooling) that define or influence the behavior of a DNN. In some implementations, a single index value of the neural network table 316 maps to a single NN formation configuration element (*e.g.*, a 1:1 correspondence). Alternately or additionally, a single index value of the neural network table 316 maps to a NN formation configuration (*e.g*., a combination of NN formation configuration elements).

In some implementations, the training module 314 of the core network neural network manager 312 generates complementary NN formation configurations and/or NN formation configuration elements to those stored in the neural network table 216 at the UE 110 and/or the neural network table 272 at the base station 121. As one example, the training module 314 generates neural network table 316 with NN formation configurations and/or NN formation configuration elements that have a high variation in the architecture and/or parameter configurations relative to medium and/or low variations used to generate the neural network table 272 and/or the neural network table 216. For instance, the NN formation configurations and/or NN formation configuration elements generated by the training module 314 correspond to fully connected layers, a full kernel size, frequent sampling and/or pooling, high weighting accuracy, and so forth. Accordingly, the neural network table 316 includes, at times, high accuracy neural networks at the trade-off of increased processing complexity and/or time.

The NN formation configurations and/or NN formation configuration elements generated by the training module 270 have, at times, more fixed architecture and/or parameter configurations (*e.g*., fixed connection layers, fixed kernel size, etc.), and less variation, relative to those generated by the training module 314. The training module 270, for example, generates streamlined NN formation configurations (*e.g*., faster computation times, less data processing), relative to those generated by the training module 314, to optimize or improve a performance of end2end network communications at the base station 121 and/or the UE 110. Alternately or additionally, the NN formation configurations and/or NN formation configuration elements stored at the neural network table 216 at the UE 110 include more fixed architecture and/or parameter configurations, relative to those stored in the neural network table 316 and/or the neural network table 272, that reduce requirements (*e.g*., computation speed, less data processing points, less computations, less power consumption, etc.) at the UE 110 relative to the base station 121 and/or the core network server 302. In implementations, the variations in fixed (or flexible) architecture and/or parameter configurations at each neural network are based on the processing resources (*e.g*., processing capabilities, memory constraints, quantization constraints (*e.g*., 8-bit vs. 16-bit), fixed-point vs. floating point computations, floating point operations per second (FLOPS), power availability) of the devices targeted to form the corresponding DNNs. Thus, UEs or access points with less processing resources relative to a core network server or base station receive NN formation configurations optimized for the available processing resources.

The neural network table 316 stores multiple different NN formation configuration elements generated using the training module 314. In some implementations, the neural network table includes input characteristics for each NN formation configuration element and/or NN formation configuration, where the input characteristics describe properties about the training data used to generate the NN formation configuration. For instance, the input characteristics can include power information, SINR information, CQI, CSI, Doppler feedback, RSS, error metrics, minimum end-to-end (E2E) latency, desired E2E latency, E2E QoS, E2E throughput, E2E packet loss ratio, cost of service, etc.

CRM 302 also includes an end-to-end machine-learning controller 318 (E2E ML controller 318). The E2E ML controller 318 determines an end-to-end machine-learning configuration (E2E ML configuration) for processing information exchanged through an E2E communication, such as a QoS flow. In implementations, the E2E ML controller analyzes any combination of ML capabilities (*e.g*., supported ML architectures, supported number of layers, available processing power, memory limitations, available power budget, fixed-point processing vs. floating point processing, maximum kernel size capability, computation capability) of devices participating in the E2E communication. Alternately or additionally, the E2E ML controller analyzes any combination of QoS requirements, QoS parameters, and/or QoS characteristics to determine an E2E ML configuration that satisfies the associated requirements, parameters, and/or characteristics. In some implementations, the E2E ML controller obtains metrics that characterize a current operating environment and analyzes the current operating environment to determine the E2E ML configuration. This includes determining an E2E ML configuration that includes an architecture configuration in combination with parameter configuration(s) that define a DNN or determining an E2E ML configuration that simply includes parameter configurations used to update the DNN.

In determining the E2E ML configuration, the E2E ML controller sometimes determines partitions to the E2E ML configuration that distribute the processing functionality associated with the E2E ML configuration across multiple devices. For clarity, FIG. 3 illustrates the end-to-end machine-learning controller 318 as separate from the core network neural network manager 312, but in alternate or additional implementations, the core network neural network manager 312 includes functionality performed by the end-to-end machine-learning controller 318 or vice versa. Further, while FIG. 3 illustrates the core network server 302 implementing the E2E ML controller 318, alternate or additional devices can implement the E2E ML controller, such as the base station 120 and/or other network elements.

The core network server 302 also includes a core network interface 320 for communication of user-plane, control-plane, and other information with the other functions or entities in the core network 150, base stations 120, or UE 110. In implementations, the core network server 302 communicates NN formation configurations to the base station 120 using the core network interface 320. The core network server 302 alternately or additionally receives feedback from the base stations 120 and/or the UE 110, by way of the base stations 120, using the core network interface 320.

Having described an example environment and example devices that can be utilized for neural network formation configuration feedback in wireless communications, consider now a discussion of configurable machine-learning modules that is in accordance with one or more implementations.

### Configurable Machine-Learning Modules

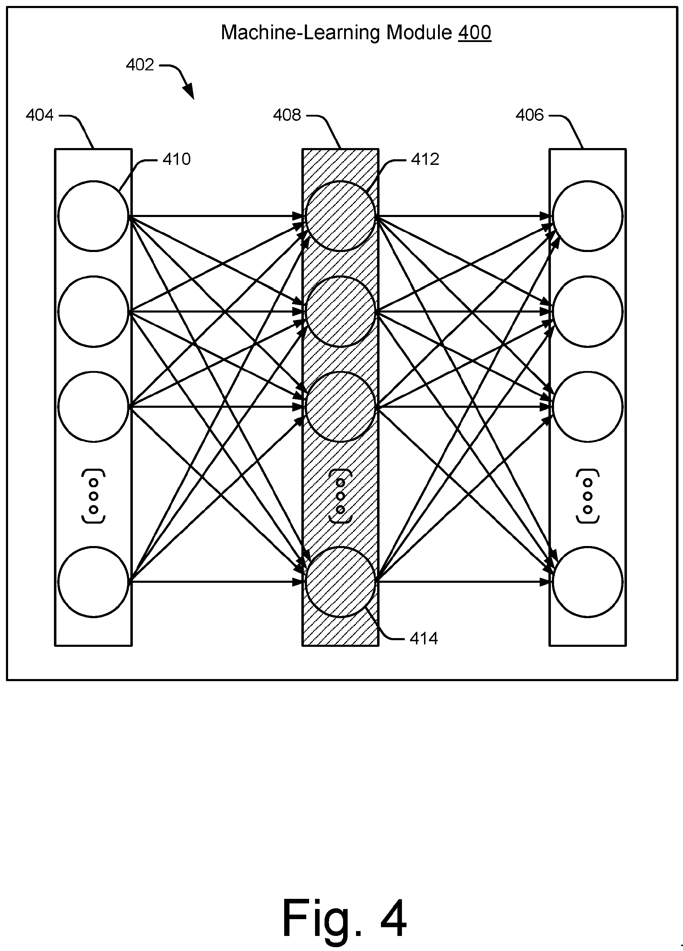

FIG. 4 illustrates an example machine-learning module 400. The machine-learning module 400 implements a set of adaptive algorithms that learn and identify patterns within data. The machine-learning module 400 can be implemented using any combination of software, hardware, and/or firmware.

In FIG. 4, the machine-learning module 400 includes a deep neural network 402 (DNN 402) with groups of connected nodes (*e.g*., neurons and/or perceptrons) that are organized into three or more layers. The nodes between layers are configurable in a variety of ways, such as a partially-connected configuration where a first subset of nodes in a first layer are connected with a second subset of nodes in a second layer, a fully-connected configuration where each node in a first layer are connected to each node in a second layer, etc. A neuron processes input data to produce a continuous output value, such as any real number between 0 and 1. In some cases, the output value indicates how close the input data is to a desired category. A perceptron performs linear classifications on the input data, such as a binary classification. The nodes, whether neurons or perceptrons, can use a variety of algorithms to generate output information based upon adaptive learning. Using the DNN, the machine-learning module 400 performs a variety of different types of analysis, including single linear regression, multiple linear regression, logistic regression, step-wise regression, binary classification, multiclass classification, multi-variate adaptive regression splines, locally estimated scatterplot smoothing, and so forth.

In some implementations, the machine-learning module 400 adaptively learns based on supervised learning. In supervised learning, the machine-learning module receives various types of input data as training data. The machine-learning module processes the training data to learn how to map the input to a desired output. As one example, the machine-learning module 400 receives digital samples of a signal as input data and learns how to map the signal samples to binary data that reflects information embedded within the signal. As another example, the machine-learning module 400 receives binary data as input data and learns how to map the binary data to digital samples of a signal with the binary data embedded within the signal. During a training procedure, the machine-learning module 400 uses labeled or known data as an input to the DNN. The DNN analyzes the input using the nodes and generates a corresponding output. The machine-learning module 400 compares the corresponding output to truth data and adapts the algorithms implemented by the nodes to improve the accuracy of the output data. Afterwards, the DNN applies the adapted algorithms to unlabeled input data to generate corresponding output data.

The machine-learning module 400 uses statistical analyses and/or adaptive learning to map an input to an output. For instance, the machine-learning module 400 uses characteristics learned from training data to correlate an unknown input to an output that is statistically likely within a threshold range or value. This allows the machine-learning module 400 to receive complex input and identify a corresponding output. Some implementations train the machine-learning module 400 on characteristics of communications transmitted over a wireless communication system (*e.g*., time/frequency interleaving, time/frequency deinterleaving, convolutional encoding, convolutional decoding, power levels, channel equalization, inter-symbol interference, quadrature amplitude modulation/demodulation, frequency-division multiplexing/de-multiplexing, transmission channel characteristics). This allows the trained machine-learning module 400 to receive samples of a signal as an input, such as samples of a downlink signal received at a user equipment, and recover information from the downlink signal, such as the binary data embedded in the downlink signal.

In FIG. 4, the DNN includes an input layer 404, an output layer 406, and one or more hidden layer(s) 408 that are positioned between the input layer and the output layer. Each layer has an arbitrary number of nodes, where the number of nodes between layers can be the same or different. In other words, input layer 404 can have a same number and/or different number of nodes as output layer 406, output layer 406 can have a same number and/or different number of nodes than hidden layer(s) 408, and so forth.

Node 410 corresponds to one of several nodes included in input layer 404, where the nodes perform independent computations from one another. As further described, a node receives input data, and processes the input data using algorithm(s) to produce output data. At times, the algorithm(s) include weights and/or coefficients that change based on adaptive learning. Thus, the weights and/or coefficients reflect information learned by the neural network. Each node can, in some cases, determine whether to pass the processed input data to the next node(s). To illustrate, after processing input data, node 410 can determine whether to pass the processed input data to node 412 and/or node 414 of hidden layer(s) 408. Alternately or additionally, node 410 passes the processed input data to nodes based upon a layer connection architecture. This process can repeat throughout multiple layers until the DNN generates an output using the nodes of output layer 406.

A neural network can also employ a variety of architectures that determine what nodes within the neural network are connected, how data is advanced and/or retained in the neural network, what weights and coefficients are used to process the input data, how the data is processed, and so forth. These various factors collectively describe a NN formation configuration. To illustrate, a recurrent neural network, such as a long short-term memory (LSTM) neural network, forms cycles between node connections in order to retain information from a previous portion of an input data sequence. The recurrent neural network then uses the retained information for a subsequent portion of the input data sequence. As another example, a feed-forward neural network passes information to forward connections without forming cycles to retain information. While described in the context of node connections, it is to be appreciated that the NN formation configuration can include a variety of parameter configurations that influence how the neural network processes input data.

A NN formation configuration of a neural network can be characterized by various architecture and/or parameter configurations. To illustrate, consider an example in which the DNN implements a convolutional neural network. Generally, a convolutional neural network corresponds to a type of DNN in which the layers process data using convolutional operations to filter the input data. Accordingly, the convolutional NN formation configuration can be characterized with, by way of example and not of limitation, pooling parameter(s), kernel parameter(s), weights, and/or layer parameter(s).

A pooling parameter corresponds to a parameter that specifies pooling layers within the convolutional neural network that reduce the dimensions of the input data. To illustrate, a pooling layer can combine the output of nodes at a first layer into a node input at a second layer. Alternately or additionally, the pooling parameter specifies how and where in the layers of data processing the neural network pools data. A pooling parameter that indicates "max pooling," for instance, configures the neural network to pool by selecting a maximum value from the grouping of data generated by the nodes of a first layer, and use the maximum value as the input into the single node of a second layer. A pooling parameter that indicates "average pooling" configures the neural network to generate an average value from the grouping of data generated by the nodes of the first layer and use the average value as the input to the single node of the second layer.

A kernel parameter indicates a filter size (*e.g.*, a width and height) to use in processing input data. Alternately or additionally, the kernel parameter specifies a type of kernel method used in filtering and processing the input data. A support vector machine, for instance, corresponds to a kernel method that uses regression analysis to identify and/or classify data. Other types of kernel methods include Gaussian processes, canonical correlation analysis, spectral clustering methods, and so forth. Accordingly, the kernel parameter can indicate a filter size and/or a type of kernel method to apply in the neural network.

Weight parameters specify weights and biases used by the algorithms within the nodes to classify input data. In implementations, the weights and biases are learned parameter configurations, such as parameter configurations generated from training data.

A layer parameter specifies layer connections and/or layer types, such as a fully-connected layer type that indicates to connect every node in a first layer (*e.g*., output layer 406) to every node in a second layer (*e.g*., hidden layer(s) 408), a partially-connected layer type that indicates which nodes in the first layer to disconnect from the second layer, an activation layer type that indicates which filters and/or layers to activate within the neural network, and so forth. Alternately or additionally, the layer parameter specifies types of node layers, such as a normalization layer type, a convolutional layer type, a pooling layer type, etc.

While described in the context of pooling parameters, kernel parameters, weight parameters, and layer parameters, it is to be appreciated that other parameter configurations can be used to form a DNN without departing from the scope of the claimed subject matter. Accordingly, a NN formation configuration can include any other type of parameter that can be applied to a DNN that influences how the DNN processes input data to generate output data.

Some implementations configure machine-learning module 400 based on a current operating environment. To illustrate, consider a machine-learning module trained to generate binary data from digital samples of a signal. A transmission environment oftentimes modifies the characteristics of a signal traveling through the environment. Transmission environments oftentimes change, which impacts how the environment modifies the signal. A first transmission environment, for instance, modifies a signal in a first manner, while a second transmission environment modifies the signal in a different manner than the first. These differences impact an accuracy of the output results generated by a machine-learning module. For instance, a neural network configured to process communications transmitted over the first transmission environment may generate errors when processing communications transmitted over the second transmission environment (*e.g.*, bit errors that exceed a threshold value).

Various implementations generate and store NN formation configurations and/or NN formation configuration elements (*e.g*., various architecture and/or parameter configurations) for different transmission environments. Base stations 120 and/or core network server 302, for example, train the machine-learning module 400 using any combination of BS neural network manager 268, training module 270, core network neural network manager 312, and/or training module 314. The training can occur offline when no active communication exchanges are occurring, or online during active communication exchanges. For example, the base stations 120 and/or core network server 302 can mathematically generate training data, access files that store the training data, obtain real-world communications data, etc. The base stations 120 and/or core network server 302 then extract and store the various learned NN formation configurations in a neural network table. Some implementations store input characteristics with each NN formation configuration, where the input characteristics describe various properties of the transmission environment corresponding to the respective NN formation configuration. In implementations, a neural network manager selects a NN formation configuration and/or NN formation configuration element(s) by matching a current transmission environment and/or current operating environment to the input characteristics.

Having described configurable machine-learning modules, consider now a discussion of deep neural networks in wireless communication systems that is in accordance with one or more implementations.

### Deep Neural Networks in Wireless Communication Systems

Wireless communication systems include a variety of complex components and/or functions, such as the various devices and modules described with reference to the example environment 100 of FIG. 1, the example device diagram 200 of FIG. 2, and the example device diagram 300 of FIG. 3. In some implementations, the devices participating in the wireless communication system chain together a series of functions to enable the exchange of information over wireless connections.

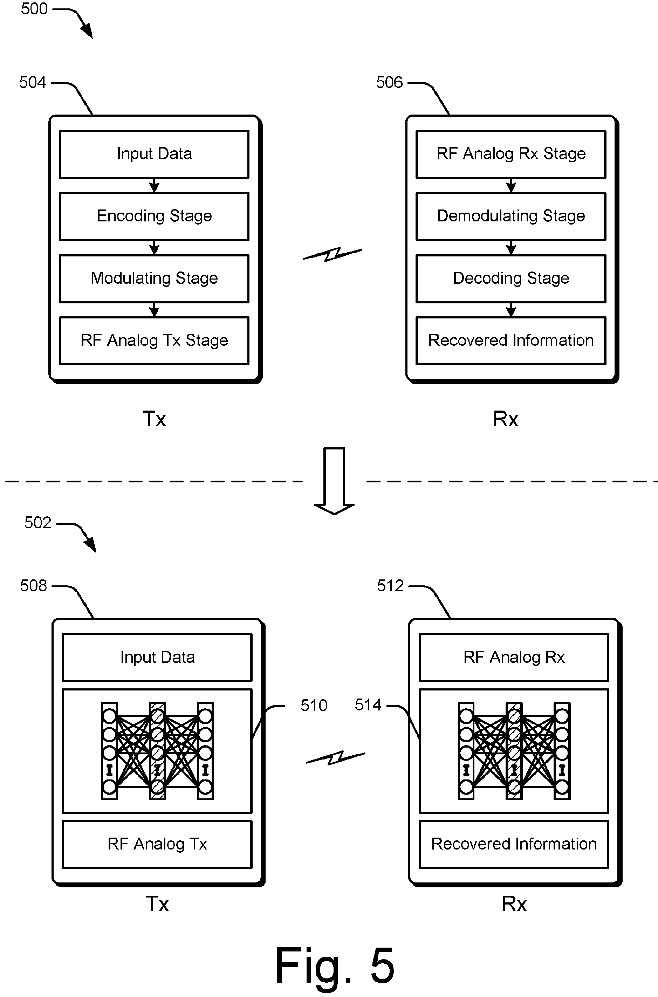

To demonstrate, consider now FIG. 5 that illustrates example block diagram 500 and example block diagram 502, each of which depicts an example processing chain utilized by devices in a wireless communication system. For simplicity, the block diagrams illustrate high-level functionality, and it is to be appreciated that the block diagrams may include additional functions that are omitted from FIG. 5 for the sake of clarity.

In the upper portion of FIG. 5, block diagram 500 includes a transmitter block 504 and a receiver block 506. Transmitter block 504 includes a transmitter processing chain that progresses from top to bottom. The transmitter processing chain begins with input data that progresses to an encoding stage, followed by a modulating stage, and then a radio frequency (RF) analog transmit (Tx) stage. The encoding stage can include any type and number of encoding stages employed by a device to transmit data over the wireless communication system.

To illustrate, an example encoding stage receives binary data as input, and processes the binary data using various encoding algorithms to append information to the binary data, such as frame information. Alternately or additionally, the encoding stage transforms the binary data, such as by applying forward error correction that adds redundancies to help information recovery at a receiver. As another example, the encoding stage converts the binary data into symbols.

An example modulating stage receives an output generated by the encoding stage as input and embeds the input onto a signal. For instance, the modulating stage generates digital samples of signal(s) embedded with the input from the encoding stage. Thus, in transmitter block 504, the encoding stage and the modulating stage represent a high-level transmitter processing chain that oftentimes includes lower-level complex functions, such as convolutional encoding, serial-to-parallel conversion, cyclic prefix insertion, channel coding, time/frequency interleaving, and so forth. The RF analog Tx stage receives the output from the modulating stage, generates an analog RF signal based on the modulating stage output, and transmits the analog RF signal to receiver block 506.

Receiver block 506 performs complementary processing relative to transceiver block 504 using a receiver processing chain. The receiver processing chain illustrated in receiver block 506 progresses from top to bottom and includes an RF analog receive (Rx) stage, followed by a demodulating stage, and a decoding stage.

The RF analog Rx stage receives signals transmitted by the transmitter block 504, and generates an input used by the demodulating stage. As one example, the RF analog Rx stage includes a down-conversion component and/or an analog-to-digital converter (ADC) to generate samples of the received signal. The demodulating stage processes input from the RF analog Rx stage to extract data embedded on the signal (*e.g.*, data embedded by the modulating stage of the transmitter block 504). The demodulating stage, for instance, recovers symbols and/or binary data.

The decoding stage receives input from the demodulating stage, such as recovered symbols and/or binary data, and processes the input to recover the transmitted information. To illustrate, the decoding stage corrects for data errors based on forward error correction applied at the transmitter block, extracts payload data from frames and/or slots, and so forth. Thus, the decoding stage generates the recovered information.

As noted, the transmitter and receiver processing chains illustrated by transmitter block 504 and receiver block 506 have been simplified for clarity and can include multiple complex modules. At times, these complex modules are specific to particular functions and/or conditions. Consider, for example, a receiver processing chain that processes Orthogonal Frequency Division Modulation (OFDM) transmissions. To recover information from OFDM transmissions, the receiver block oftentimes includes multiple processing blocks, each of which is dedicated to a particular function, such as an equalization block that corrects for distortion in a received signal, a channel estimation block that estimates transmission channel properties to identify the effects of scattering, power decay, and so forth, on a transmission, etc. At high frequencies, such as 5G mmW signals in the 6 GHz band, these blocks can be computationally and/or monetarily expensive (*e.g*., require substantial processing power, require expensive hardware). Further, implementing blocks that generate outputs with an accuracy within a desired threshold oftentimes requires more specific and less flexible components. To illustrate, an equalization block that functions for 5G mmW signals in the 6 GHz band may not perform with the same accuracy at other frequency bands, thus necessitating different equalization blocks for different bands and adding complexity to the corresponding devices.

Some implementations include DNNs in the transmission and/or receiver processing chains. In block diagram 502, transmitter block 508 includes one or more deep neural network(s) 510 (DNNs 510) in the transmitter processing chain, while receiver block 512 includes one or more deep neural network(s) 514 (DNNs 514) in the receiver processing chain.

For simplicity, the DNNs 510 in the transmitter block 508 correspond to the encoding stage and the modulating stage of transmitter block 504. It is to be appreciated, however, that the DNNs can perform any high-level and/or low-level operation found within the transmitter processing chain. For instance, a first DNN performs low-level transmitter-side forward error correction, a second DNN performs low-level transmitter-side convolutional encoding, and so forth. Alternately or additionally, the DNNs 510 perform high-level processing, such as end-to-end processing that corresponds to the encoding stage and the modulating stage of transmitter block 508.

In a similar manner, the DNNs 514 in receiver block 512 perform receiver processing chain functionality (*e.g*., demodulating stage, decoding stage). The DNNs 514 can perform any high-level and/or low-level operation found within the receiver processing chain, such as low-level receiver-side bit error correction, low-level receiver-side symbol recovery, high-level end-to-end demodulating and decoding, etc. Accordingly, DNNs in wireless communication systems can be configured to replace high-level operations and/or low-level operations in transmitter and receiver processing chains. At times, the DNNs performing the high-level operations and/or low-level operations can be configured and/or reconfigured based on a current operating environment as further described. This provides more flexibility and adaptability to the processing chains relative to the more specific and less flexible components.

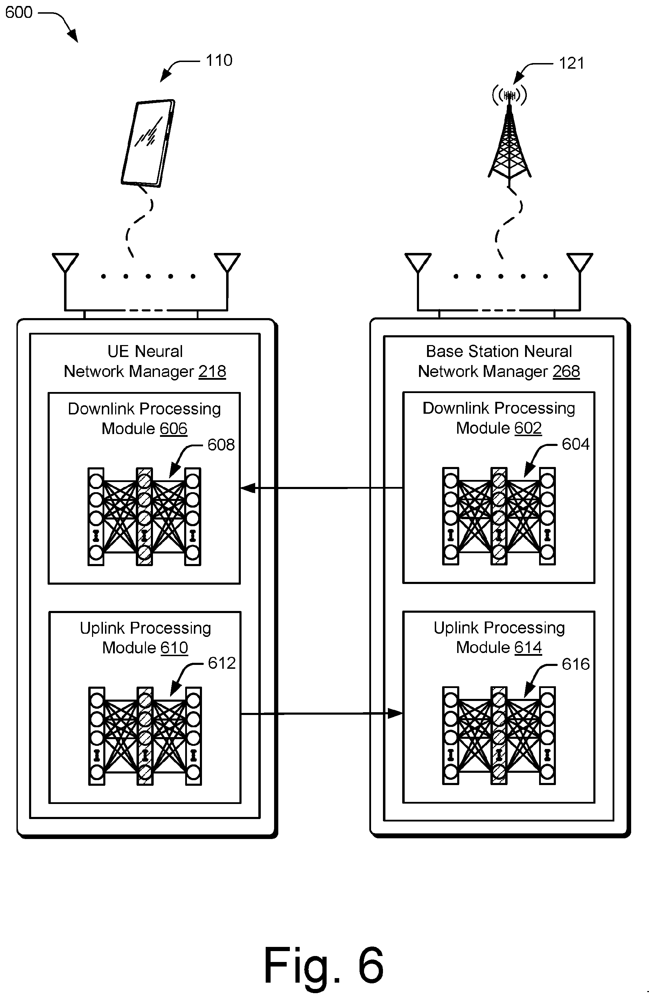

Some implementations process communication exchanges over the wireless communication system using multiple DNNs, where each DNN has a respective purpose (*e.g*., uplink processing, downlink processing, uplink encoding processing, downlink decoding processing, etc.). To demonstrate, consider now FIG. 6 that illustrates an example operating environment 600 that includes UE 110 and base station 121. While FIG. 6 illustrates base station 121, an alternate base station can be utilized, as indicated by FIG. 2. In implementations, the UE 110 and base station 121 exchange communications with one another over a wireless communication system by processing the communications using multiple DNNs.

In FIG. 6, the base station neural network manager 268 of the base station 121 includes a downlink processing module 602 for processing downlink communications, such as for generating downlink communications transmitted to the UE 110. To illustrate, the base station neural network manager 268 forms deep neural network(s) 604 (DNNs 604) in the downlink processing module 602 using NN formation configurations as further described. In some examples, the DNNs 604 correspond to the DNNs 510 of FIG. 5. In other words, the DNNs 604 perform some or all of the transmitter processing functionality used to generate downlink communications.

Similarly, the UE neural network manager 218 of the UE 110 includes a downlink processing module 606, where the downlink processing module 606 includes deep neural network(s) 608 (DNNs 608) for processing (received) downlink communications. In various implementations, the UE neural network manager 218 forms the DNNs 608 using NN formation configurations. In FIG. 6, the DNNs 608 correspond to the DNNs 514 of FIG. 5, where the deep neural network(s) 606 of UE 110 perform some or all receiver processing functionality for (received) downlink communications. Accordingly, the DNNs 604 and the DNNs 608 perform complementary processing to one another (*e.g*., encoding/decoding, modulating/demodulating).

The DNNs 604 and/or DNNs 608 can include multiple deep neural networks, where each DNN is dedicated to a respective channel, a respective purpose, and so forth. The base station 121, as one example, processes downlink control channel information using a first DNN of the DNNs 604, processes downlink data channel information using a second DNN of the DNNs 604, and so forth. As another example, the UE 110 processes downlink control channel information using a first DNN of the DNNs 608, processes downlink data channel information using a second DNN of the DNNs 608, etc.

The base station 121 and/or the UE 110 also process uplink communications using DNNs. In environment 600, the UE neural network manager 218 includes an uplink processing module 610, where the uplink processing module 610 includes deep neural network(s) 612 (DNNs 612) for generating and/or processing uplink communications (*e.g*., encoding, modulating). In other words, uplink processing module 610 processes pre-transmission communications as part of processing the uplink communications. The UE neural network manager 218, for example, forms the DNNs 612 using NN formation configurations. At times, the DNNs 612 correspond to the DNNs 510 of FIG. 5. Thus, the DNNs 612 perform some or all of the transmitter processing functionality used to generate uplink communications transmitted from the UE 110 to the base station 121.

Similarly, uplink processing module 614 of the base station 121 includes deep neural network(s) 616 (DNNs 616) for processing (received) uplink communications, where base station neural network manager 268 forms DNNs 616 using NN formation configurations as further described. In examples, the DNNs 616 of the base station 121 correspond to the DNNs 514 of FIG. 5, and perform some or all receiver processing functionality for (received) uplink communications, such as uplink communications received from UE 110. At times, the DNNs 612 and the DNNs 616 perform complementary functionality of one another. Alternately or additionally, the uplink processing module 610 and/or the uplink processing module 614 include multiple DNNs, where each DNN has a dedicated purpose (*e.g*., processes a respective channel, performs respective uplink functionality, and so forth). FIG. 6 illustrates the DNNs 604, 608, 612, and 616 as residing within the respective neural network managers to signify that the neural network managers form the DNNs, and it is to be appreciated that the DNNs can be formed external to the neural network managers (*e.g*., UE neural network manager 218 and base station neural network manager 268) within different components, processing chains, modules, etc.

Having described deep neural networks in wireless communication systems, consider now a discussion of signaling and control transactions over a wireless communication system that can be used to configure deep neural networks for downlink and uplink communications that is in accordance with one or more implementations.

### Signaling and Control Transactions to Configure Deep Neural Networks

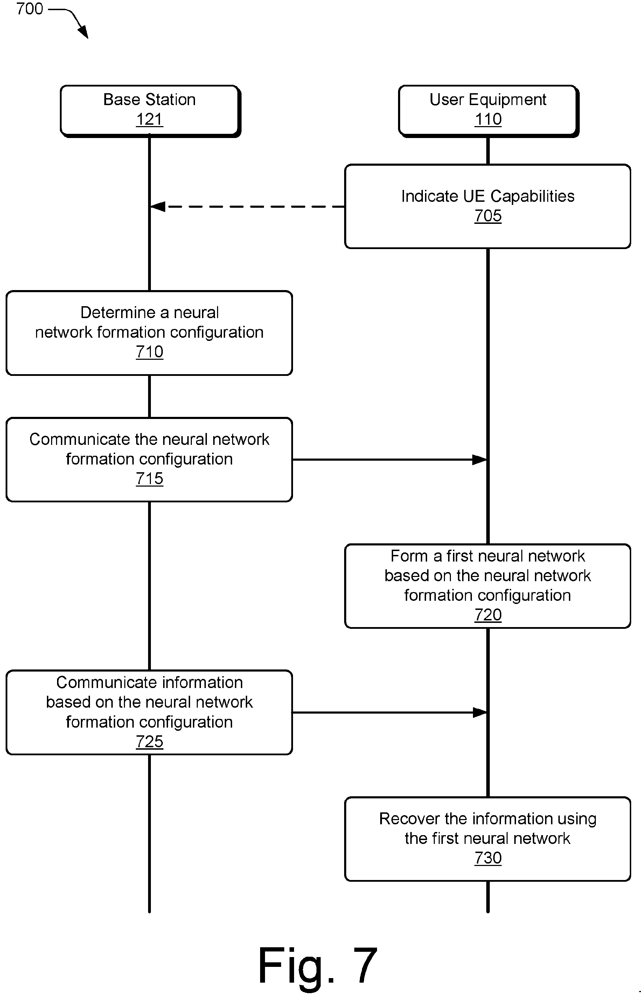

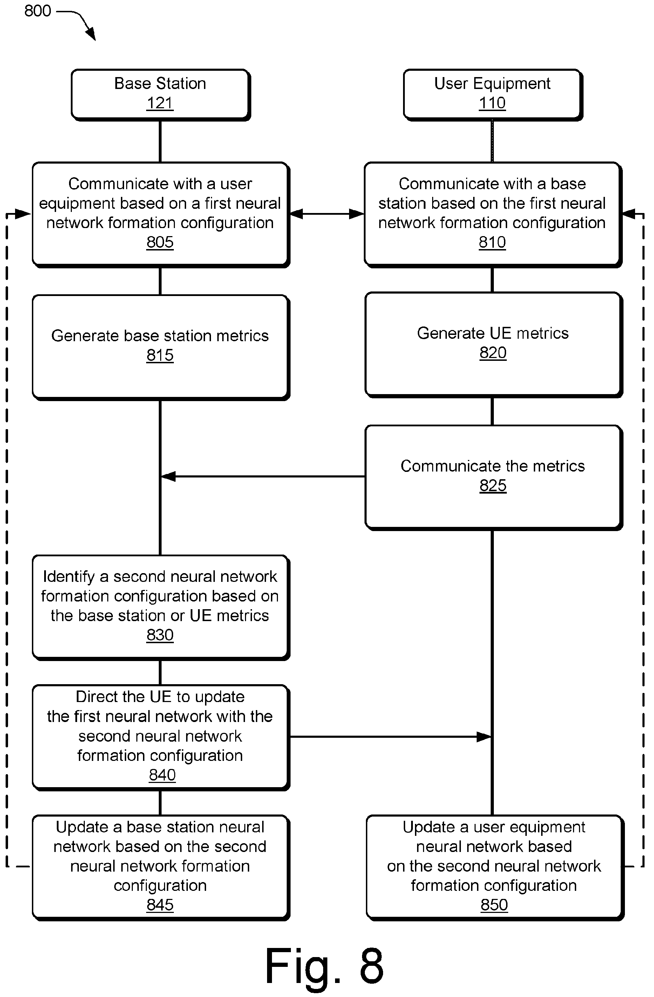

FIGs. 7, 8, and 9 illustrate example signaling and control transaction diagrams between a base station, a user equipment, and/or a core network server in accordance with one or more aspects of neural network formation configuration feedback in wireless communications regarding deep neural networks. The signaling and control transactions may be performed by the base station 120 and the UE 110 of FIG. 1, or the core network server 302 of FIG. 3, using elements of FIGs. 1-6. For example, the core network server 302 performs, in some implementations, various signaling and control actions performed by the base station 120 as illustrated by FIGs. 7 and 8.

A first example of signaling and control transactions for neural network formation configuration feedback in wireless communications is illustrated by the signaling and control transaction diagram 700 of FIG. 7. As illustrated, at 705, the UE 110 optionally indicates UE capabilities (*e.g*., capabilities supported by the UE). In some implementations, the UE capabilities include ML-related capabilities, such as a maximum kernel size capability, a memory limitation, a computation capability, supported ML architectures, supported number of layers, available processing power, memory limitation, available power budget, and fixed-point processing vs. floating point processing.

At 710 the base station 121 determines a neural network formation configuration. In determining the neural network formation configuration, the base station analyzes any combination of information, such as a channel type being processed by the deep neural network (*e.g*., downlink, uplink, data, control, etc.), transmission medium properties (*e.g*., power measurements, signal-to-interference-plus-noise ratio (SINR) measurements, channel quality indicator (CQI) measurements), encoding schemes, UE capabilities, BS capabilities, and so forth. In some implementations, the base station 121 determines the neural network formation configuration based upon the UE capabilities indicated at 705. Alternately or additionally, the base station 121 obtains the UE capabilities from a networked storage device, such as a server.

The base station 121, for instance, receives message(s) from the UE 110 (not shown) that indicates one or more capabilities of the UE, such as, by way of example and not of limitation, connectivity information, dual-connectivity information, carrier aggregation capabilities, downlink physical parameter values, uplink physical parameter values, supported downlink/uplink categories, inter-frequency handover, and ML-capabilities (*e.g*., a maximum kernel size capability, a memory limitation, a computation capability, supported ML architectures, supported number of layers, available processing power, memory limitation, available power budget, fixed-point processing vs. floating point processing). The base station 121 identifies, from the message(s), the UE capabilities that impact how the UE processes communications, and/or how the base station processes communications from the UE and selects a neural network formation configuration with improved output accuracy relative to other neural network formation configurations.

In some implementations, the base station 121 selects the neural network formation configuration from multiple neural network formation configurations. Alternately or additionally, the base station 121 selects the neural network formation configuration by selecting a subset of neural network architecture formation elements in a neural network table. At times, the base station 121 analyzes multiple neural network formation configurations and/or multiple neural network formation configuration elements included in a neural network table, and determines the neural network formation configuration by selects and/or creates a neural network formation configuration that aligns with current channel conditions, such as by matching the channel type, transmission medium properties, etc., to input characteristics as further described. Alternately or additionally, the base station 121 selects the neural network formation configuration based on network parameters, such as scheduling parameters (*e.g*., scheduling Multiple User, Multiple Input, Multiple Output (MU-MIMO) for downlink communications, scheduling MU-MIMO for uplink communications).

At 715, the base station 121 communicates the neural network formation configuration to the UE 110. In some implementations, the base station transmits a message that specifies the neural network formation configuration, such as by transmitting a message that includes an index value that maps to an entry in a neural network table, such as neural network table 216 of FIG. 2. Alternately or additionally, the base station transmits a message that includes neural network parameter configurations (*e.g*., weight values, coefficient values, number of filters). In some cases, the base station 121 specifies a purpose and/or processing assignment in the message, where the processing assignment indicates what channels, and/or where in a processing chain, the configured neural network applies to, such as a downlink control channel processing, an uplink data channel processing, downlink decoding processing, uplink encoding processing, etc. Accordingly, the base station can communicate a processing assignment with a neural network formation configuration.

In some implementations, the base station 121 communicates multiple neural network formation configurations to the UE 110. For example, the base station transmits a first message that directs the UE to use a first neural network formation configuration for uplink encoding, and a second message that directs the UE to use a second neural network formation configuration for downlink decoding. In some scenarios, the base station 121 communicates multiple neural network formation configurations, and the respective processing assignments, in a single message. As yet another example, the base station communicates the multiple neural network formation configurations using different radio access technologies (RATs). The base station can, for instance, transmit a first neural network formation configuration for downlink communication processing to the UE 110 using a first RAT and/or carrier, and transmit a second neural network formation configuration for uplink communication processing to the UE 110 using a second RAT and/or carrier.

At 720, the UE 110 forms a first neural network based on the neural network formation configuration. For instance, the UE 110 accesses a neural network table using the index value(s) communicated by the base station to obtain the neural network formation configuration and/or the neural network formation configuration elements. Alternately or additionally, the UE 110 extracts neural network architecture and/or parameter configurations from the message. The UE 110 then forms the neural network using the neural network formation configuration, the extracted architecture and/or parameter configurations, etc. In some implementations, the UE processes all communications using the first neural network, while in other implementations, the UE processes select communications using the first neural network based on a processing assignment.

At 725, the base station 121 communicates information based on the neural network formation configuration. For instance, with reference to FIG. 6, the base station 121 processes downlink communications using a second neural network configured with complementary functionality to the first neural network. In other words, the second neural network uses a second neural network formation configuration that is complementary to the neural network formation configuration. In turn, at 730, the UE 110 recovers the information using the first neural network.

A second example of signaling and control transactions for neural network formation configuration feedback in wireless communications regarding deep neural networks is illustrated by the signaling and control transaction diagram 800 of FIG. 8. In some implementations, the signaling and control transaction diagram 800 represents a continuation of the signaling and control transaction diagram 700 of FIG. 7.

As illustrated, at 805, the base station 121 communicates with the UE 110 based on a first neural network formation configuration. Similarly, at 810, the UE 110 communicates with the base station 121 based on the first neural network formation configuration. The base station 121, for instance, communicates with the UE 110 by processing one or more downlink communications using the DNNs 604 of FIG. 6, while the UE 110 communicates with the base station 121 by processing downlink communications received from the base station 121 using DNNs 608 of FIG. 6.

In implementations, the DNNs 604 and the DNNs 608 are formed based on the first neural network formation configuration as described. To illustrate, the DNNs 604 and the DNNs 608 perform complementary functionality of one another, where the first neural network formation configuration specifies the complementary functionality for each deep neural network (*e.g*., the base station forms a first neural network using the first neural network formation configuration, the UE forms a second neural network that is complementary to the first neural network by using a complementary neural network formation configuration to the first neural network formation configuration). The complementary functionality performed by the deep neural networks allows each side exchanging communications to stay synchronized (*e.g*., accurately recover information). Thus, the first neural network formation configuration specifies any combination of a base station-side neural network formation configuration, a complementary user equipment-side neural network formation configuration, and/or a general neural network formation configuration used by each device participating in the communication exchange.

As another example, the UE 110 processes one or more uplink communications to the base station 121 using the DNNs 612 of FIG. 6, while the base station 121 processes the uplink communications received from the UE 110 using the deep neural network(s) 614 of FIG. 6. Similar to the downlink communications, some implementations form the DNNs 612 and the deep neural network(s) 614 based on the first neural network formation configuration (*e.g*., the UE forms a first neural network using the first neural network formation configuration, the base station forms a second neural network with a complementary neural network formation configuration to the first neural network formation configuration). Accordingly, the base station 121 and the UE 110 communicate with one another based on the first neural network formation configuration by forming deep neural networks based on the first neural network formation configuration, and processing communications with the deep neural networks.

At 815, the base station generates base station metrics, such as metrics based upon uplink communications received from the UE 110. Similarly, at 820, the UE 110 generates UE metrics, such as metrics based upon downlink communications received from the base station 121. Any type of metric can be generated by the base station 121 and/or UE 110, such as power measurements (*e.g*., RSS), error metrics, timing metrics, QoS, latency, and so forth.

At 825, the UE 110 communicates the metrics to the base station 121. In implementations, the UE 110 processes the metric communications using a deep neural network based on the first neural network formation configuration. Alternately or additionally, the UE 110 processes the metric communications using a neural network formed using a second neural network formation configuration. Thus, as further described, UE 110 maintains, in some implementations, multiple deep neural networks, where each deep neural network has a designated purpose and/or processing assignment (*e.g*., a first neural network for downlink control channel processing, a second neural network for downlink data channel processing, a third neural network for uplink control channel processing, a fourth neural network for uplink data channel processing). At times, the base station 121 communicates the multiple neural network formation configurations, used to form the multiple deep neural networks, to the UE 110.

At 830, the base station 121 identifies a second neural network formation configuration based on the metrics at 830. In some implementations, the base station 121 identifies the second neural network formation configuration based on the UE metrics, the base station metrics, or any combination thereof. This includes identifying any combination of architectural changes and/or parameter changes to the neural network formation configuration as further described, such as a small change to the neural network formation configuration that involves updating coefficient parameters to address changes in returned metrics (*e.g*., SINR changes, Doppler feedback changes, power level changes, BLER changes). Alternately or additionally, identifying the second neural network formation configuration includes a large change, such as reconfiguring node and/or layer connections, based on metrics such as a change in a power state (*e.g.*, a transition from a radio resource connected state to idle state).

In some implementations, the base station 121 identifies a partial and/or delta neural network formation configuration as the second neural network formation configuration, where the partial and/or delta neural network formation configuration indicates changes to a full neural network formation configuration. A full neural network formation configuration, for example, includes an architectural configuration for a neural network and parameter configurations, while a partial and/or delta neural network formation configuration specifies changes and/or updates to the parameter configurations based on using the same architectural configuration indicated in the full neural network formation configuration.

In some implementations, the base station identifies the second neural network formation configuration by identifying a neural network formation configuration in a neural network table that improves the UE's ability, and/or the base station's ability, to recover data from the communications (e.g., improve an accuracy of the recovered information). To illustrate, the base station 121 identifies, by way of the base station neural network manager 268 of FIG. 2, a neural network formation configuration that compensates for problems identified by the UE metrics and/or the base station metrics. As another example, the base station 121 identifies a neural network formation configuration with one or more input characteristics that align with changing operating conditions identified by the UE metrics and/or the base station metrics. Alternately or additionally, the base station 121 identifies a neural network formation configuration that produces similar results but with less processing, such as for a scenario in which a UE moves to a lower power state.

At 840, the base station 121 directs the UE 110 to update the first neural network with the second neural network formation configuration. The base station, for instance, generates an update message that includes an index value to the second neural network formation configuration in the neural network table 216 of FIG. 2. In some implementations, the base station 121 indicates, in the message, a time instance that directs the UE 110 on when to apply the second neural network formation configuration. In other words, the time instance directs the UE 110 to switch from processing communications using the first neural network formation configuration to processing communications using the second neural network formation configuration at the time specified in the time instance. In implementations, the base station transmits updates to downlink neural networks using a first carrier or RAT, and transmits updates to uplink neural networks using a second carrier or RAT.

At 845, the base station 121 updates a base station neural network based on the second neural network formation configuration, such as the deep neural network formed based on the first neural network formation configuration and used to communicate with the UE 110 at 805 (*e.g.*, a deep neural network for processing downlink communications, a deep neural network for processing uplink communications). Similarly, at 850, the UE 110 updates a user equipment neural network based on the second neural network formation configuration, such as a deep neural network that performs complementary functionality to the base station neural network updated at 845. The UE, as one example, extracts the index value and/or time value from the update message transmitted by the base station at 840. The UE 110 obtains the second neural network formation configuration and modifies the user equipment neural network at the time specified in the update message. Thus, the UE 110 uses the first neural network formation configuration for processing communications until the specified time in the update message, at which point the UE 110 switches to processing communications using the second neural network formation configuration.

In implementations, the base station 121 and/or the UE 110 iteratively perform the signaling and control transactions described in the signaling and control transaction diagram 800, signified in FIG. 8 with dashed lines. These iterations allow the base station 121 and/or the UE 110 to dynamically modify communication processing chains based upon changing operating conditions as further described.

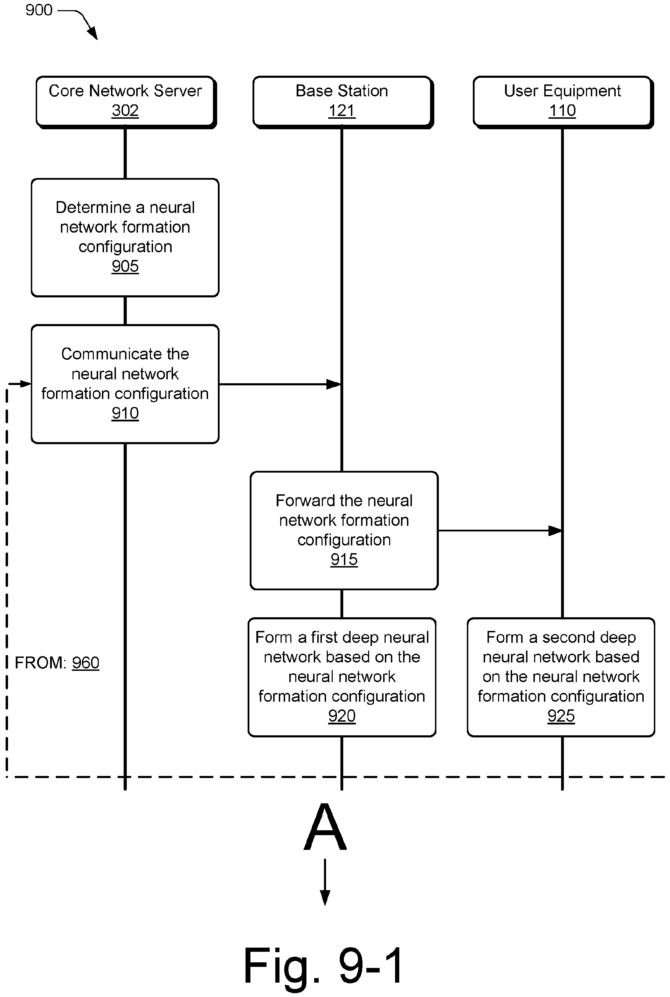

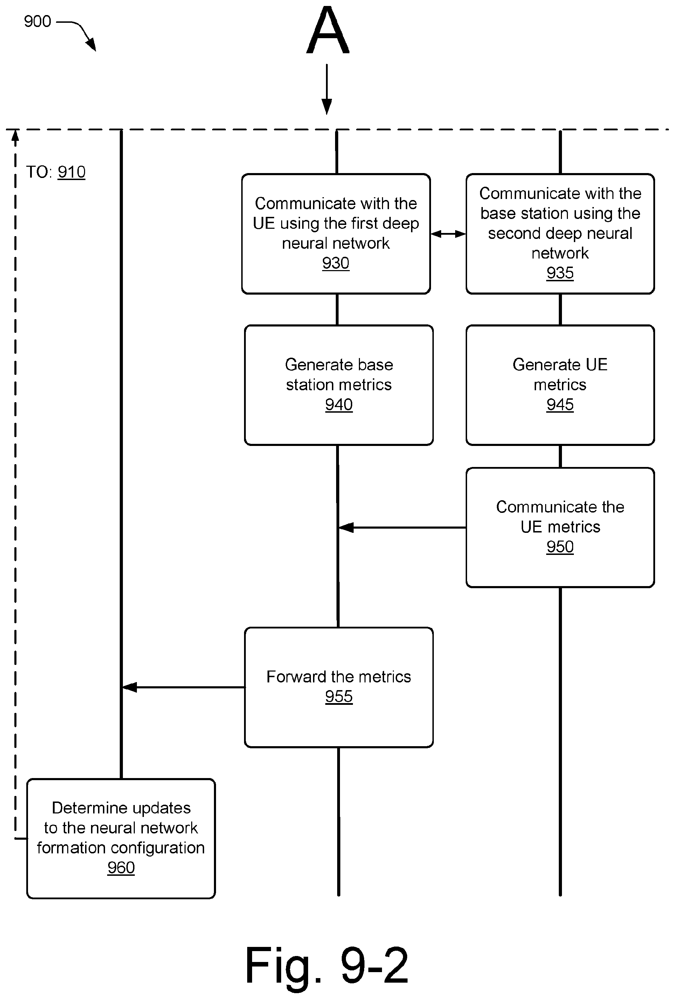

A third example of signaling and control transactions for neural network formation configuration feedback in wireless communications is illustrated by the signaling and control transaction diagram 900 of FIGs. 9-1 and 9-2. As illustrated in FIG. 9-1, at 905, the core network server 302 determines a neural network formation configuration based on a variety of metrics and/or parameters, such as metrics from the UE 110, metrics from the base station 121, UE capabilities, etc. For example, the core network server receives any combination of metrics and/or parameters from the base station 121 and/or the UE 110, such as power information, SINR information, CQI, CSI, Doppler feedback, QoS, latency, UE capabilities, a base station type (*e.g*., eNB, gNB or ng-eNB), protocol versions, error metrics, UE capabilities, BS capabilities, power mode, and so forth. The core network server 302 then determines the neural network formation configuration based on the metrics, parameters, etc.

In some implementations, the core network server 302 determines multiple different neural network formation configurations, each of which is specific to a respective base station and/or respective UE. Alternately or additionally, the core network server 302 determines a neural network formation configuration used by multiple base stations and/or UEs. At times, the core network server 302 determines a default neural network formation configuration used by base stations and/or UEs to initially connect with one another. As further described, a default neural network formation configuration corresponds to a general neural network formation configuration that configures the deep neural network to process a variety of input data and/or channel conditions with an accuracy within a threshold range or value. A dedicated neural network formation configuration, however, corresponds to a deep neural network that is tuned to a particular type of input data and/or particular channel conditions. In determining the neural network formation configuration, some implementations of the core network server determine complementary neural network formation configurations (*e*.*g*., a base station-side neural network formation configuration that is complementary to a user equipment-side neural network formation configuration).

At 910, the core network server 302 communicates the neural network formation configuration to the base station 121. For instance, the core network server 302 communicates an index value to the base station 121 over the core network interface 320 of FIG. 3, where the index value maps to an entry in the neural network table 272 of FIG. 2. Alternately or additionally, the core network server 302 communicates various parameter configurations, such as coefficients, weights, layer connection values, etc.

At 915, the base station 121 forwards the neural network formation configuration to the UE 110. The base station, for instance, wirelessly transmits the index value to the UE, wirelessly transmits the parameter configurations to the UE, and so forth. In communicating the neural network formation configuration, the core network server 302 and/or the base station 121 sometimes indicates a processing assignment for the neural network formation configuration (*e*.*g*., downlink data channel processing, uplink control channel processing, decoding processing, uplink encoding processing, uplink modulating processing, downlink demodulating processing).

In some implementations, the base station 121 adds modifications the neural network formation configuration before forwarding to the UE 110. For example, the base station 121 can have access to more updated information than the core network server, such as through UE capabilities received from the UE 110. The base station 121, at times, adapts the neural network formation configuration based upon the updated information (*e*.*g*., UE capabilities particular to the UE 110), such as by removing layers and/or nodes to reduce a corresponding complexity of the deep neural network at the UE 110 based on available processing capabilities, battery power, available radios, etc. at the UE. As another example, the base station 121 adds convolutional layers to the neural network formation configuration based on the updated information. Afterwards, the base station 121 forwards the modified neural network formation configuration to the UE 110, in lieu of the neural network formation configuration received from the core network server 302.

At 920, the base station 121 forms a first deep neural network using the neural network formation configuration, such as by identifying a base station-side neural network formation configuration and forming the first deep neural network with the base station-side neural network formation configuration. To illustrate, the base station 121 obtains the neural network formation configuration by using an index value to access neural network table 272 of FIG. 2. Similarly, at 925, the UE 110 forms a second deep neural network using the neural network formation configuration, such as by identifying a complementary and/or user equipment-side neural network formation configuration and forming the second neural network with the complementary and/or user equipment-side neural network formation configuration. In some implementations, the UE 110 obtains the complementary and/or user equipment-side neural network formation configuration by using an index value to access the neural network table 216 of FIG. 2. Accordingly, the first deep neural network and the second deep neural network are synchronized neural networks based on the neural network formation configuration determined and communicated by the core network server at 905 and at 910.

In FIG. 9-2, at 930, the base station 121 communicates with the UE 110 using the first deep neural network, such as by generating and/or processing downlink communications to the UE 110, by receiving and/or processing uplink communications from the UE 110, etc. Similarly, at 935, the UE 110 communicates with the base station 121 using the second deep neural network at 935. In other words, the UE 110 communicates with the base station 121 using a complementary deep neural network (*e*.*g*., the second deep neural network) that is based on the neural network formation configuration as further described.

At 940, the base station generates base station metrics, where the base station 121 generates the metrics based on the communicating at 930 and/or at 935. Thus, the base station metrics can be based on uplink communications received from the UE 110. For example, the base station 121 generates uplink received power, uplink SINR, uplink packet errors, uplink throughput, timing measurements, and so forth. In some implementations, the base station includes base station capabilities (BS capabilities), such as processing power (*e*.*g*., macro base station, small-cell base station), power state, etc., in the base station metrics.

Similarly, at 945, the UE 110 generates UE metrics (e*.g*., power information, SINR information, CQI, CSI, Doppler feedback, QoS, latency) based on downlink communications from the base station 121 and communicates the UE metrics to the base station 121 at 950.

At 955, the base station 121 forwards the metrics to the core network server 302, such as through core network interface 320. This includes any combination of the base station metrics and the UE metrics generated at 940 and/or at 945. Afterwards, the core network server 302 determines updates to the neural network formation configuration at 960. This can include any combination of architectural structure changes (*e*.*g*., reconfiguring node connections, reconfiguring active layers/inactive layers), changing applied processing parameters (*e*.*g*., coefficients, kernels), and so forth. Thus, the core network server 302, at times, identifies small changes and/or large changes, such as those described with reference to the base station 121 at 830 of FIG. 8. By receiving metrics generated from UE 110, by way of base station 121, the core network server 302 receives feedback about the communication channel between the base station and the UE and/or an indication of how well the neural network processes communications transmitted over the communication channel. The core network server 302 analyzes the feedback to identify adjustments to the neural network formation configuration that, when applied to the neural network, improve the accuracy of how the deep neural network processes communications (*e.g*., more accurate recovery of data, less erroneous data) and/or how efficiently the neural network processes the communications (*e*.*g*. selecting configurations that reduce processing time of the deep neural network).

In implementations, the core network server 302, base station 121 and/or the UE 110 iteratively perform the signaling and control transactions described in the signaling and control transaction diagram 900, signified in FIGs. 9-1 and 9-2 with a dashed line that returns from 960 to 910. These iterations allow the core network server 302, the base station 121 and/or the UE 110 to dynamically modify communication processing chains based upon changing operating conditions as further described.

In some implementations, core network server 302 receives feedback from multiple UEs and/or base stations in the wireless communication system. This provides the core network server with a larger view of how well the wireless communication system performs, what devices communicate over the wireless communication system, how well the devices communicate, and so forth. In various implementations, the core network server 302 determines updates to the neural network formation configuration based on optimizing the communications of the multiple devices and/or an overall system performance, rather than optimizing the communications of a particular device.

Having described signaling and control transactions that can be used to configure neural networks for processing communications, consider now some example methods that are in accordance with one or more implementations.

### Example Methods

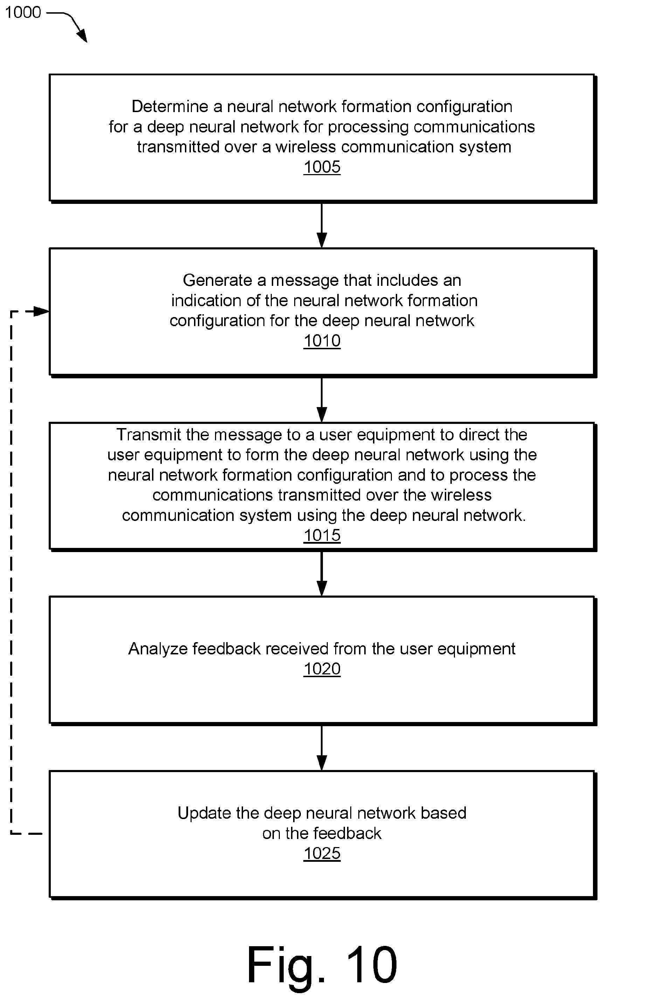

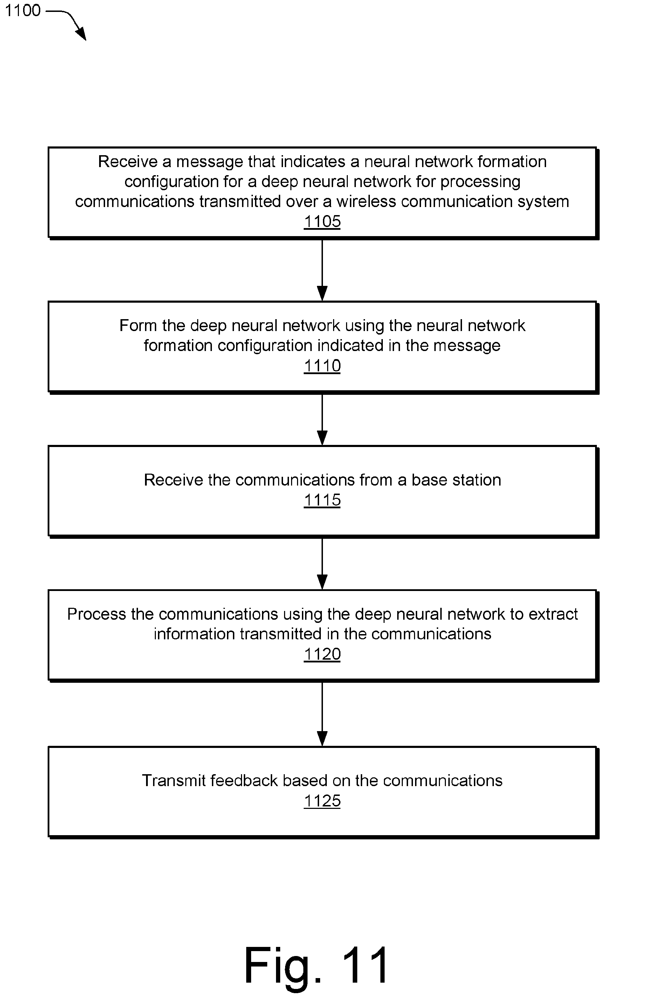

Example methods 1000 and 1100 are described with reference to FIG. 10 and FIG. 11 in accordance with one or more aspects of neural network formation configuration feedback in wireless communications. The order in which the method blocks are described are not intended to be construed as a limitation, and any number of the described method blocks can be skipped or combined in any order to implement a method or an alternate method. Generally, any of the components, modules, methods, and operations described herein can be implemented using software, firmware, hardware (*e*.*g*., fixed logic circuitry), manual processing, or any combination thereof. Some operations of the example methods may be described in the general context of executable instructions stored on computer-readable storage memory that is local and/or remote to a computer processing system, and implementations can include software applications, programs, functions, and the like. Alternatively, or additionally, any of the functionality described herein can be performed, at least in part, by one or more hardware logic components, such as, and without limitation, Field-programmable Gate Arrays (FPGAs), Application-specific Integrated Circuits (ASICs), Application-specific Standard Products (ASSPs), System-on-a-chip systems (SoCs), Complex Programmable Logic Devices (CPLDs), and the like.

FIG. 10 illustrates an example method 1000 for configuring a neural network for processing communications exchanged over a wireless communication system. In some implementations, operations of method 1000 are performed by a network entity, such as any one of the base stations 120 or the core network server 302.

At 1005, a network entity determines a neural network formation configuration for a deep neural network for processing communications transmitted over the wireless communication system. The network entity (*e.g*., base station 121, core network server 302) for example, determines the neural network formation configuration based, at least in part, on metrics, feedback, and/or other types of information from the user equipment (*e.g*., UE 110). To illustrate, the base station 121 receives a message from the UE 110 that indicates one or more capabilities of the UE 110. The base station 121 then determines the neural network formation configuration based, at least in part, on the capabilities received from the UE 110. Alternately or additionally, base station 121 forwards the UE capabilities to the core network server 302, and the core network server 302 determines the neural network formation configuration based on the capabilities of the UE 110. As another example, the base station 121 determines the neural network formation configuration based on scheduling MU-MIMO downlink and/or uplink transmissions in the wireless communication system. In determining the neural network formation configuration, the network selects any combination of neural network formation configuration elements for user equipment-side deep neural networks, base station-side deep neural networks, and/or a deep neural network that corresponds to both the user equipment-side deep neural networks and the base station-side deep neural networks.

In determining the neural network formation configuration, the network entity (*e.g*., base station 121, the core network server 302) sometimes selects a default neural network formation configuration. Alternately or additionally, the network entity analyzes multiple neural network formation configurations, and selects a neural network formation configuration, from the multiple, that aligns with current channel conditions, capabilities of a particular UE, etc.

At 1010, the network entity generates a message that includes an indication of the neural network formation configuration for the deep neural network. The network entity (*e.g*., base station 121, core network server 302), for instance, generates a message that includes index value(s) that map(s) to one or more entries of a neural network table (*e.g*., neural network table 216, neural network table 272, neural network table 316). In some implementations, the network entity includes an indication of a processing assignment for the deep neural network, where the processing assignment specifies a processing chain function for the deep neural network formed with the neural network formation configuration. Alternately or additionally, the network entity specifies a time instance in the message that indicates a time and/or location to start processing communications with the deep neural network.

At 1015, the network entity transmits the message to a user equipment to direct the user equipment to form the deep neural network using the neural network formation configuration and to process the communications transmitted over the wireless communication system using the deep neural network. The network entity (*e.g.,* core network server 302), for example, transmits the message to the user equipment (e.g., UE 110) by communicating the message to the base station 121, which transmits the message to the user equipment. Alternately or additionally, the network entity (*e.g.,* base station 121) transmits the message to the user equipment (*e*.*g*., UE 110). In implementations the deep neural network corresponds to a user equipment-side deep neural network.

In some implementations, the network entity (*e.g.,* base station 121) transmits the message using a particular RAT and/or carrier based upon a processing assignment of the deep neural network. For instance, the base station 121 transmits a first neural network formation configuration with a first processing assignment (*e*.*g*., downlink data channel processing) using a first RAT and/or carrier, and a second neural network formation configuration with a second processing assignment (*e*.*g*., downlink control channel processing) using a second RAT and/or carrier.

In some implementations, at 1020, the network entity analyzes feedback received from the user equipment. The network entity *(e.g.,* base station 121), as one example, receives metrics from the user equipment (*e*.*g*., UE 110), and analyzes the metrics to determine whether to update and/or reconfigure the neural network with a different neural network formation configuration. Alternately or additionally, a base station forwards the feedback to the network entity (*e.g.,* core network server 302), and the network entity analyzes the feedback to determine whether to update and/or reconfigure the neural network with a different neural network formation configuration.

At 1025, the network entity updates the deep neural network based on the feedback. For example, the network entity (*e.g.,* base station 121, core network server 302) analyzes multiple neural network formation configurations included in a neural network table (*e*.*g*., neural network table 216, neural network table 272, neural network table 316), and selects a second neural network formation configuration that aligns with new channel conditions indicated by the feedback. The network entity generates a second message that includes an indication of the second neural network formation configuration, and transmits the second message to the user equipment. This includes configuring and transmitting the second message as described at 1010 and/or at 1015. In implementations, the network entity iteratively performs various operations of the method 1000, indicated here with a dashed line that returns from 1025 to 1010.

FIG. 11 illustrates an example method 1100 for forming a neural network based on a neural network formation configuration. In some aspects, operations of method 1100 are implemented by a UE, such as UE 110.

At 1105, a user equipment receives a message that indicates a neural network formation configuration for a deep neural network for processing communications transmitted over a wireless communication system. The user equipment (*e*.*g*., UE 110), for instance, receives a message from a base station (*e.g.,* the base station 121) that indicates the neural network formation configuration and/or a processing assignment for the deep neural network formed using the neural network formation configuration. In some implementations, the user equipment receives multiple messages, each of which pertains to a different neural network formation configuration (*e*.*g*., a first message that indicates a first neural network formation configuration for a first deep neural network for processing downlink communications, a second message that indicates a second neural network formation configuration for a second deep neural network for processing uplink communications). In implementations, the user equipment receives the message as a broadcast message from the base station, or as a UE-dedicated message.

At 1110, the user equipment forms the deep neural network using the neural network formation configuration indicated in the message. To illustrate, the user equipment (*e*.*g*., UE 110) extracts parameter configurations from the message, such as coefficients, weights, layer connections, etc., and forms the deep neural network using the extracted parameter configurations. As another example, the user equipment (*e.g*., UE 110) extracts index value(s) from the message and obtains the parameter configurations from a neural network table as further described. Alternately or additionally, the user equipment extracts a time instance from the message, where the time instance indicates a time and/or location to start processing communications using the deep neural network formed with the neural network formation configuration.

At 1115, the user equipment receives communications from a base station. For example, the user equipment (*e*.*g*., UE 110) receives downlink data channel communications from a base station (*e*.*g*., base station 121), downlink control channel communications from the base station, etc. At 1120, the user equipment processes the communications using the deep neural network to extract information transmitted in the communications. The user equipment (*e*.*g*., UE 110), as one example, processes the communications using the deep neural network based on a processing assignment included in the message, such as by demodulating and/or decoding downlink communications from the base station (*e*.*g*., base station 121) using the deep neural network, encoding and/or modulating uplink communications to the base station, and so forth.

In some implementations, the user equipment optionally transmits feedback based on the communications at 1125. For instance, the user equipment (*e*.*g*., UE 110) generates metrics based on the communications (*e*.*g*., error metrics, SINR information, CQI, CSI, Doppler feedback) and transmits the metrics as feedback to the base station (*e*.*g*., base station 121).

Having described some example methods that can be used to implement aspects of base station-user equipment messaging using a deep neural network, consider now a discussion of generating and communicating neural network formation configurations that is in accordance with one or more implementations.

### Generating and Communicating Neural Network Formation Configurations

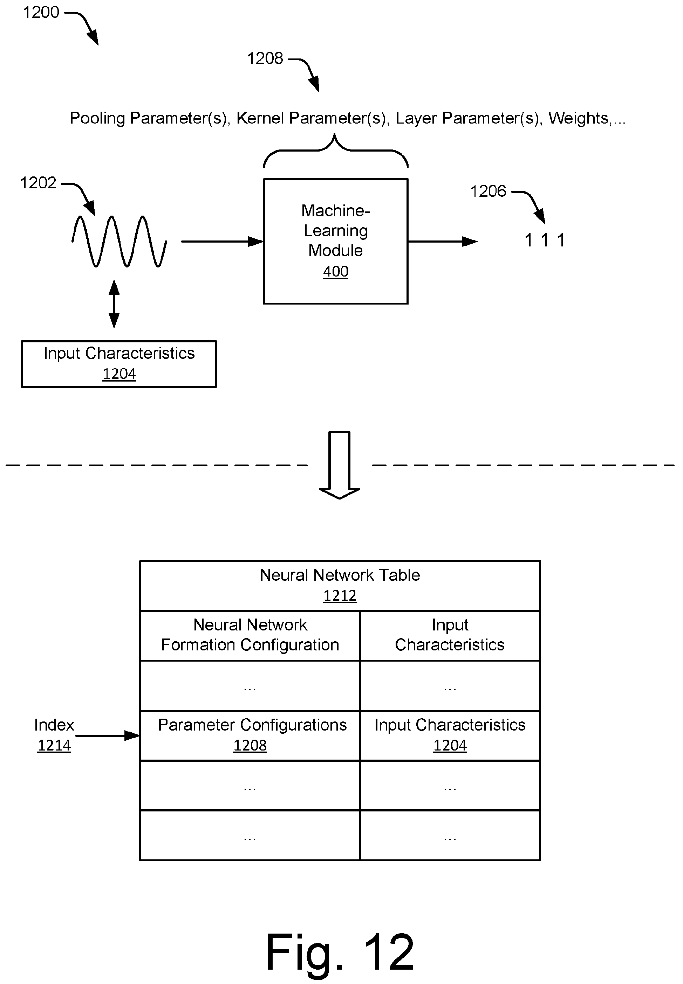

In supervised learning, machine-learning modules process labeled training data to generate an output. The machine-learning modules receive feedback on an accuracy of the generated output and modify processing parameters to improve the accuracy of the output. FIG. 12 illustrates an example 1200 that describes aspects of generating multiple NN formation configurations. At times, various aspects of the example 1200 are implemented by any combination of training module 270, base station neural network manager 268, core network neural network manager 312, and/or training module 314 of FIG. 2 and FIG. 3.

The upper portion of FIG. 12 includes machine-learning module 400 of FIG. 4. In implementations, a neural network manager determines to generate different NN formation configurations. To illustrate, consider a scenario in which the base station neural network manager 268 determines to generate a NN formation configuration by selecting a combination of NN formation configuration elements from a neural network table, where the NN formation configuration corresponds to a UE decoding and/or demodulating downlink communications. In other words, the NN formation configuration (by way of the combination of NN formation configuration elements) forms a DNN that processes downlink communications received by a UE. Oftentimes, however, transmission channel conditions vary which, in turn, affects the characteristics of the downlink communications. For instance, a first transmission channel distorts the downlink communications by introducing frequency offsets, a second transmission channel distorts the downlink communications by introducing Doppler effects, a third transmission channel distorts the downlink communications by introducing multipath channel effects, and so forth. To accurately process the downlink communications (*e*.*g*., reduce bit errors), various implementations select multiple NN formation configurations, where each NN formation configuration (and associated combination of NN formation configuration elements) corresponds to a respective input condition, such as a first transmission channel, a second transmission channel, etc.

Training data 1202 represents an example input to the machine-learning module 400. In FIG. 12, the training data represents data corresponding to a downlink communication. Training data 1202, for instance, can include digital samples of a downlink communications signal, recovered symbols, recovered frame data, etc. In some implementations, the training module generates the training data mathematically or accesses a file that stores the training data. Other times, the training module obtains real-world communications data. Thus, the training module can train the machine-learning module using mathematically generated data, static data, and/or real-world data. Some implementations generate input characteristics 1204 that describe various qualities of the training data, such as transmission channel metrics, UE capabilities, UE velocity, and so forth.

Machine-learning module 400 analyzes the training data, and generates an output 1206, represented here as binary data. Some implementations iteratively train the machine-learning module 400 using the same set of training data and/or additional training data that has the same input characteristics to improve the accuracy of the machine-learning module. During training, the machine-learning module modifies some or all of the architecture and/or parameter configurations of a neural network included in the machine-learning module, such as node connections, coefficients, kernel sizes, etc. At some point in the training, the training module determines to extract the architecture and/or parameter configurations 1208 of the neural network (*e*.*g*., pooling parameter(s), kernel parameter(s), layer parameter(s), weights), such as when the training module determines that the accuracy meets or exceeds a desired threshold, the training process meets or exceeds an iteration number, and so forth. The training module then extracts the architecture and/or parameter configurations from the machine-learning module to use as a NN formation configuration and/or NN formation configuration element(s). The architecture and/or parameter configurations can include any combination of fixed architecture and/or parameter configurations, and/or variable architectures and/or parameter configurations.

The lower portion of FIG. 12 includes neural network table 1212 that represents a collection of NN formation configuration elements, such as neural network table 216, neural network table 272, and/or neural network table 316 of FIG. 2 and FIG. 3. The neural network table 1212 stores various combinations of architecture configurations, parameter configurations, and input characteristics, but alternate implementations exclude the input characteristics from the table. Various implementations update and/or maintain the NN formation configuration elements and/or the input characteristics as the machine-learning module learns additional information. For example, at index 1214, the neural network manager and/or the training module updates neural network table 1212 to include architecture and/or parameter configurations 1208 generated by the machine-learning module 400 while analyzing the training data 1202.

The neural network manager and/or the training module alternately or additionally adds the input characteristics 1204 to the neural network table and links the input characteristics to the architecture and/or parameter configurations 1208. This allows the input characteristics to be obtained at a same time as the architecture and/or parameter configurations, such as through using an index value that references into the neural network table (*e*.*g*., references NN formation configurations, references NN formation configuration elements). In some implementations, the neural network manager selects a NN formation configuration by matching the input characteristics to a current operating environment, such as by matching the input characteristics to current channel conditions, UE capabilities, UE characteristics (*e*.*g*., velocity, location, etc.) and so forth.

Having described generating and communicating neural network formation configurations, consider now a discussion of signaling and control transactions over a wireless communication system that can be used to communicate neural network formation configurations that is in accordance with one or more implementations

### Signaling and Control Transactions to Communicate Neural Network Formation Configurations

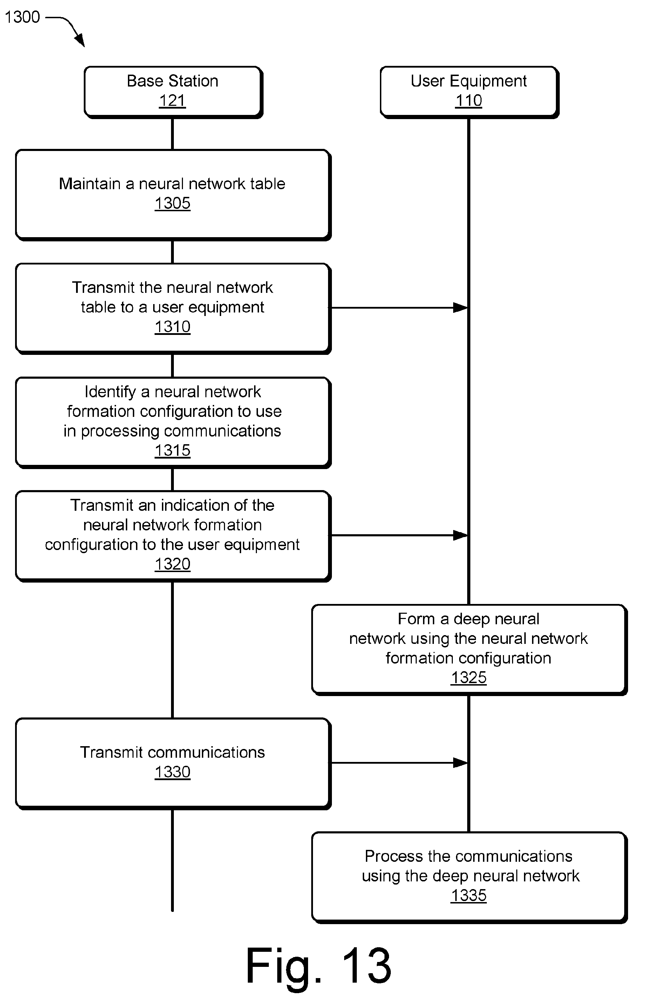

FIGs. 13-15 illustrate example signaling and control transaction diagrams between a base station, a user equipment, and/or a core network server in accordance with one or more aspects of communicating neural network formation configurations, such as communicating a NN formation configuration. In implementations, the signaling and control transactions may be performed by any one of the base stations 120 and the UE 110 of FIG. 1, or the core network server 302 of FIG. 3, using elements of FIGs. 1-12.

A first example of signaling and control transactions for communicating neural network formation configurations is illustrated by the signaling and control transaction diagram 1300 of FIG. 13. In implementations, portions or all of the signaling and control transactions described with reference to the signaling and control transaction diagram correspond to signaling and control transactions described with reference to FIG. 7 and/or FIG. 8.

As illustrated, at 1305 the base station 121 maintains a neural network table. For example, a base station neural network manager and/or the training module of the base station 121 (*e.g*., base station neural network manager 268, training module 270) generate and/or maintain a neural network table (*e*.*g*., neural network table 272) using any combination of mathematically generated training data, data extracted from real-world communications, files, etc. In various implementations, the base station 121 maintains multiple neural network tables, where each neural network table includes multiple neural network formation configurations and/or neural network formation configuration elements for a designated purpose, such as a first neural network table designated for data channel communications, a second neural network table designated for control channel communications, and so forth.

At 1310, the base station 121 transmits the neural network table to the UE 110. As one example, the base station transmits the neural network table using layer 3 messaging (*e*.*g*., Radio Resource Control (RRC) messages). In transmitting the neural network table, the base station transmits any combination of architecture and/or parameter configurations that can be used to form a deep neural network, examples of which are provided in this disclosure. Alternately or additionally the base station transmits an indication with the neural network table that designates a processing assignment for the neural network table. Accordingly, the base station transmits multiple neural network tables to the UE, with a respective processing assignment designated for each neural network table. In some implementations, the base station 121 broadcasts the neural network table(s) to a group of UEs. Other times, the base station 121 transmits a UE-dedicated neural network table to the UE 110.

At 1315, the base station 121 identifies a neural network formation configuration to use in processing communications. For example, the base station determines a neural network formation configuration to use in processing the communications by selecting a combination of neural network formation architecture elements, such as that described at 710 of FIG. 7, by analyzing any combination of information, such as a channel type being processed by a deep neural network (*e*.*g*., downlink, uplink, data, control, etc.), transmission medium properties (*e*.*g*., power measurements, signal-to-interference-plus-noise ratio (SINR) measurements, channel quality indicator (CQI) measurements), encoding schemes, UE capabilities, BS capabilities, and so forth. Thus, in some implementations, the base station 121 identifies the neural network formation configuration base on receiving various metrics and/or parameters, such as that described at 815, 820, and 830 of FIG. 8. In some implementations, the base station 121 identifies a default neural network formation configuration to use as the neural network formation configuration. Thus, identifying the neural network formation configuration can include identifying default neural network formation configuration and/or updates to a neural network formation configuration.

In identifying the neural network formation configuration, the base station 121 ascertains a neural network formation configuration in the neural network table that corresponds to the determined neural network formation configuration. In other words, the base station 121 identifies a neural network formation configuration and/or neural network formation configuration elements in neural network table 272 and/or neural network table 216 of FIG. 2 that align with the determined neural network formation configuration, such as by correlating and or matching input characteristics. In identifying the neural network formation configuration and/or neural network formation configuration elements in the neural network table, the base station identifies index value(s) of the neural network formation configuration and/or neural network formation configuration elements.

At 1320, the base station 121 transmits an indication that directs the UE 110 to form a deep neural network using a neural network formation configuration from the neural network table. For example, similar to that described at 715 of FIG. 7 and/or at 840 of FIG. 8, the base station 121 communicates the index value(s) to the UE 110, and directs the UE 110 to form the deep neural network using the neural network formation configuration indicated by the index value(s). The base station can transmit the indication to the UE in any suitable manner. As one example, the base station transmits index value(s) that corresponds to the neural network formation configuration using a layer 2 message (*e.g.,* a Radio Link Control (RLC) message, Medium Access Control (MAC) control element(s)). In some implementations, the base station compares a current operating environment (*e*.*g*., one or more of channel conditions, UE capabilities, BS capabilities, metrics) to input characteristics stored within the neural network table and identifies stored input characteristics aligned with the current operating environment. In turn, the base station obtains the index value of stored input characteristics which, in turn, provides the index value of the neural network formation configuration and/or neural network formation configuration elements. The base station 121 then transmits the index value(s) as the indication. At times, the base station 121 includes a processing assignment to indicate a position in a processing chain to apply the deep neural network. In some implementations, the base station transmits the index value(s) and/or processing assignment using a downlink control channel.

At times, the base station transmits rule(s) to the UE specifying operating parameters related to applying the neural network formation configuration. In one example, the rules include a time instance that indicates when to process communications with the deep neural network formed using the neural network formation configuration. Alternately or additionally, the rules specify a time threshold value that directs the UE to use a default neural network formation configuration instead of the specified neural network formation configuration when a data channel and control channel are within the time threshold value. Additionally, or alternatively, a rule may direct the user equipment to use the same neural network formation configuration for data channel communications and control channel communications when a data channel and control channel are within the time threshold value. To illustrate, consider an example in which the UE processes data channel communications using a first deep neural network (formed using a first neural network formation configuration), and control channel communications using a second deep neural network (formed using a second neural network formation configuration). If the data channel communications and control channel communications fall within the time threshold value specified by the time instance, the UE processes both channels using a default deep neural network (formed with the default neural network formation configuration) and/or the same deep neural network, since there may not be enough time to switch between the first deep neural network and the second deep neural network.

At times, the base station specifies a default neural network formation configuration to UE(s) using a downlink control channel to communicate the default neural network formation configuration, where the default neural network formation configuration forms a deep neural network that processes a variety of input data. In some implementations, the default neural network formation configuration forms a deep neural network that processes the variety of input data with an accuracy within a threshold range. The default neural network formation configuration can include a generic neural network formation configuration.

To illustrate, some implementations generate or select neural network formation configurations for specific operating conditions, such as a first neural network formation configuration specific to UE downlink control channel processing (*e*.*g*., demodulating and/or deciding) with a current operating environment "X", a second neural network formation configuration specific to UE downlink control channel processing with a current operating environment "Y", and so forth. For example, a first neural network formation configuration can correlate to a current operating environment in which a detected interference level is high, a second neural network formation configuration can correlate to a current operating environment in which a detected interference level is low, a third neural network formation configuration can correlate to a current operating environment in which a connected UE appears stationary, a fourth neural network formation configuration can correlate to a current operating environment in which the connected UE appears to be moving and with a particular velocity, and so forth.

Forming a deep neural network using a neural network formation configuration for specific operating conditions improves (relative to forming the deep neural network with other neural network formation configurations) an accuracy of the output generated by the deep neural network when processing input data corresponding to the specific operating conditions. However, this introduces a tradeoff insofar as the deep neural network formed with the neural network formation configuration for specific operating conditions generates output with less accuracy when processing input associated with other operating conditions. Conversely, a default neural network formation configuration corresponds to a neural network formation configuration that processes a wider variety of input, such as a variety of input that spans more operating conditions. In other words, a deep neural network configured with a default neural network formation configuration processes a larger variety of communications relative to neural network formation configurations directed to specific operating conditions.

At 1325, the UE 110 forms the deep neural network using the neural network formation configuration. The UE, as one example, extracts the index value(s) transmitted by the base station 121, and obtains the neural network formation configuration and/or neural network formation configuration elements by accessing the neural network table using the index value(s). Alternately or additionally, the UE 110 extracts the processing assignment, and forms the deep neural network in the processing chain as specified by the processing assignment.

At 1330, the base station 121 transmits communications to the UE 110, such as downlink data channel communications. At 1335, the UE 110 processes the communications using the deep neural network. For instance, the UE 110 processes the downlink data channel communications using the deep neural network to recover the data. As another example, processing the communications includes processing a reply to the communications, where the UE 110 processes, using the deep neural network, uplink communications in reply to the downlink communications.

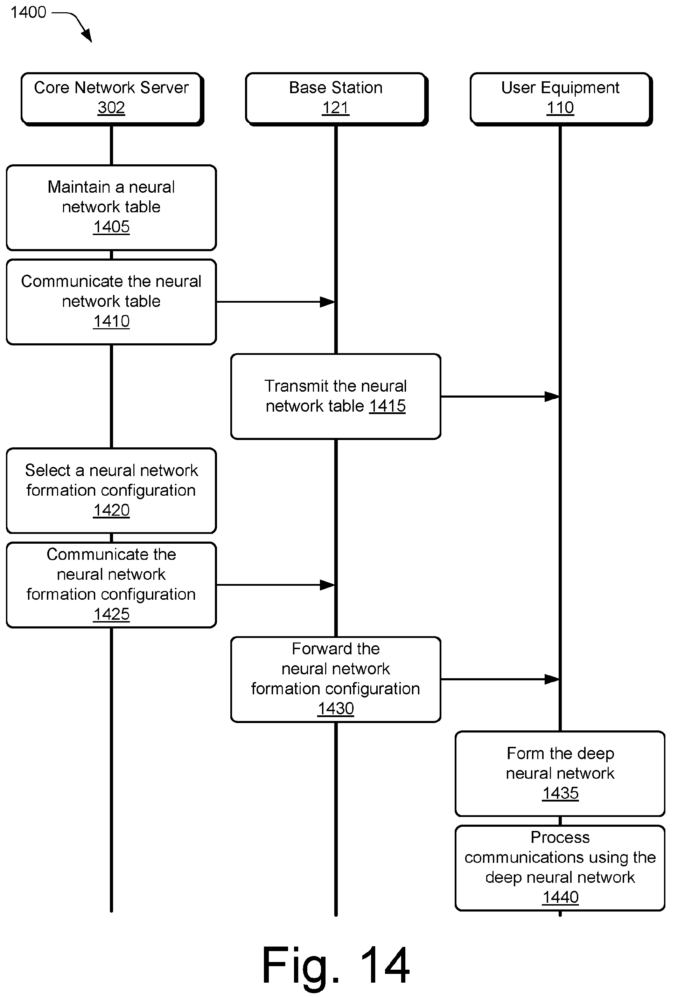

A second example of signaling and control transactions for communicating neural network formation configurations is illustrated by the signaling and control transaction diagram 1400 of FIG. 14. As illustrated, at 1405 the core network server 302 maintains a neural network table. The core network neural network manager 312 and/or the training module 314 of the core network server 302, for instance, generate and/or maintain the neural network table 316 using any combination of mathematically generated training data, data extracted from real-world communications, files, etc. In various implementations, the core neural network server 302 maintains multiple neural network tables, where each neural network table includes multiple neural network formation configuration elements for a designated processing assignment (*e*.*g*., a first neural network table designated for data channel communications, a second neural network table designated for control channel communications).

At 1410, the core network server 302 communicates the neural network table to the base station 121, such as by using the core network interface 320 of FIG. 3. In some implementations, the core network server communicates multiple neural network tables to the base station. At 1415, the base station 121 transmits the neural network table to the UE 110, such as by transmitting the neural network table using layer 3 messaging, by transmitting the neural network table using a downlink control channel, by broadcasting the neural network table, by transmitting the neural network table using a UE-dedicated message, and so forth.

At 1420, the core network server 302 selects a neural network formation configuration. As one example, the core network server 302 compares a current operating environment to input characteristics stored within the neural network table and identifies stored input characteristics aligned with the current operating environment (*e*.*g*., one or more of channel conditions, UE capabilities, BS capabilities, metrics). The core network server then obtains the index value(s) of the aligned input characteristics which, in turn, provides the index value(s) of the neural network formation configuration and/or neural network formation configuration elements. The core network server 302 then communicates the selected neural network formation configuration to the base station at 1425, such as by communicating the index value(s) using core network interface 320. In some implementations, the core network server communicates a processing assignment with the neural network formation configuration.

At 1430, the base station 121 forwards the neural network formation configuration to the UE 110. As an example, the base station 121 transmits the index value(s) to the UE 110, such as through layer 2 messaging (*e.g*., an RLC message, MAC control element(s)), to direct the UE to form the deep neural network using the neural network formation configuration, such as that described at 1320 of FIG. 13. In implementations, the base station 121 additionally forms a complementary deep neural network based on the neural network formation configuration (not shown here), such as that described in FIG. 6, at 725 of FIG. 7, at 845 of FIG. 8, and/or at 920 of FIG. 9-1. At times, the base station communicates the processing assignment received from the core network server with the index value. In response to receiving the neural network formation configuration, the UE 110 forms the deep neural network at 1435, and processes communications received from the base station 121 using the deep neural network at 1440, such as that described at 730 of FIG. 7, at 810 of FIG. 8, at 935 of FIG. 9, and/or 1335 of FIG. 13.

In some implementations, a UE derives a first neural network formation configuration from a second neural network formation configuration when similarities are present in a wireless communication system. To illustrate, consider an example of quasi-correspondent channels. Quasi-correspondent channels are channels within a wireless communication system that have shared or the same properties, such as a same delay spread, a same Doppler spread, a same spatial signature, a same spatial beam, a same spatial direction, same data rate, and so forth. Alternately or additionally, quasi-correspondent channels have correlated physical properties within a threshold range or value. In various implementations, a UE derives a first neural network formation configuration from a second neural network formation configuration in response to identifying these similarities.

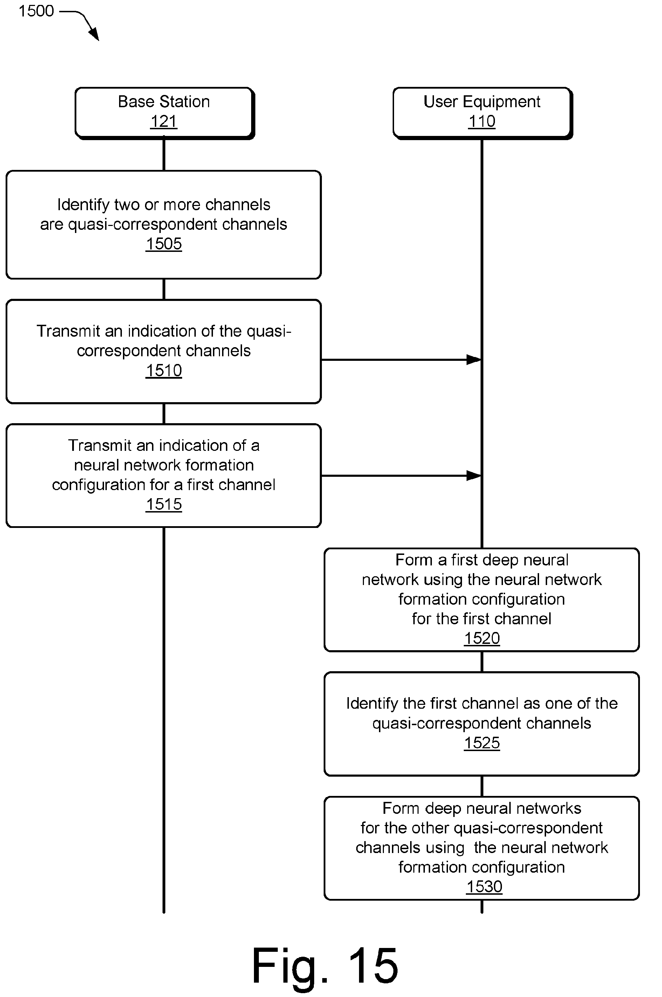

To illustrate, consider now a third example of signaling and control transactions for communicating neural network formation configurations, illustrated in FIG. 15 by the signaling and control transaction diagram 1500. In the third example, a UE derives a neural network formation configuration based on identified similarities. While the signaling and control transaction diagram 1500 illustrates the base station 121 and the UE 110 of FIG. 1, alternate implementations include a core network server, such as core network server 302 of FIG. 3 performing some or all of the functionality performed by the base station 121.

At 1505, the base station 121 identifies two or more channels that are quasi-correspondent channels. The base station 121 or core network server 302 (using base station neural network manager 268 of FIG. 2 or core network neural network manager 312 of FIG. 3), for example, compares various beam properties of two or more channels, such as direction, intensity, divergence, profile, quality, etc. The base station 121 determines that the two or more channels are quasi-correspondent when an arbitrary number of properties match and/or correlate to one another within a predefined threshold.

At 1510, the base station 121 transmits an indication of the quasi-correspondent channels to the UE 110, such as by transmitting the indication of quasi-correspondent channels using layer 2 messaging, layer 3 messaging, and/or layer 1 signaling. The indication denotes any arbitrary number of channels as being quasi-correspondent with one another, where the channels can be physical channels and/or logical channels. As one example, the indication denotes that a downlink control channel is quasi-correspondent with a downlink data channel when the channels have similar data rates. As another example, the indication denotes that two physical channels at different carrier frequencies are quasi-correspondent based on the physical channels having a similar spatial beam.

At 1515, the base station 121 transmits an indication of a neural network formation configuration for one of the quasi-correspondent channels. For example, the base station transmits index value(s) and processing assignment that designates the formed deep neural network for processing a first channel, such as a downlink control channel.

At 1520, the UE 110 forms a first deep neural network using the neural network formation configuration for the first channel (*e*.*g*., the downlink control channel). At 1525, the UE 110 identifies the first channel as one of the quasi-correspondent channels. The UE, for instance, compares the first channel to the quasi-correspondent channels identified by, and received from, the base station 121. In response to identifying the first channel as being one of the quasi-correspondent channels, the UE determines to apply the neural network formation configuration to the other channels that are quasi-correspondent to the first channel. Accordingly, at 1530, the UE 110 forms deep neural networks for the other quasi-correspondent channels using the neural network formation configuration. By identifying channels as quasi-correspondent channels, the neural network formation configuration need only be changed for one of the quasi-correspondent channels and this will result in the neural network formation configuration being changed for all the quasi-correspondent channels without the need to change individually the neural network formation configuration for each of the other quasi-correspondent channels.

Having described signaling and control transactions that can be used to communicate neural network formation configurations, consider now some example methods that can be used to communicate neural network formation configurations that are in accordance with one or more implementations.

### Example Methods

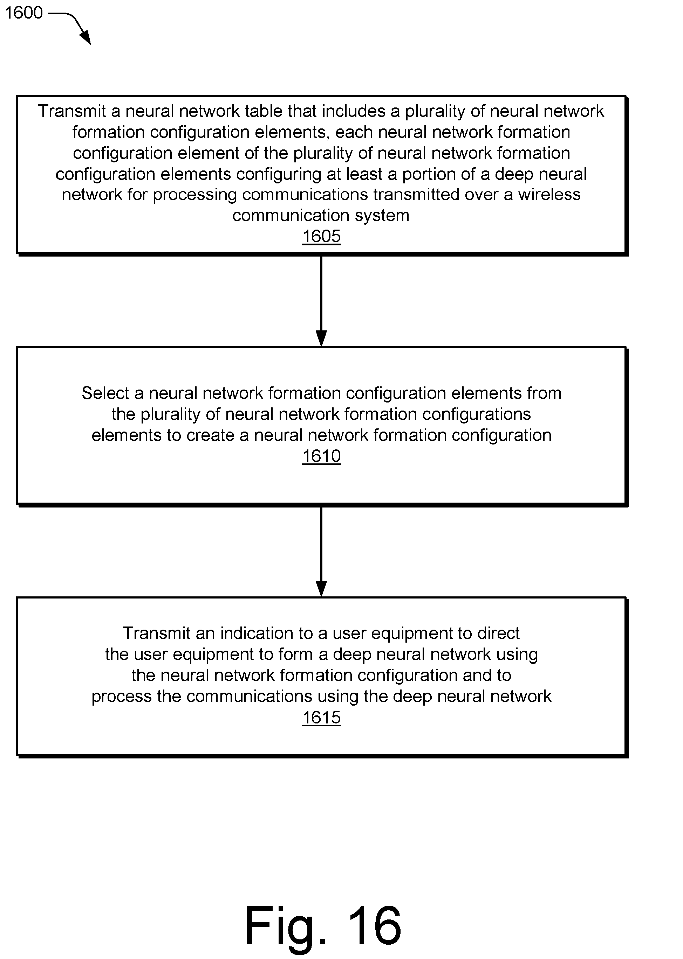

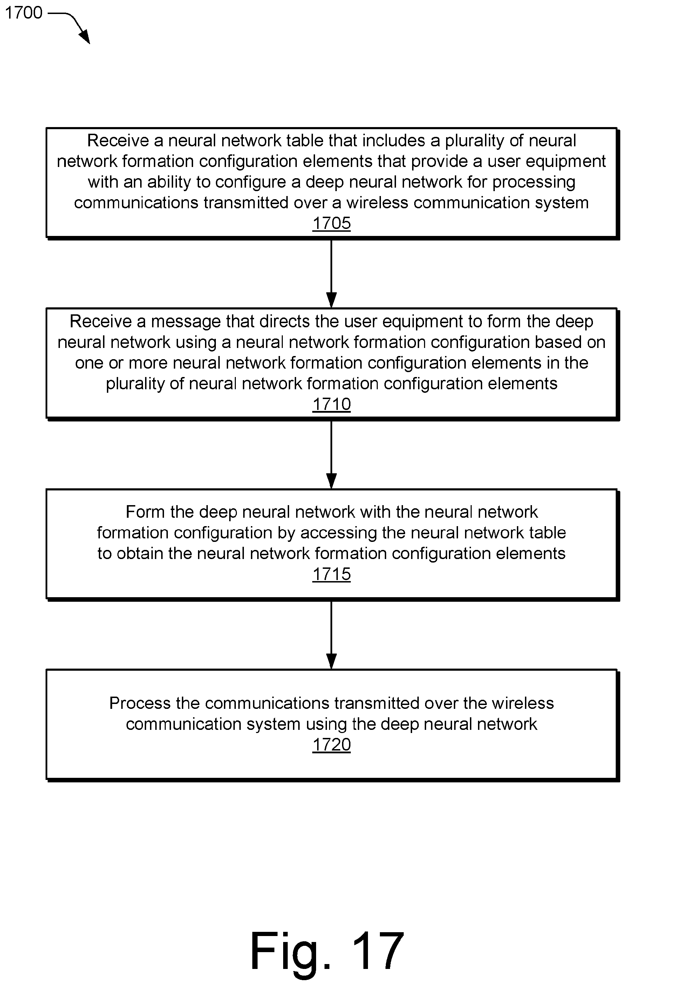

Example methods 1600 and 1700 are described with reference to FIG. 16 and FIG. 17 in accordance with one or more aspects of communicating neural network formation configurations. The order in which the method blocks are described are not intended to be construed as a limitation, and any number of the described method blocks can be skipped or combined in any order to implement a method or an alternate method. Generally, any of the components, modules, methods, and operations described herein can be implemented using software, firmware, hardware (*e*.*g*., fixed logic circuitry), manual processing, or any combination thereof. Some operations of the example methods may be described in the general context of executable instructions stored on computer-readable storage memory that is local and/or remote to a computer processing system, and implementations can include software applications, programs, functions, and the like. Alternatively, or additionally, any of the functionality described herein can be performed, at least in part, by one or more hardware logic components, such as, and without limitation, Field-programmable Gate Arrays (FPGAs), Application-specific Integrated Circuits (ASICs), Application-specific Standard Products (ASSPs), System-on-a-chip systems (SoCs), Complex Programmable Logic Devices (CPLDs), and the like.

FIG. 16 illustrates an example method 1600 for communicating a neural network formation configuration for processing communications transmitted over a wireless communication system. In some implementations, operations of the method 1600 are performed by a network entity, such as one of the base stations 120 and/or the core network server 302.

At 1605, the network entity transmits a neural network table that includes a plurality of neural network formation configuration elements, where each neural network formation configuration element of the plurality of neural network formation configuration elements configures at least a portion of a deep neural network for processing communications transmitted over a wireless communication system. For example, the network entity (*e.g.,* base station 121) transmits the neural network table (*e.g.,* neural network table 272, neural network table 316) to the UE (*e.g.,* UE 110) using a broadcast or multicast message to a group of UEs. As another example, the network entity (*e.g.,* base station 121) transmits the neural network table to the UE (*e.g.,* UE 110) using a UE-dedicated message. In some implementations, the network entity (*e.g.,* core network server 302) communicates the neural network table to a base station (e.g., base station 121), and directs the base station to transmit the neural network table to the UE (*e.g.,* UE 110). At times, the network entity transmits the neural network table using layer 3 messaging. Alternately or additionally, the network entity transmits multiple neural network tables, where each neural network table has a designated processing assignment as further described.

At 1610, the network entity selects one or more neural network formation configuration elements from the plurality of neural network formation configuration elements to create a neural network formation configuration. For instance, the network entity (*e.g*., base station 121, core network server 302) selects the neural network formation configuration elements by comparing current operating environment(s) with input characteristics stored in the neural network table, and selecting the neural network formation configuration elements by correlating or matching the input characteristics to the current operating environment. In some implementations, the network entity selects a set of candidate neural network formation configurations.

At 1615, the network entity transmits an indication to a user equipment to direct the user equipment to form a deep neural network using the neural network formation configuration and to process communications using the deep neural network. As one example, the network entity (*e.g.,* base station 121) determines index value(s) of the neural network table that corresponds to the neural network formation configuration and/or a set of neural network formation configuration elements, and transmits the index value(s) to UE 110, such as by transmitting the index value(s) using a downlink control channel, by transmitting the index value(s) in layer 2 message(s), etc. As another example, the network entity (*e.g.,* core network server 302) communicates an indication to a base station (*e.g*., base station 121), and directs the base station to transmit the indication to the user equipment (*e*.*g*., UE 110). The network entity alternately or additionally indicates a processing assignment for the deep neural network formed with the neural network formation configuration, such as by indicating a processing assignment that directs the user equipment to process downlink control channel communications with the deep neural network.

In transmitting the index value(s), the network entity sometimes specifies rule(s) on when to process communications with the corresponding deep neural network. As one example, the network entity (*e.g*., base station 121, core network server 302) determines a time threshold value between data channel communications and control channel communications. When transmitting the index value to direct the user equipment (*e.g*., UE 110) to form a deep neural network, the network entity transmits the time value threshold and a rule that directs the user equipment to form the deep neural network using a default formation configuration when a timing between the data channel communications and the control channel communications is below the time threshold value. Additionally, or alternatively, a rule may direct the user equipment to use the same neural network formation configuration for data channel communications and control channel communications when a data channel and control channel are within a time threshold value and so there is not enough time to switch between different DNNs.

FIG. 17 illustrates an example method 1700 for communicating a neural network formation configuration for processing communications transmitted over a wireless communication system. In some implementations, operations of the method 1700 are performed by a user equipment, such as UE 110.

At 1705, a user equipment receives a neural network table that includes a plurality of neural network formation configuration elements that provide a user equipment with an ability to configure a deep neural network for processing communications transmitted over a wireless communication system. The user equipment (*e*.*g*., UE 110), for example, receives the neural network table (*e*.*g*., neural network table 272) from a base station (*e*.*g*., base station 121) in layer 3 messaging. As another example, the user equipment receives the neural network table in a multicast or broadcast message. Alternately or additionally, the user equipment receives the neural network table in a UE-dedicated message. In some cases, the user equipment receives multiple neural network tables, where each neural network table has a designated processing assignment.

At 1710, the user equipment receives a message that directs the user equipment to form the deep neural network using a neural network formation configuration based on one or more neural network formation configuration elements in the plurality of neural network formation configuration elements. For example, the user equipment (*e*.*g*., UE 110) receives, in the message, a set of index values to the neural network table, where the set of index values corresponds to a set of neural network formation configuration elements, such as that described at 1325 of FIG. 13, at 1435 of FIG. 14, and/or at 1520 of FIG. 15. In implementations, the user equipment (*e*.*g*., UE 110) receives a downlink control channel message that includes index value(s) corresponding to an entry (or entries) in the neural network table. In some implementations, the message includes an indication of a processing assignment for a deep neural network formed with the neural network formation configuration, such as a communication channel processing assignment, a processing chain processing assignment, etc.

At 1715, the user equipment forms the deep neural network with the neural network formation configuration by accessing the neural network table to obtain the neural network formation configuration elements. In one example, the user equipment (*e*.*g*., UE 110) accesses the neural network table using the index value(s). Alternatively or additionally, in some implementations, when forming the deep neural network, the user equipment (*e*.*g*., UE 110) determines to process a first communication channel using a first deep neural network formed with the neural network formation configuration, and identifies a second communication channel that is quasi-correspondent to the first communication channel. In response to identifying the second communication channel is quasi-correspondent, the user equipment (*e*.*g*., UE 110) determines to process the second communication channel using a second deep neural network formed with the neural network formation configuration.

In response to forming the deep neural network, the user equipment processes the communications transmitted over the wireless communication system using the deep neural network at 1720. For example, the user equipment (*e*.*g*., UE 110), processes a downlink communication channel using the deep neural network.

Having described example methods that can be used to communicate neural network formation configurations, consider now a discussion of E2E ML for wireless networks that is in accordance with one or more implementations.

### E2E ML for Wireless Networks

Aspects of an end-to-end communication (E2E communication) involve two endpoints exchanging information over a communication path, such as through a wireless network. At times, the E2E communication performs a single-directional exchange of information, where a first endpoint sends information and a second endpoint receives the information. Other times, the E2E communication performs bi-directional exchanges of information, where both endpoints send and receive the information. The endpoints of an E2E communication can include any entity capable of consuming and/or generating the information, such as a computing device, an application, a service, and so forth. To illustrate, consider an example in which an application executing at a UE exchanges information with a remote service over a wireless network. In this example, the E2E communication corresponds to the communication path between the application and the remote service, where the application and the remote service act as endpoints.

While the E2E communication involves endpoints that exchange information, the E2E communication alternately or additionally includes intermediate, entities (*e*.*g*., devices, applications, services) that participate in the exchange of information. To illustrate, consider again the example of an E2E communication established through a wireless network where an application at a UE functions as a first endpoint and a remote service functions as a second endpoint. In establishing the E2E communication between the endpoints, the wireless network utilizes any combination of UE(s), base station(s), core network server(s), remote network(s), remote service(s), and so forth, such as that described with reference to the environment 100 of FIG. 1. Thus, intermediary entities, such as the base station 120 and the core network 150, participate in establishing the E2E communication and/or participating in the E2E communication to enable an exchange of information between the endpoints.

Different factors impact the operational efficiency of the E2E communication and how the network elements process information exchanged through the E2E communication. For instance, with reference to an E2E communication established using a wireless network, a current operating environment (*e*.*g*., current channel conditions, UE location, UE movement, UE capabilities) impacts how accurately (*e*.*g*., bit error rate, packet loss) a receiving endpoint recovers the information. As one example, an E2E communication implemented using 5G mmW technologies becomes susceptible to more signal distortions relative to lower frequency sub-6GHz signals as further described.

As another example, various implementations partition wireless network resources differently based on an end-to-end analysis of an E2E communication, where the wireless network resources include any combination of, by way of example and not of limitation, physical hardware, physical spectrum, logical channels, network functions, services provided, quality of service, latency, and so forth. Wireless network-resource partitioning allows the wireless network to dynamically allocate the wireless network resources based on an expected usage to improve an efficiency of how the wireless network resources are used (*e*.*g*., reduce the occurrence of unused and/or wasted resources). To illustrate, consider a variety of devices connecting to a wireless network, where the devices have different performance requirements relative to one another (*e.g*., a first device has secure data transfer requirements, a second device has high priority/low latency data transfer requirements, a third device has high data rate requirements). For at least some devices, a fixed and/or static distribution of wireless network resources (*e*.*g*., a fixed configuration for the wireless network resources used to implement an E2E communication) can lead to unused resources and/or fail to meet the performance requirements of some services. Thus, partitioning the wireless network resources can improve an overall efficiency of how the wireless network resources are utilized. However, the partitioning causes variations in how one pair of E2E endpoints exchanges information relative to a second pair of E2E endpoints.

To further demonstrate, consider a Quality-of-Service flow (QoS flow) that corresponds to information exchanged in a wireless network. In various implementations, an E2E communication includes and/or corresponds to a QoS flow. Some wireless networks configure a QoS flow with operating rules, priority levels, classifications, and so forth, that influence how information is exchanged through the QoS flow. For example, a QoS profile indicates to a wireless network the QoS parameters and/or QoS characteristics of a particular QoS flow, such as a Guaranteed Flow Bit Rate (GFBR) parameter used to indicate an uplink and/or downlink guaranteed bit rate for the QoS flow, a Maximum Flow Bit Rate (MFBR) parameters used to indicate a maximum uplink and/or downlink bit rate for the QoS flow, an Allocation and Retention Priority (ARP) parameter that indicates a priority level, a pre-emption capability, and/or pre-emption vulnerability of the QoS flow, a Reflective QoS attribute (RQA) that indicates a type of traffic carried on the QoS flow is subject to Reflective QoS (*e.g.,* implicit updates), a Notification Control parameter that indicates whether notifications are requested when a guaranteed flow bit rate cannot be guaranteed, or resumes, for the QoS flow, an aggregate bit rate parameter that indicates an expected aggregate bit rate for the collective non-guaranteed-bit-rate (Non-GBR) flows associated with a particular UE, default parameters for 5QI and ARP priority levels, a Maximum Packet Loss Rate (MPLR) for uplink and/or downlink that indicates a maximum rate for lost packets of the QoS flow, a Resource Type characteristic that indicates types of resources that can be used by the QoS flow (*e.g*., GBR resource type, Delay-critical GBR resource type, non-GBR resource type), a scheduling priority level characteristic that distinguishes between multiple QoS flows of a same UE, a Packet Delay Budget characteristic that provides an upper bound to how long a packet may be delayed, a Packet Error Rate characteristic that indicates an upper bound for a rate of PDUs unsuccessfully received, an Averaging Window characteristics that indicates a window of data over which to calculate the GFBR and/or MFBR, a Maximum Data Burst Volume characteristic that indicates a largest amount of data that is required to be served over a pre-defined time period, and so forth. In some implementations, the parameters and/or characteristics that specify the configuration of a QoS flow can be pre-configured (*e*.*g*., default) and/or dynamically communicated, such as through the QoS profile. These variations impact how the wireless network partitions the various wireless network resources to support the QoS flow configuration.

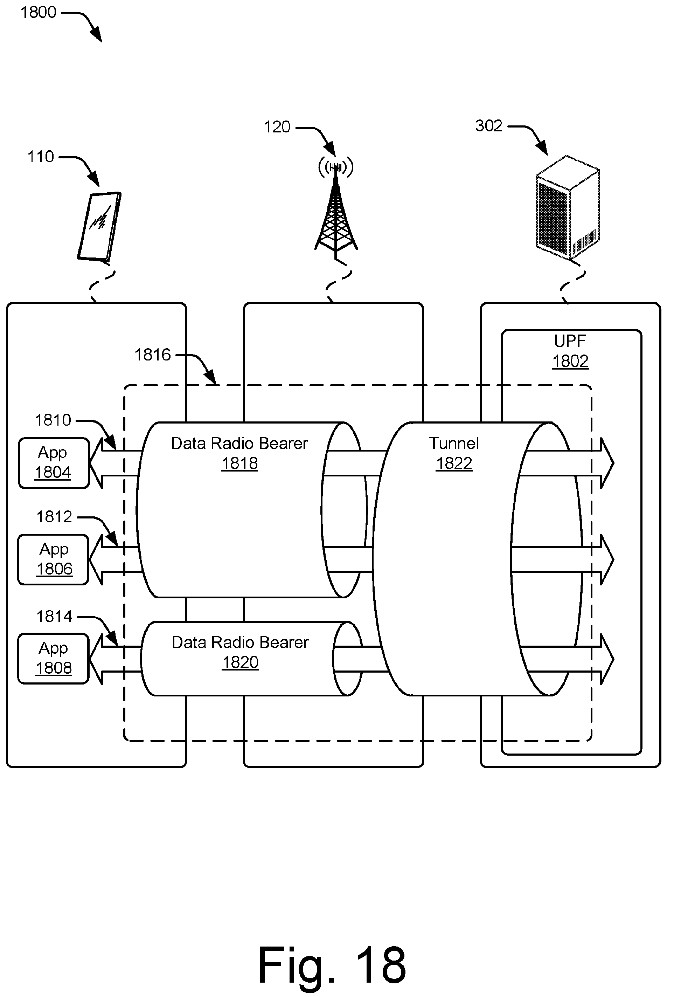

FIG. 18 illustrates an example environment 1800 that demonstrates example variations between QoS flows in accordance with one or more implementations. The environment 1800 includes the UE 110 and the base station 120 of FIG. 1, and the core network server 302 of FIG. 3. In the environment 1800, the core network server 302 implements aspects of a User Plane Function 1802 (UPF 1802), but it is to be appreciated that alternate or additional devices can be utilized to implement the UPF. The UPF 1802 provides various services and/or features to the wireless network system, such as packet forwarding, packet routing, interconnection to a data network (*e*.*g*., the Internet), data buffering, packet inspection, QoS handling, policy enforcement, etc.

In the environment 1800, the UE 110 establishes multiple QoS flows through the UPF 1802 to gain access to a data network. For example, the UE 110 includes three applications: an application 1804, an application 1806, and an application 1808, where each application has a different performance requirement (*e*.*g*., resource type, priority level, packet delay budget, packet error rate, maximum data burst volume, averaging window, security level). These different performance requirements cause the wireless network to partition the wireless network resources assigned to the corresponding QoS flows differently from one another. For instance, consider a scenario in which application 1804 corresponds to a gaming application, application 1806 corresponds to an augmented reality application, and application 1808 corresponds to a social media application. In some instances, the gaming application interacts with a remote service (through the data network) to connect with another gaming application to exchange audio in real-time, video in real-time, commands, views, and so forth, such that the gaming application has performance requirements with high data volume and low latency. The augmented reality application also interacts with a remote service through the data network to transmit location information and subsequently receive image data that overlays on top of a camera image generated at the UE 110. Relative to the gaming application, the augmented reality application utilizes less data, but has some time-sensitivity to maintain synchronization between a current location and a corresponding image overlay. Finally, the social media application interacts with a remote service through the data network to receive feed information, where the feed information has less data volume and time-criticality relative to data consumed by the augmented reality application and/or the gaming application.

Based upon these performance requirements, the wireless network establishes QoS flows between the applications and the data network (through the UPF), where each QoS flow has a different configuration associated with partitioning the wireless network resources. For instance, QoS flow 1810 connects the application 1804 to the data network through the UPF 1802, where the wireless network constructs the QoS flow based on QoS requirements, QoS parameters and/or QoS characteristics (*e*.*g*., resource type, priority level, packet delay budget, packet error rate, maximum data burst volume, averaging window, security level) that indicate a high data volume performance requirement and a time-sensitivity performance requirement. In implementations, the QoS requirements, the QoS parameters and/or the QoS characteristics included in a QoS profile correspond to the performance requirements of the QoS flow.

To illustrate, the wireless network (*e*.*g*., the base station 120, the core network server 302) process a QoS profile associated with the QoS flow 1810 that configures any combination of a GFBR parameter, a Maximum Data Burst Volume characteristic, an ARP parameter, and so forth, based on the performance requirements of the QoS flow 1810. Afterwards, the wireless network constructs the QoS flow by partitioning the wireless network resources based on the QoS parameters and/or characteristics, where the QoS flow 1810 connects the application 1804 to the data network through the UPF 1802. Similarly, QoS flow 1812 connects the application 1806 to the data network, through the UPF 1802, where the wireless network partitions the wireless network resources used by the QoS flow based upon the performance requirements associated with the application 1806. Finally, QoS flow 1814 connects the application 1808 to the data network (through the UPF 1802), where the wireless network partitions the wireless network resources used by the QoS flow based upon the performance requirements associated with the application 1808, such as by processing a QoS profile where the QoS parameters and/or characteristics reflect the lesser data volume and lesser time-critical needs of the QoS flow 1814. In various implementations, the UPF 1802 acts as an edge of the wireless network insofar as the UPF 1802 provides connectivity to the data networks external to the wireless network. Thus, within the wireless network, the application 1804 and the UPF 1802 act as endpoints of an E2E communication based on the QoS flow, 1810, the application 1806 and the UPF 1802 act as endpoints of an E2E communication based on the QoS flow 1812, and the application 1808 and the UPF 1802 act as endpoints of an E2E communication based on the QoS flow 1814.

The environment 1800 illustrates an overview of an example architecture used by a wireless network to construct the QoS flows. In the example architecture, the wireless network constructs a Protocol Data Unit session (PDU session 1816) that supplies the data connectivity between the UE 110 and through the UPF 1802 to an external data network. In implementations, the PDU session transfers data based on a particular service type, such as an Internet Protocol (IP) service, and Ethernet type service, unstructured type service, and so forth. In this example, the QoS flow 1810, the QoS flow 1812, and the QoS flow 1814 use a same service type and belong to the PDU session 1816 which corresponds to transporting data associated with the service type.

To support the data connectivity, data radio bearer 1818 and data radio bearer 1820 provide a radio interface that connects the UE 110 and the base station 120. In some implementations, the data radio bearer 1818 and the data radio bearer 1820 communicate information over the radio interface with different techniques, resource allocations, etc. Accordingly, the example architecture maps each QoS flow to a data radio bearer with a configuration that supports the respective performance requirement(s) of the QoS flow. In this example, the wireless network maps data radio bearer 1818 to the QoS flow 1810 and the QoS flow 1812, and the data radio bearer 1820 to the QoS flow 1814. Thus, a data radio bearer can support multiple QoS flows.

The tunnel 1822 corresponds to non-radio interface functionality associated with the QoS flows provided by the UPF 1802, such as packet forwarding. In implementations, the tunnel 1822 corresponds to a tunneling protocol used to transport data between entities. Thus, the base station 120 communicates information exchanged on different QoS flows to data networks through the UPF 1802 using the tunnel 1822. In implementations, the tunnel 1822 provides the wireless network with an ability to exchange traffic associated with the PDU session 1816.

While the configurability of the QoS flows provide flexibility to the wireless network to dynamically modify how the wireless network resources are allocated, the configurability adds complexity in how the wireless network processes information that is exchanged between the endpoints. Some implementations train DNNs to perform some or all of the complex processing associated with exchanging information using E2E communications with various configurations. By training a DNN on the differing processing chain operations and/or wireless network resource partitioning, the DNN can replace the conventional complex functionality as further described. The usage of DNNs in an E2E communication also allows a network entity to adapt the DNN to changing operating conditions, such as by modifying various parameter configurations (e.g., coefficients, layer connections, kernel sizes).

One or more implementations determine an E2E ML configuration (E2E ML configuration) for processing information exchanged through an E2E communication. For example, with reference to FIG. 18, some implementations determine a first E2E ML configuration for processing communications exchanged using QoS flow 1810, a second E2E ML configuration for processing communications exchanged using QoS flow 1812, and a third E2E ML configuration for processing communications exchanged using QoS flow 1814. In some cases, an end-to-end machine-learning controller (E2E ML controller) obtains capabilities of device(s) associated with end-to-end communications in a wireless network, such as machine-learning (ML) capabilities of device(s) participating in the E2E communication, and determines an E2E ML configuration based on the ML capabilities (e.g., supported ML architectures, supported number of layers, available processing power, memory limitation, available power budget, fixed-point processing vs. floating point processing, maximum kernel size capability, computation capability) of the device(s). Alternately or additionally, the E2E ML controller identifies a current operating environment and determines the E2E ML configuration based on the current operating environment. In determining the E2E ML configuration, some implementations of the E2E ML controller partition the E2E ML configuration based on the device(s) participating in the E2E communication and communicate a respective partition of the E2E ML configuration to each respective device.

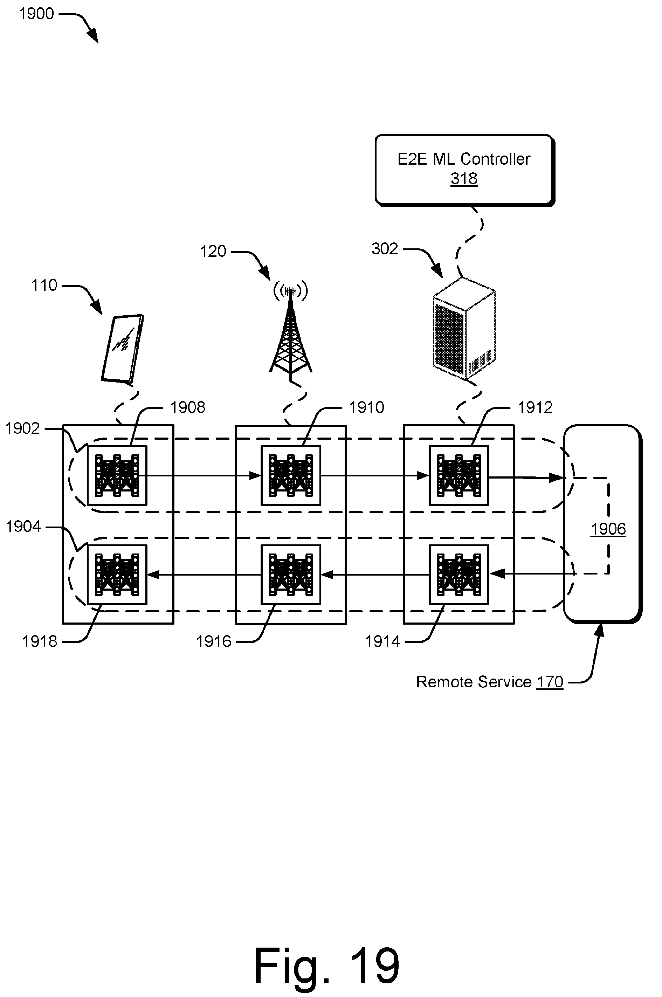

To demonstrate, consider FIG. 19 that illustrates an example environment 1900 in which example E2E ML configurations for E2E communications include DNNs operating at multiple devices. The environment 1900 includes the UE 110, the base station 120, and the remote service 170 of FIG. 1, and the core network server 302 of FIG. 3. In implementations, the UE 110 and the remote service 170 exchange information with one another using E2E communication 1902 and E2E communication 1904. For clarity, the E2E communications 1902 and 1904 are illustrated as being separate and single-directional E2E communications such that the exchange of information over each communication E2E corresponds to one direction (e.g., E2E communication 1902 includes uplink transmissions, E2E communication 1904 includes downlink transmissions), but it is to be appreciated that in alternate or additional implementations, the E2E communication 1902 and the E2E communication 1904 correspond to a single, bi-directional E2E communication that includes both, signified in the environment 1900 with a dashed line 1906. In implementations, the E2E communication 1902 and the E2E communication 1904 (in combination) correspond to a single QoS flow, such as one of the QoS flow 1810, the QoS flow 1812, or the QoS flow 1814 of FIG. 18. Accordingly, each of the multiple QoS flows illustrated in FIG. 18 has a respective E2E ML configuration.

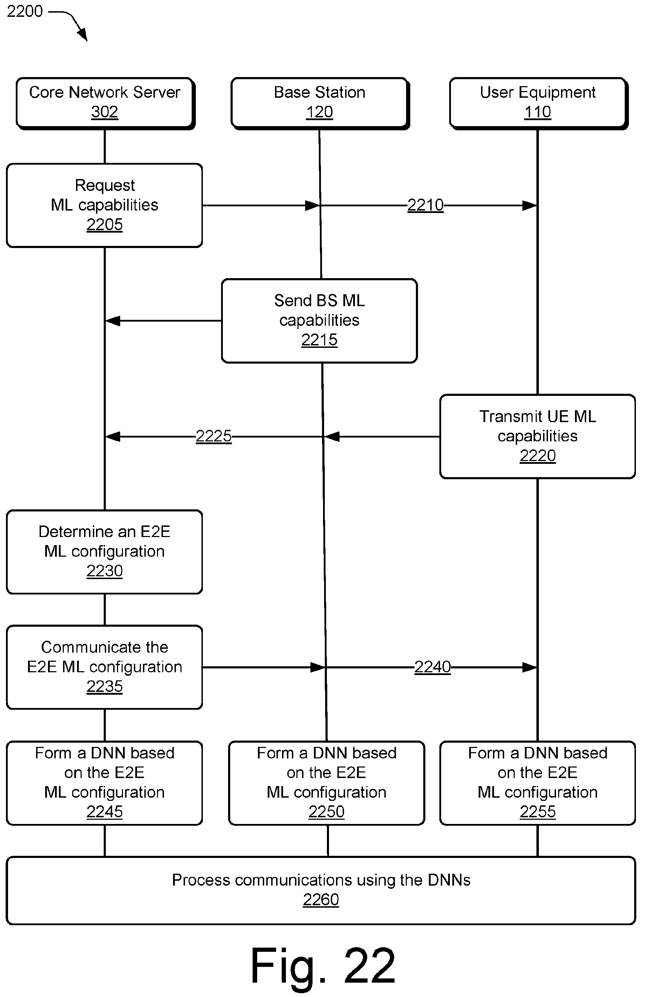

The environment 1900 also includes the E2E ML controller 318 that is implemented by the core network server 302, where the E2E ML controller 318 determines an E2E ML configuration for the E2E communication 1902 and/or the E2E communication 1904. In some implementations, the E2E ML controller determines a first E2E ML configuration for the E2E communication 1902 and a second E2E ML configuration for the E2E communication 1904, such as when each E2E communication corresponds to single-directional information exchanges. In other implementations, the E2E ML controller determines an E2E ML configuration for a bi-directional E2E communication that includes both E2E communications 1902 and 1904. For example, in response to the UE 110 requesting a connection to the remote server 170, such as through the invocation of an application, the E2E ML controller determines an E2E ML configuration for a corresponding connection based on any combination of ML capabilities of the UE 110 (e.g., supported ML architectures, supported number of layers, processing power available for ML processing, memory constraints applied to ML processing, power budget available for ML processing, fixed-point processing vs. floating point processing), performance requirements associated with the requested connection (e.g., resource type, priority level, packet delay budget, packet error rate, maximum data burst volume, averaging window, security level), available wireless network resources, ML capabilities of intermediary devices (*e*.*g*., the base station 120, the core network server 302), a current operating environment (*e*.*g*., channel conditions, UE location), and so forth. As one example, with reference to FIGs 9-1, 9-2, and FIG. 10, the E2E ML controller 318, by way of the core network server 302, receives base station metrics and/or UE metrics that describe the current operating environment. As another example, with reference to FIG. 22, the E2E ML controller, by way of the core network server 302, receives base station ML capabilities and/or UE capabilities.

In one or more implementations, the E2E ML controller 318 analyzes a neural network table based upon any combination of the device capabilities, the wireless network resource partitioning, the operating parameters, the current operating environment, the ML capabilities, and so forth, to determine the E2E ML configuration. While described as being implemented by the core network server 302, in alternate or additional implementations, the E2E ML controller 318 may be implemented by another network entity, such as the base station 120.

To illustrate, and with reference to FIG. 12, the training module 270 and/or the training module 314 train the machine-learning module 400 with variations of the training data 1202 that reflect different combinations of the capabilities, wireless network resource partitioning, the operating parameters, the current operating environment, and so forth. The training module extracts and stores the architecture and/or parameter configurations (*e*.*g*., architecture and/or parameter configurations 1208) in a neural network table such that, at a later point in time, the E2E ML controller 318 accesses the neural network table to obtain and/or identify neural network formation configurations that correspond to a determined E2E ML configuration. The E2E ML controller 318 then communicates the neural network formation configurations to various devices and directs the respective device to form a respective DNN as further described.

In determining the E2E ML configuration, the E2E ML controller 318 sometimes partitions the E2E ML configuration based on devices participating in the corresponding E2E communication. For example, the E2E ML controller 318 determines a first partition of the E2E ML configuration that corresponds to processing information at the UE 110, a second partition of the E2E ML configuration that corresponds to processing information at the base station 120, and a third partition of the E2E ML configuration that corresponds to processing information at the core network server 302, where determining the partitions can be based on any combination of the capabilities, wireless network resource partitioning, the operating parameters, the current operating environment, and so forth.

As one example, consider an E2E communication that corresponds to voice transmissions over a wireless network, such as the E2E communication 1902, the E2E communication 1904, and/or a combination of both E2E communications. In determining an E2E ML configuration for the E2E communication, the E2E ML controller 318 alternately or additionally identifies that performance requirement(s) of the E2E communication indicates large volumes of data transfer with low latency requirements. Based on the performance requirement(s), the E2E ML controller identifies an E2E ML configuration that, when formed by the respective DNN(s), performs end-to-end functionality that exchanges voice communications and satisfies the performance requirement(s). To illustrate, the E2E ML controller determines an E2E ML configuration that performs end-to-end functionality for transmitting voice from a UE to a core network server, such as signal processing, voice encoding, channel encoding, and/or channel modulation at the UE side, channel decoding, demodulation, and/or signal processing at the base station side, decoding voice at the core network server side, and so forth, and selects a configuration designed to satisfy the performance requirements.

Some implementations partition an E2E ML configuration based the ML capabilities of devices participating in the E2E communication and/or the performance requirements. A UE, for instance, may have less processing resources (*e*.*g*., processing capabilities, memory constraints, quantization constraints, fixed-point vs. floating point computations, FLOPS, power availability relative to a base station and/or a core network server, which can be indicated through the ML capabilities. In response to identifying the different processing resources through an analysis of the ML capabilities, the E2E ML controller partitions the E2E ML configuration such that a first partition (*e.g.,* at the UE 110) forms a DNN that performs less processing than a DNN formed by a second or third partition (*e.g.,* at the base station, at the core network server). Alternately or additionally, the E2E ML controller partitions the E2E ML configuration to produce neural networks designed to not exceed device capabilities. For example, based on analyzing the capabilities, the E2E ML controller directs the UE to form a DNN with less layers and a smaller kernel size relative to a DNN formed by the base station and/or the core network server based on processing constraints of the UE. Alternately or additionally, the E2E ML controller partitions the E2E ML configuration to form, at the UE) a neural network with an architecture (e.g., a convolutional neural network, a long short-term memory (LSTM) network, partially connected, fully connected) that processes information without exceeding memory constraints of the UE. In some instances, the E2E ML controller calculates whether an amount of computation performed at each device collectively meets a performance requirement corresponding to a latency budget and determines a E2E ML configuration designed to meet the performance requirement.

In the environment 1900, the E2E ML controller 318 determines a first E2E ML configuration for processing information exchanged through the E2E communication 1902 and determines to partition the first E2E ML configuration across multiple devices such as by partitioning the first E2E ML configuration across the UE 110, the base station 120, and the core network server 302 based on device capabilities. In other words, some implementations determine an E2E ML configuration that corresponds to a distributed DNN in which multiple devices implement and/or form portions of the DNN. To communicate the partitioning, the E2E ML controller 318 identifies a first neural network formation configuration (NN formation configuration) that corresponds to a first partition of the E2E ML configuration and communicates, by using the core network server 302, the first NN formation configuration to the UE 110. The E2E ML controller 318 and/or the core network server 302 then directs the UE to form a user equipment-side deep neural network 1908 (UE-side DNN 1908) for processing information exchanged through the E2E communication 1902. Similarly, the E2E ML controller 318 identifies a second NN formation configuration that corresponds to a second partition of the E2E ML configuration and communicates the second NN formation configuration to the base station 120. The E2E ML controller 318 and/or the core network server 302 then directs the base station 120 to form, using the second NN formation configuration, a base station-side deep neural network 1910 (BS-side DNN 1910) for processing information exchanged through the E2E communication 1902. The E2E ML controller 318 also identifies and communicates a third NN formation configuration to the core network server 302 to use in forming a core network server-side deep neural network 1912 (CNS-side DNN 1912) for processing information exchanged through the E2E communication 1902.

In implementations, the E2E ML controller 318 partitions the E2E ML configuration to distribute processing computations performed over the E2E communication such that the UE-side DNN 1908 performs less processing relative to the BS-side DNN 1910 (*e.g.,* a UE-side DNN 1908 that uses less layers, less data processing points, and so forth, relative to the BS-side DNN 1910). Alternately or additionally, the E2E ML controller 318 partitions the E2E ML configuration such that the BS-side DNN 1910 performs less processing relative to CNS-side DNN 1912. In combination, the processing performed by the UE-side DNN 1908, the BS-side DNN 1910, and the CNS-side DNN 1912 exchange information across the E2E communication 1902.

In a similar manner, the E2E ML controller 318 determines a second E2E ML configuration for processing information exchanged through the E2E communication 1904, where the E2E ML controller partitions the second E2E ML configuration across multiple devices. In the environment 1900, this partitioning corresponds to a core network server-side deep neural network 1914 (CNS-side DNN 1914), a base station-side deep neural network 1916 (BS-side DNN 1916), and a user equipment-side deep neural network 1918 (UE-side DNN 1918). In combination, the processing performed by the CNS-side DNN 1914, the BS-side DNN 1916, and the UE-side DNN 1918 corresponds to exchanging information using the E2E communication 1904. While the E2E ML controller determines the first and second E2E ML configurations separately in the environment 1900 for single-directional E2E communications (e.g., the E2E communications 1902 and 1904), it is to be appreciated that in alternate or additional implementations, the E2E ML controller 318 determines a single E2E ML configuration that corresponds to exchanging bi-directional information using an E2E communication. For example, the E2E controller 318 may determine a first (bi-directional) E2E ML configuration for the QoS flow 1810, a second (bi-directional) E2E ML configuration for the QoS flow 1812, and a third (bi-directional) E2E ML configuration for the QoS flow 1814 of FIG. 18.

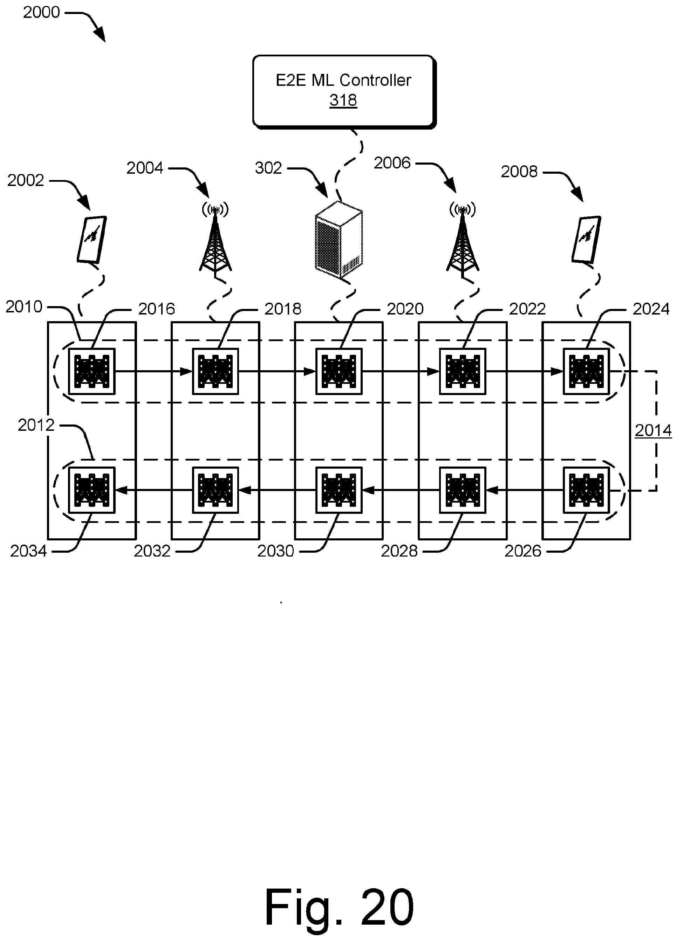

FIG. 20 illustrates another example environment 2000 in which an E2E ML configuration for a E2E communication includes DNNs operating across multiple devices. The environment 2000 includes a first instance of the UE 110 (designated UE 2002), a first instance of the base station 120 of FIG. 1 (designated base station 2004), the core network server 302 of FIG. 3, a second instance of the base station 120 of FIG. 1 (designated base station 2006), and a second instance of the UE 110 (designated UE 2008).

In the environment 2000, the core network server 302 operates in a wireless network that exchanges information between the UE 2002 and the UE 2008 (through the base station 2004 and the base station 2006). E2E communication 2010 represents a single direction E2E communication between a first endpoint (*e*.*g*., UE 2002) and a second endpoint (*e*.*g*., UE 2008) and E2E communication 2012 represents a single-direction E2E communication between the UE 2008 and the UE 2002. However, as signified by dashed line 2014, the E2E communication 2010 and the E2E communication 2012 can collectively represent a bi-directional E2E communication as further described.

Similar to that described with reference to FIG. 19, the E2E ML controller 318 determines a first E2E ML configuration for processing (single-directional) communications exchanged using the E2E communication 2010, a second E2E ML configuration for processing (single-directional) communications exchanged using the E2E communication 2012, and/or an E2E ML communication for processing (bi-directional) communications exchanged using the E2E communication 2010 and the E2E communication 2012. In determining an E2E ML configuration, E2E ML controller 318 analyzes any combination of device capabilities, wireless network resource partitioning, operating parameters, a current operating environment, performance requirements, etc. Alternately or additionally, the E2E ML controller 318 determines partitions to the E2E ML configuration to distribute processing functionality associated with the E2E ML configuration across multiple devices.

To illustrate, for processing information exchanged through the E2E communication 2010, the UE 2002 receives, from the E2E ML controller 318 by way of the core network server 302, a first neural network formation configuration that corresponds to a first partition of the E2E ML configuration and maps to entries in a neural network table that can be used to form a user equipment-side deep neural network 2016 (UE-side DNN 2016). The base station 2004 receives a second neural network formation configuration that corresponds to a second partition of the E2E ML configuration and can be used to form a base station-side deep neural network 2018 (BS-side DNN 2018). In a similar manner, the core network server 302 forms a core network-side deep neural network 2020 (CNS-side DNN 2020) based on a third neural network formation configuration, the base station 2006 forms a base station-side deep neural network 2022 (BS-side DNN 2022) based on a fourth neural network formation configuration, and the UE 2008 forms a user equipment-side deep neural network 2024 (UE-side DNN 2024) based on a fifth neural network formation configuration. Thus, in the environment 2000, the UE-side DNN 2016, the BS-side DNN 2018, the CNS-side DNN 2020, the BS-side DNN 2022, and the UE-side DNN 2024 correspond to a partitioned E2E ML configuration determined by the E2E ML controller 318 and, collectively, perform processing that exchanges information from the UE 2002 to the UE 2008 using the E2E communication 2010.

With respect to the E2E communication 2012, the E2E ML controller 318 determines a partitioned E2E ML configuration and communicates respective portions of the partitioned E2E ML configuration to the devices participating in the E2E communication 2012. For exchanging information using the E2E communication 2012, the UE 2008 forms a user equipment-side deep neural network 2026 (UE-side DNN 2026), the base station 2006 forms a base station-side deep neural network 2028 (BS-side DNN 2028), the core network server 302 forms a core network-side deep neural network 2030 (CNS-side DNN 2030), the base station 2004 forms a base station-side deep neural network 2032 (BS-side DNN 2032), and the UE 2002 forms a user equipment-side deep neural network 2034 (UE-side DNN 2034).

In implementations, the E2E ML controller 318 periodically reassess metrics, performance requirements, wireless link performance, processing capabilities of devices or other aspects affecting, or providing an indication of, a current operating environment and/or a current performance (*e*.*g*., bit errors, BLER) to determine whether to update the E2E ML configuration. For example, the E2E ML controller 318 determines modifications (*e*.*g*., parameter changes) to an existing DNN to better accommodate the performance requirements of devices, applications, and/or transmissions in a wireless network. A UE changing location may impact on the wireless link performance, or a user opening an application at the UE may reduce the processing capability the user equipment can provide for machine learning. By reassessing dynamically changing conditions (*e*.*g*., changes in the operating environment, changes in the devices), the E2E ML controller can modify or update the E2E ML configuration to improve an overall efficiency of how the wireless network resources are utilized.

Having described E2E ML for wireless networks, consider now a discussion of signaling and control transactions over a wireless communication system that can be used in various aspects of E2E ML for wireless networks.

### Signaling and Control Transactions for E2E ML for Wireless Networks

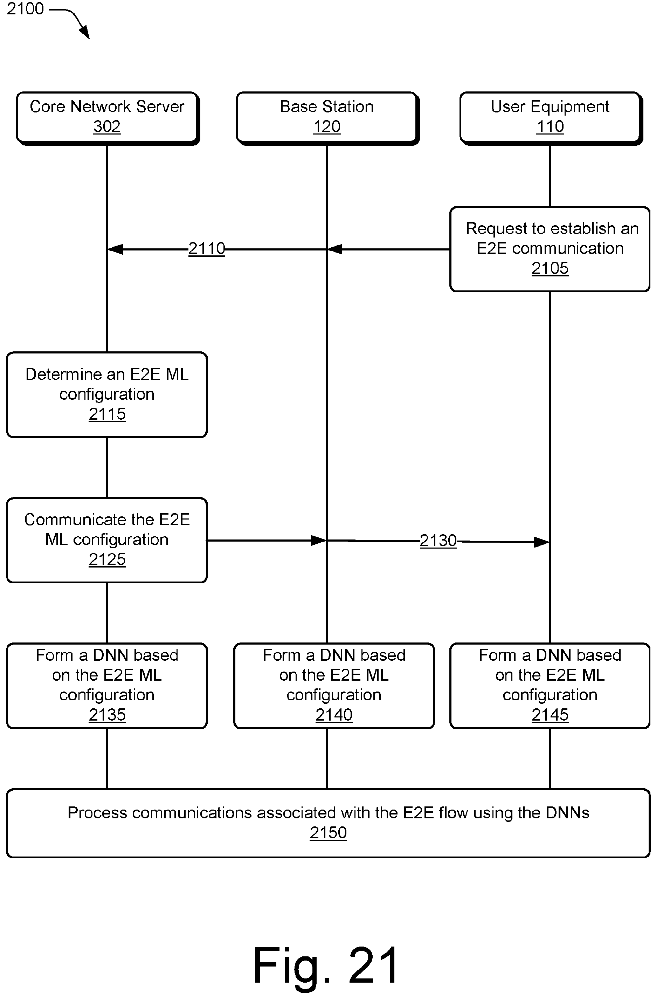

FIGs. 21, 22, 23, and 24 illustrate example signaling and control transaction diagrams between a core network server, a base station, and a user equipment in accordance with one or more aspects of E2E ML for wireless networks. The signaling and control transactions may be performed by the base station 120 and the UE 110 of FIG. 1, or the core network server 302 of FIG. 3, using elements of FIGs. 1-20.

A first example of signaling and control transactions for E2E ML for wireless networks is illustrated by the signaling and control transaction diagram 2100 of FIG. 21. As illustrated, at 2105, the UE 110 requests to establish an E2E communication. For instance, the request implicitly requests to establish the E2E communication by requesting to establish a communication path for an application in response to detecting invocation of the application. Example applications include a virtual reality application, an augmented-reality application, a Voice-over-Internet-Protocol (VoIP) application, a real-time gaming application, a video streaming application, an audio streaming application, a file transfer application (*e*.*g*., photo/image transfer application, portable document format (PEF) file transfer application), a social media application, and other forms of interactive communications. In various implementations, the UE 110 explicitly requests to establish the E2E communication, such as by requesting to establish a QoS flow with performance requirements as further described. Alternately or additionally, the UE 110 requests (implicitly or explicitly) to establish the E2E communication for other types of communications, such as IoT messages and/or communications, vehicle-to-everything (V2X) messages and/or communications, IP Multimedia Core Network Subsystem (IMS) signaling, remote control communications, intelligent transport systems, or discrete automation.

In some implementations, the UE 110 includes a QoS identifier in the request, where the QoS identifier indicates characteristics about the requested E2E communication. To illustrate, the UE 110 includes a fifth-generation Quality-of-Service Identifier (5QI) or a Quality-of-Service Class Identifier (QCI) in the request, where the 5GCI and/or the QCI can be analyzed to determine the QoS requirements, QoS parameters, QoS characteristics, and so forth.

At 2110, the base station 120 relays and/or forwards the request to the core network server. In some cases, the base station 120 generates and sends a new message that encapsulates the request to the core network server 302, while in other cases, the base station 120 relays the request from the UE 110 to the core network server 302.

At 2115, the core network server 302 determines, by way of the E2E ML controller 318, an E2E ML configuration. The E2E ML controller, for instance, analyzes performance requirements of an E2E communication, such as the processing requirements associated with establishing the QoS flow 1810, the QoS flow 1812, the QoS flow 1814, the E2E communication 1902 and/or the E2E communication 1904, the E2E communication 2010 and/or the E2E communication 2012, etc. For instance, the E2E ML controller 318 analyzes a QoS identifier to determine the performance requirements. Alternately or additionally, the E2E ML controller analyzes capabilities of devices participating in the E2E communication, such as that described with reference to FIG. 22. Sometimes, the E2E ML controller analyzes wireless network resource partitioning associated with the E2E communication. As another example, the E2E ML controller 318 analyzes metrics that characterize a current operating environment, as described with reference to FIGs. 9-1, 9-2, or 22, and determines the E2E ML configuration based on the current operating environment. In implementations, the E2E ML configuration corresponds to a single-directional E2E communication, while in other implementations, the E2E communication corresponds to a bi-directional E2E communication.

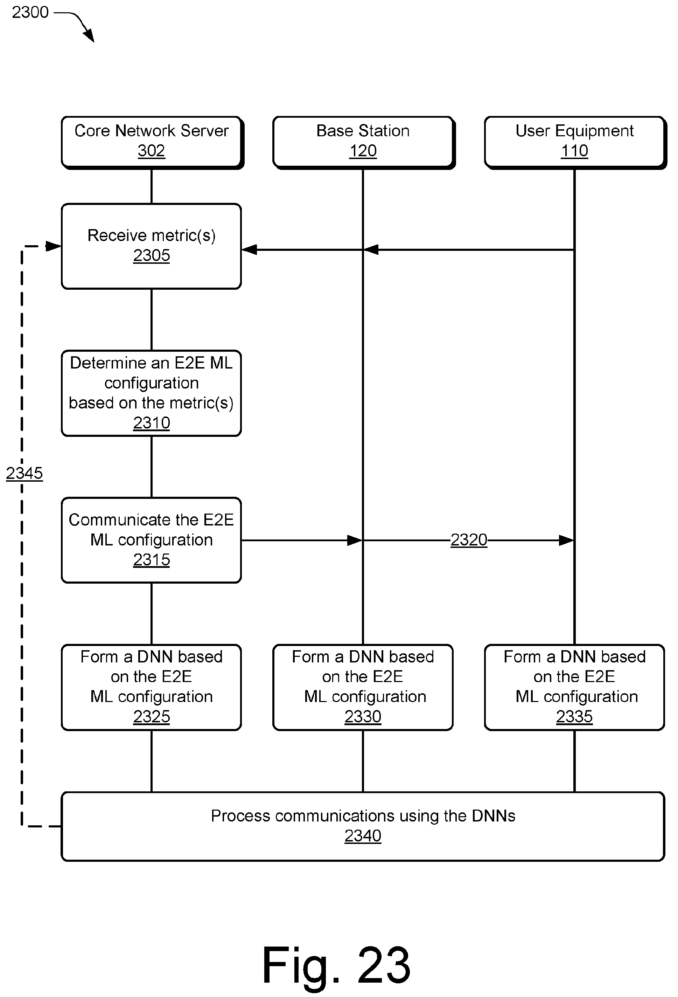

In implementations, determining the E2E ML configuration includes determining any combination architecture and/or parameter configurations that can be used to create an NN formation configuration (*e*.*g*., a combination of one or more NN formation configuration elements) that defines and/or forms a DNN. For example, in some implementations, the E2E ML controller determines a first E2E ML configuration that includes architecture configuration(s) and parameter configuration(s) used to form a DNN. Alternately or additionally, the E2E ML controller subsequently determines a second E2E ML configuration that includes parameter changes (and excludes architecture configurations) used to update the first E2E ML configuration based on a changing operating environment, such as that described with reference to FIGs. 9-1, 9-2, and 23.

In some implementations, the core network server 302, by way of the E2E ML controller 318, analyzes neural network table(s) to obtain one or more neural network formation configurations that correspond to the E2E ML configuration. For instance, the core network server partitions the E2E ML configuration across multiple devices as described with reference to FIGs. 19 and 20 and determines a respective neural network formation configuration for each partition, where each respective neural network formation configuration maps to one or more entries in the neural network table(s).

At 2125, the core network server 302 communicates the E2E ML configuration to devices associated with the E2E communication. To illustrate, the core network server communicates a first neural network formation configuration to a first device (*e.g.,* the base station 120), a second neural network formation configuration to a second device (*e.g.,* the UE 110 by way of the base station 120 at 2130), and so forth. This includes identifying a neural network configuration that corresponds to forming a DNN at the core network server. In some implementations, the core network server 302 communicates the neural network formation configurations similar to that described with reference to FIG. 7.

At 2135, the core network server 302 forms a DNN (*e.g.,* DNN 1912, DNN 1914, DNN 2020, DNN 2030) based on the E2E ML configuration determined at 2115. In implementations, the DNN formed by the core network server performs at least some processing for exchanging information using the E2E communication. Similarly, at 2140, the base station 120 forms a DNN *(e.g.,* DNN 1910, DNN 1916, DNN 2018, DNN 2022, DNN 2028, DNN 2032) based on the E2E ML configuration determined at 2115. For instance, the base station 120 accesses a neural network table to obtain one or more parameters as described with reference to FIG. 12. In implementations, the DNN formed by the base station 120 performs at least some processing for exchanging information using the E2E communication. At 2145, the UE 110 forms a DNN (*e.g.,* DNN 1908, DNN 1918, DNN 2016, DNN 2024, DNN 2026, DNN 2034) based on the E2E ML configuration determined at 2115. For instance, the UE 110 accesses a neural network table to obtain one or more parameters as described with reference to FIG. 12. In implementations, the DNN formed by the UE 110 performs at least some processing for exchanging information using the E2E communication.

Afterwards, at 2150, at least the core network server 302, the base station 120, and the UE 110 process communications using the DNNs, where the communications correspond to information exchanged through the E2E communication. For example, with reference to FIG. 6, the DNNs at the devices process uplink and/or downlink information.

A second example of signaling and control transactions for E2E ML for wireless networks is illustrated by the signaling and control transaction diagram 2200 of FIG. 22. As illustrated, at 2205 the core network server 302 requests machine-learning (ML) capabilities from one or more devices in a wireless network. The E2E ML controller 318, for example, initiates a request for ML capabilities, where the core network server 302 sends the request to the base station 120 through NG2 interface, an S1 interface, etc. In some implementations, the capabilities request explicitly indicates a request for ML capabilities, such as through the inclusion of a field and/or information element in the request. In other implementations the capabilities request implicitly indicates a request for ML capabilities, such as through a capability request without any explicit ML capability fields and/or information elements. Various implementations request, explicitly or implicitly, the ML capabilities as part of constructing an E2E communication, such as through a Non-Access Stratum (NAS) message used to establish the E2E communication and/or a QoS flow.

At 2210, the base station 120 transmits a request for ML capabilities to the UE 110, where the request explicitly or implicitly requests ML capabilities. As one example, the base station 120 relays the ML capabilities request from the core network server 302. As another example, the base station 120 generates and transmits an ML capabilities request message to the UE 110 in response to receiving the ML capabilities request from the core network server 302. In various implementations, the base station 120 transmits an explicit or implicit request for the ML capabilities as part of establishing the E2E communication.

At 2215, the base station 120 sends base station machine-learning capabilities (BS ML capabilities) to the core network server 302. Similarly, at 2220, the UE 110 transmits user equipment machine-learning capabilities (UE ML capabilities) to the base station, where the base station 120 relays the UE ML capabilities to the core network server at 2225. At times, the core network server forwards the BS ML capabilities and/or the UE ML capabilities to the E2E ML controller 318. The BS ML capabilities and/or the UE ML capabilities include any combination of capabilities information, such as supported ML architectures, supported number of layers, available processing power, memory limitations, maximum kernel size, available power budget, computation capability and so forth.

At 2230, the core network server 302 determines, by way of the E2E ML controller 318, an E2E ML configuration. The E2E ML controller, for instance, analyzes performance requirements of an E2E communication, such as the processing requirements of the QoS flow 1810, the QoS flow 1812, the QoS flow 1814, the E2E communication 1902 and/or the E2E communication 1904, the E2E communication 2010 and/or the E2E communication 2012, etc. Alternately or additionally, the E2E ML controller analyzes capabilities of devices participating in the E2E communication, such as the BS ML capabilities received by the core network server at 2215, the UE ML capabilities received by the core network server at 2225, processing capabilities, etc. Sometimes the E2E ML controller analyzes wireless network resource partitioning associated with the E2E communication. As another example, the E2E ML controller 318 analyzes metrics that characterize a current operating environment, as described with reference to FIGs. 9-1 and 9-2 and determines the E2E ML configuration based on the current operating environment. In implementations, the E2E ML configuration corresponds to a single-directional E2E communication, while in other implementations, the E2E communication corresponds to a bi-directional E2E communication.

At times, the core network server 302, by way of the E2E ML controller 318, analyzes neural network table(s) to obtain one or more neural network formation configurations that correspond to the E2E ML configuration. For instance, the core network server partitions the E2E ML configuration across multiple devices as described with reference to FIGs. 18, 19, and 20, and determines a respective neural network formation configuration for each partition, where each respective neural network formation configuration map to entries in the neural network table(s).

At 2235, the core network server 302 communicates the E2E ML configuration to devices associated with the E2E communication. To illustrate, the core network server communicates a first neural network formation configuration to a first device (*e.g.,* the base station 120), a second neural network formation configuration to a second device (*e.g.,* the UE 110 by way of the base station 120 at 2240), and so forth. This includes identifying a neural network configuration that corresponds to forming a DNN at the core network server. In some implementations, the core network server 302 communicates the neural network formation configurations in a manner similar to that described with reference to FIG. 7.

At 2245, the core network server 302 forms a DNN (*e.g.,* DNN 1912, DNN 1914, DNN 2020, DNN 2030) based on the E2E ML configuration determined at 2230. In implementations, the DNN formed by the core network server performs at least some processing that exchanges information using the E2E communication. Similarly, at 2250, the base station 120 forms a DNN (*e.g.,* DNN 1910, DNN 1916, DNN 2018, DNN 2022, DNN 2028, DNN 2032) based on the E2E ML configuration determined at 2230. For instance, the base station 120 accesses a neural network table to obtain one or more parameters as described with reference to FIG. 12. In implementations, the DNN formed by the base station 120 performs at least some processing that exchanges information using the E2E communication. At 2255, the UE 110 forms a DNN (*e.g.,* DNN 1908, DNN 1918, DNN 2016, DNN 2024, DNN 2026, DNN 2034) based on the E2E ML configuration determined at 2230. For instance, the UE 110 accesses a neural network table to obtain one or more parameters as described with reference to FIG. 12. In implementations, the DNN formed by the UE 110 performs at least some processing that exchanges information using the E2E communication.

Afterwards, at 2260, at least the core network server 302, the base station 120, and the UE 110 process communications using the DNNs, where the communications correspond to information exchanged through the E2E communication. For example, with reference to FIG. 6, the DNNs at the devices process uplink and/or downlink information.

A third example of signaling and control transactions for E2E ML for wireless networks is illustrated by the signaling and control transaction diagram 2300 of FIG. 23. In implementations, aspects of the diagram 2300 operate in conjunction with, or a continuation of, the diagram 2100 of FIG. 21 and/or the diagram 2200 of FIG. 22.

As illustrated, at 2305 the core network server 302 receives one or more metrics associated with the wireless network. For example, with reference to FIGs. 9-1 and 9-2, the core network server 302 receives UE metrics from the UE 110 and/or BS metrics from the base station 120 based on communications in the wireless network, such as uplink received power, uplink SINR, uplink packet errors, uplink throughput, timing measurements, power information, SINR information, CQI, CSI, Doppler feedback, QoS, latency, etc. This can include metrics generated based on the information exchanged through the E2E communication and/or metrics associated with information exchanged through other communication paths. In implementations, the UE 110, the base station 120, and the core network server 302 participate in a same E2E communication to exchange information from a first endpoint to a second endpoint of the E2E communication, such as the QoS flow 1810, the QoS flow 1812, the QoS flow 1814, the E2E communication 1902 and/or the E2E communication 1904, the E2E communication 2012 and/or the E2E communication 2012, etc.

At 2310, the core network server 302, by way of the E2E ML controller 318, determines an E2E ML configuration based on the metric(s). To illustrate, with reference to FIGs. 9-1 and 9-2, some implementations identify changes in a current operating environment, and determine to update DNNs used to process information exchanged through the E2E communication, such as by determining parameter changes applied to a DNN architecture. Alternately or additionally, some implementations determine an initial E2E ML configuration that is used to establish the E2E communication. As further described, determining the E2E ML configuration includes, at times, determining a partitioned E2E ML configuration in which different devices form and use respective DNNs to process the information exchanged through the E2E communication, such as by determining respective neural network formation configurations for each respective device participating in the E2E communication.

Determining the E2E ML configuration may include identifying any combination of architectural configurations and/or parameter configurations/changes to the E2E ML configuration. The determined E2E ML configuration can correspond to a small change to a current E2E ML configuration, where the small change updates the parameters (*e*.*g*., coefficients, weights, filters) applied to an architecture configuration of a DNN. For instance, the small changes update the DNN to address changes in the operating environment identified by analyzing the metrics received at 2305 (*e.g.,* SINR changes, Doppler feedback changes, power level changes, BLER changes). Alternately or additionally, the determined E2E ML configuration corresponds to a large change that modifies a ML architecture of the DNN by reconfiguring node and/or layer connections based on analyzing the metrics received at 2305, such as a change in a power state (*e.g.,* a transition from a radio resource connected state to idle state).

At 2315, the core network server communicates the E2E ML configuration. To illustrate, the core network server communicates a partitioned E2E ML configuration by communicating a first neural network formation configuration to a first device (*e.g.,* the base station 120), a second neural network formation configuration to a second device (*e.g.,* the UE 110 by way of the base station 120 at 2320), and so forth. At times, the core network server identifies a third neural network configuration that corresponds to forming a DNN at the core network server. In some implementations, the core network server 302 communicates respective neural network formation configurations that correspond to portions of the E2E ML configuration, such as by communicating index value(s) that map into entries of a neural network table as described with reference to FIG. 7.

At 2325, the core network server 302 forms a DNN (*e.g.,* DNN 1912, DNN 1914, DNN 2020, DNN 2030) based on the E2E ML configuration determined at 2315. For instance, with reference to FIG. 12, the core network server accesses a neural network table to obtain parameters that form the DNN. In forming the DNN, the core network server 302 forms a new DNN as part of establishing the E2E communication and/or updates an existing DNN used to exchange information using the E2E communication. In implementations, the DNN formed by the core network server corresponds to a portion of the E2E ML configuration as further described.

Similarly, at 2330, the base station 120 forms a DNN (*e.g.,* DNN 1910, DNN 1916, DNN 2018, DNN 2022, DNN 2028, DNN 2032) based on the E2E ML configuration determined at 2315. For instance, with reference to FIG. 12, the base station 120 accesses a neural network table to obtain parameters that form the DNN. In forming the DNN, the base station forms a new DNN as part of establishing the E2E communication and/or updates an existing DNN used to exchange information using the E2E communication. In implementations, the DNN formed by the base station 120 corresponds to a portion of the E2E ML configuration as further described.

At 2335, the UE 110 forms a DNN (*e.g.,* DNN 1908, DNN 1918, DNN 2016, DNN 2024, DNN 2026, DNN 2034) based on the E2E ML configuration determined at 2310. For instance, with reference to FIG. 12, the UE 110 accesses a neural network table to obtain parameters that form the DNN. In forming the DNN, the UE 110 forms a new DNN as part of establishing the E2E communication and/or updates an existing DNN used to exchange information using the E2E communication. In implementations, the DNN formed by the UE 110 corresponds to a portion of the E2E ML configuration as further described.

Afterwards, at 2340, at least the core network server 302, the base station 120, and the UE 110 process communications using the DNNs, where the communications correspond to information exchanged through the E2E communication. For example, with reference to FIG. 6, the DNNs at the devices process uplink and/or downlink information. Alternately or additionally, the DNN's at the devices process information exchanged through a QoS flow (*e.g.,* FIG. 18).

In implementations, the core network server 302, base station 120 and/or the UE 110 iteratively perform the signaling and control transactions described in the signaling and control transaction diagram 2300, signified in FIG. 23 with dashed line 2345. These iterations allow the core network server 302, base station 120 and/or the UE 110 to dynamically modify DNNs used to process information exchanged through an E2E communication based upon changing operating conditions as further described.

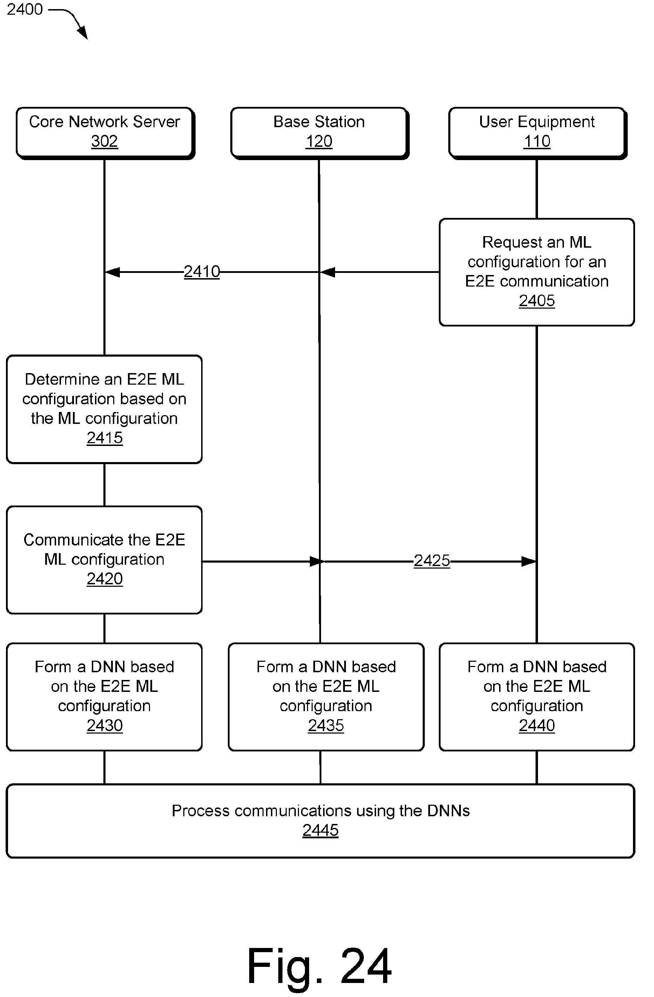

A fourth example of signaling and control transactions for E2E ML for wireless networks is illustrated by the signaling and control transaction diagram 2400 of FIG. 24. In implementations, aspects of the diagram 2400 operate in conjunction with, and/or as a continuation of, the diagram 2100 of FIG. 21, the diagram 2200 of FIG. 22, and/or the diagram 2300 of FIG. 23.

As illustrated, at 2405, the UE 110 transmits a request for a machine-learning configuration (ML configuration) to the core network server 302, by way of the base station 120 at 2410. To illustrate, the UE 110 transmits a request to the base station 120, where the requests indicates a specific ML configuration, such as a specific neural network formation configuration, and the base station 120 relays or forwards the request to the core network server 302. In response to detecting invocation of an application, the UE 110 sometimes determines performance requirements associated with the application and identifies a ML configuration designed to satisfy the performance requirements (*e*.*g*., by analyzing a neural network table as described with reference to FIG. 12). The UE 110 then requests the ML configuration, such as by sending an indication of the ML configuration in a NAS message used to establish the E2E communication. In various implementations, the E2E communication corresponds to a QoS flow (*e.g.,* QoS flow 1810, QoS flow 1812, QoS flow 1814). In some implementations, the UE 110 includes a QoS identifier in the request, such as a 5QI or QCI.

At 2415, the core network server 302, by way of the E2E ML controller 318, determines an E2E ML configuration based on the ML configuration requested by the UE 110. For instance, the E2E ML controller 318 analyzes any combination of ML capabilities, a current operating environment, wireless network resource partitioning, performance requirements, and so forth, to determine the E2E ML configuration. In some implementations, the E2E ML controller partitions the E2E ML configuration based on the ML configuration requested by the UE 110 such that at least one partition of the E2E ML configuration corresponds to the ML configuration requested by the UE.

At 2420, the core network server 302 communicates the E2E ML configuration, such as by communicating a first neural network formation configuration to a first device (*e.g.,* the base station 120), a second neural network formation configuration to a second device (*e.g.,* the UE 110 by way of the base station 120 at 2425), and so forth. In communicating the E2E ML configuration, the core network server 302 sometimes indicates, to the UE 110, to use the ML configuration requested at 2405. At times, the core network server identifies a third neural network configuration that corresponds to forming a DNN at the core network server 302. As one example, the core network server 302 communicates respective neural network formation configurations that correspond to portions of the E2E ML configuration, such as by communicating index value(s) that map into entries of a neural network table as described with reference to FIG. 7.

At 2430, the core network server 302 forms a DNN (*e.g.,* DNN 1912, DNN 1914, DNN 2020, DNN 2030) based on the E2E ML configuration determined at 2415. For instance, with reference to FIG. 12, the core network server accesses a neural network table to obtain parameters that form the DNN. In forming the DNN, the core network server 302 forms a new DNN as part of establishing the E2E communication and/or updates an existing DNN used to exchange information using the E2E communication. In implementations, the DNN formed by the core network server corresponds to a portion of the E2E ML configuration as further described.

Similarly, at 2435, the base station 120 forms a DNN (*e.g.,* DNN 1910, DNN 1916, DNN 2018, DNN 2022, DNN 2028, DNN 2032) based on the E2E ML configuration determined at 2315. For instance, with reference to FIG. 12, the base station 120 accesses a neural network table to obtain parameters that form the DNN. In forming the DNN, the base station forms a new DNN as part of establishing the E2E communication and/or updates an existing DNN used to exchange information using the E2E communication. In implementations, the DNN formed by the base station 120 corresponds to a portion of the E2E ML configuration as further described.

At 2440, the UE 110 forms a DNN (*e.g.,* DNN 1908, DNN 1918, DNN 2016, DNN 2024, DNN 2026, DNN 2034) based on the E2E ML configuration determined at 2415 and/or the ML configuration requested at 2405. For instance, with reference to FIG. 12, the UE 110 accesses a neural network table to obtain parameters that form the DNN. In forming the DNN, the UE 110 forms a new DNN as part of establishing the E2E communication and/or updates an existing DNN used to exchange information using the E2E communication. In implementations, the DNN formed by the UE 110 corresponds to a portion of the E2E ML configuration as further described.

Afterwards, at 2445, at least the core network server 302, the base station 120, and the UE 110 process communications using the DNNs, where the communications correspond to information exchanged through the E2E communication. For example, with reference to FIG. 6, the DNNs at the devices process uplink and/or downlink information. Alternately or additionally, the DNN's at the devices process information exchanged through a QoS flow (*e.g.,* FIG. 18).

Having described signaling and control transactions that can be used to E2E ML for wireless networks, consider now some example methods that can be used to E2E ML for wireless networks that are in accordance with one or more implementations.

### Example Methods

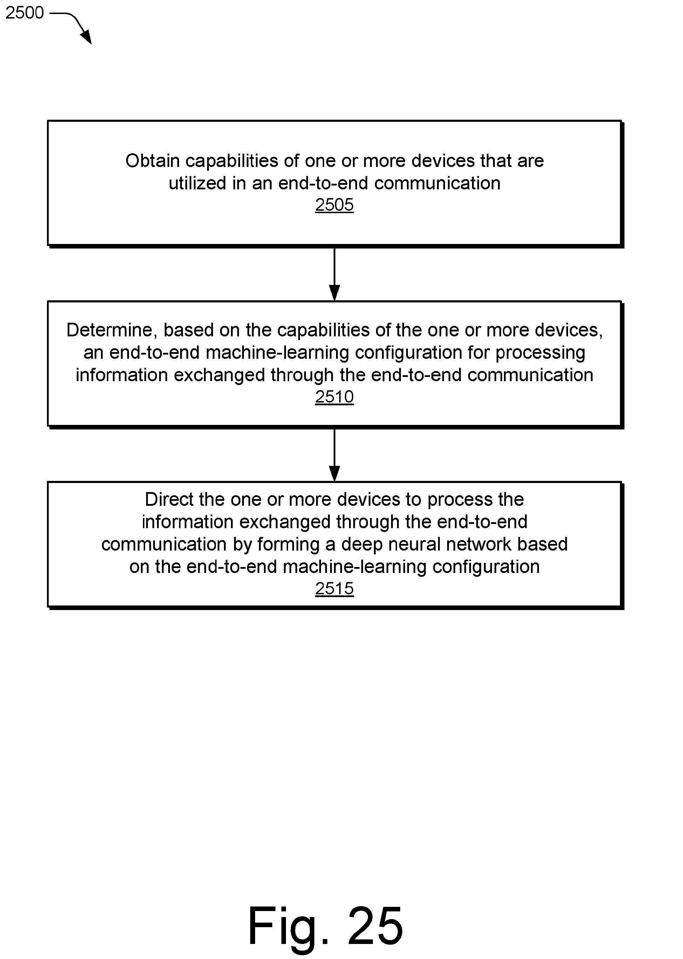

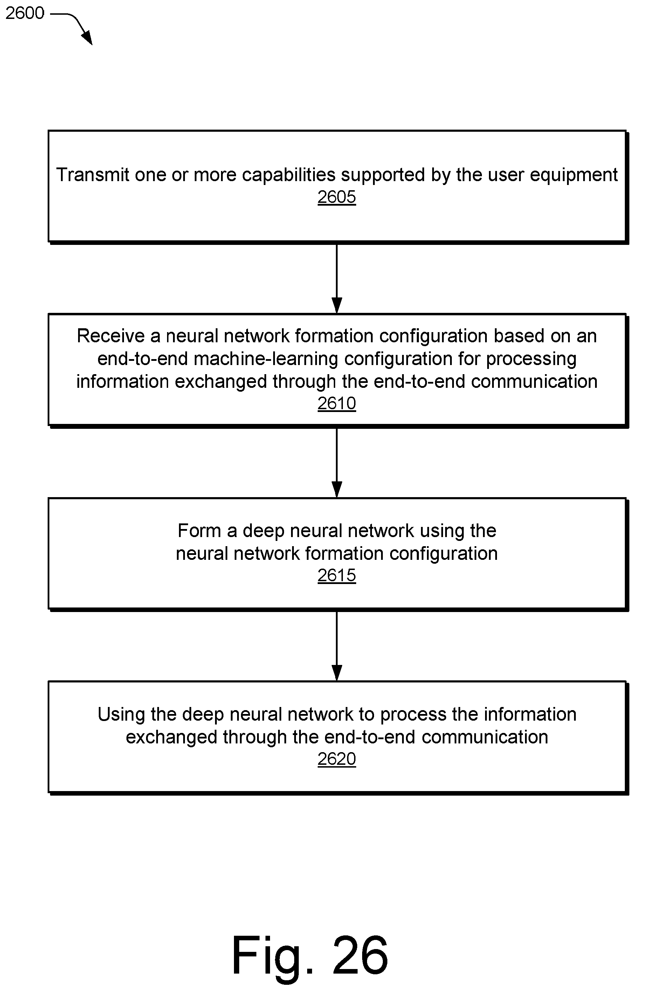

Example methods 2500 and 2600 are described with reference to FIG. 25 and FIG. 26 in accordance with one or more aspects of communicating neural network formation configurations. The order in which the method blocks are described are not intended to be construed as a limitation, and any number of the described method blocks can be skipped or combined in any order to implement a method or an alternate method. Generally, any of the components, modules, methods, and operations described herein can be implemented using software, firmware, hardware (*e*.*g*., fixed logic circuitry), manual processing, or any combination thereof. Some operations of the example methods may be described in the general context of executable instructions stored on computer-readable storage memory that is local and/or remote to a computer processing system, and implementations can include software applications, programs, functions, and the like. Alternatively, or additionally, any of the functionality described herein can be performed, at least in part, by one or more hardware logic components, such as, and without limitation, Field-programmable Gate Arrays (FPGAs), Application-specific Integrated Circuits (ASICs), Application-specific Standard Products (ASSPs), System-on-a-chip systems (SoCs), Complex Programmable Logic Devices (CPLDs), and the like.

FIG. 25 illustrates an example method 2500 used for E2E ML for wireless networks. In some implementations, operations of the method 2500 are performed by an E2E ML controller, such as E2E ML controller 318 implemented by the core network server 302.

At 2505, an E2E ML controller obtains capabilities of at least two devices that are utilized in an end-to end communication. For example, an E2E ML controller implemented at a core network server (*e*.*g*., E2E ML controller 318, core network server 302) obtains ML capabilities from a base station (*e.g.,* base station 120) and/or a UE (*e.g.,* UE 110). The ML capabilities can include any combination of ML-specific capabilities and/or processing capabilities, such as supported ML architectures, supported number of layers, available processing power, memory limitations, available power budget, fixed-point processing vs. floating point processing, maximum kernel size, computation capability, etc. In some implementations, the E2E ML controller receives the capabilities in response to sending a request for the capabilities from the devices, such as that described at 2205 of FIG. 22.

At 2510, the E2E ML controller determines, based on the capabilities of the at least two devices, an E2E ML configuration for processing information exchanged through the end-to-end communication. For example, the E2E ML controller implemented at a core network server (*e*.*g*., E2E ML controller 318, core network server 302) analyzes the ML capabilities from the base station (*e.g.,* base station 120) and/or the UE (*e.g.,* UE 110) to determine the E2E ML configuration, such as that described at 2115 of FIG. 21, at 2230 of FIG. 22, at 2310 of FIG. 23, and at 2415 of FIG. 24. In some implementations, the E2E ML controller receives metric(s) and analyzes current operating conditions to determine the E2E ML configuration.

At times, the E2E ML controller receives a QoS profile and analyzes QoS requirements, QoS parameters, and/or QoS characteristics, and so forth, to determine the E2E ML configuration. Alternately or additionally, the E2E ML controller identifies one or more partitions to the E2E ML configuration to distribute functionality and/or processing associated with the E2E ML configuration across to the one or more devices *(e.g.,* the core network server 302, the base station 120, the UE 110). For instance, the E2E ML controller analyzes a neural network table, and determines a first neural network formation configuration corresponding to a first partition of the E2E ML configuration, a second neural network formation configuration corresponding to a second partition of the E2E ML configuration, etc.

In some implementations, the E2E ML controller determines a distributed ML configuration that forms a distributed DNN. For example, the E2E ML controller determines first NN formation configuration that corresponds to a first partition of the distributed DNN, a second NN formation configuration that corresponds to a second partition of the distributed DNN, etc., where respective devices implement and/or form the respective portions of the distributed DNN.

At 2515, the E2E ML controller directs the at least two devices to process the information exchanged through the end-to-end communication by forming a deep neural network based on the end-to-end machine-learning configuration. For instance, the E2E ML controller (*e.g.,* E2E ML controller 318) by way of the core network server (*e.g.,* core network server 302) transmits a respective neural network formation configuration to a respective device as described at 2125 of FIG. 21, at 2235 of FIG. 22, at 2315 of FIG. 23, and at 2420 of FIG. 24. In implementations, the DNN corresponds to a distributed DNN.

FIG. 26 illustrates an example method 2600 used for E2E ML for wireless networks. In some implementations, operations of the method 2600 are performed by a UE, such as the UE 110 of FIG. 1.

At 2605, a UE transmits one or more capabilities supported by the UE. In one example, the UE (*e.g.,* UE 110) transmits one or more ML capabilities to a core network server (*e.g.,* core network server 302) through a base station (*e.g.,* base station 120) and in response to receiving a request for ML capabilities, such as that described at 2205 and at 2220 of FIG. 22. Alternately or additionally, the UE transmits processing capabilities as further described. In another example, the UE (*e.g.,* UE 110) transmits one or more ML capabilities in response to detecting the invocation of an application For instance, in response to detecting invocation of the application, the UE 110 sends a request to establish an E2E connection for the application, and includes the one or more ML capabilities in the request.

At 2610, the UE receives a neural network formation configuration based on an E2E ML configuration for processing information exchanged through the end-to-end communication. For example, the UE (*e.g.,* UE 110) receives a neural network formation configuration from the core network server and through the base station (*e*.*g*., core network server 302, base station 120) that corresponds to a portion of the E2E ML configuration, such as that described at 2125 of FIG. 21, at 2235 of FIG. 22, at 2315 of FIG. 23, and at 2420 of FIG. 24.

The UE forms a deep neural network using the neural network formation configuration at 2615. For example, as described at 2145 of FIG. 21, at 2255 of FIG. 22, at 2335 of FIG. 23, and at 2440 of FIG. 24, the UE (*e.g.,* UE 110) forms a DNN, such as by accessing a neural network table to obtain parameters and/or an architecture configuration. In response to forming the DNN, at 2620, the UE uses the DNN to process the information exchanged through the E2E communication, such as that described at 2150 of FIG. 21, at 2260 of FIG. 22, at 2340 of FIG. 23, and at 2445 of FIG. 24.

The order in which the method blocks of FIGs. 25 and 26 are described are not intended to be construed as a limitation, and any number of the described method blocks can be combined in any order to implement a method or an alternate method.

Generally, any of the components, modules, methods, and operations described herein can be implemented using software, firmware, hardware (*e*.*g*., fixed logic circuitry), manual processing, or any combination thereof. Some operations of the example methods may be described in the general context of executable instructions stored on computer-readable storage memory that is local and/or remote to a computer processing system, and implementations can include software applications, programs, functions, and the like. Alternatively or in addition, any of the functionality described herein can be performed, at least in part, by one or more hardware logic components, such as, and without limitation, Field-programmable Gate Arrays (FPGAs), Application-specific Integrated Circuits (ASICs), Application-specific Standard Products (ASSPs), System-on-a-chip systems (SoCs), Complex Programmable Logic Devices (CPLDs), and the like.

Although techniques and devices for E2E ML for wireless networks have been described in language specific to features and/or methods, it is to be understood that the subject of the appended claims is not necessarily limited to the specific features or methods described. Rather, the specific features and methods are disclosed as example implementations of E2E ML for wireless networks.

## Claims

1. A method (2500) performed by an end-to-end machine-learning controller (318) in a wireless communications network, the method comprising:
obtaining (2505), by the end-to-end machine-learning controller (318), machine-learning capabilities of at least two devices involved in an end-to-end communication;
determining (2510), based on the machine-learning capabilities of the at least two devices (110, 120), an end-to-end machine-learning configuration to process information exchanged through the end-to-end communication; and
directing (2515) the at least two devices (110, 120) to process the information exchanged through the end-to-end communication by forming a deep neural network based on the end-to-end machine-learning configuration.

2. The method (2500) of claim 1, wherein determining (2510) the end-to-end machine-learning configuration further comprises:
partitioning the end-to-end machine-learning configuration across the at least two devices (110, 120) by:
determining a first neural network formation configuration that corresponds to a first portion of the end-to-end machine-learning configuration based on machine-learning capabilities of a first device (110) of the at least two devices (110, 120); and
determining a second neural network formation configuration that corresponds to a second portion of the end-to-end machine-learning configuration based on machine-learning capabilities of a second device (120) of the at least two devices (110, 120),
wherein the machine-learning capabilities of the first device (110) include available processing power of the first device (110), and
wherein the machine-learning capabilities of the second device (120) include available processing power of the second device (120).

3. The method (2500) as recited in claim 1 or claim 2, wherein the end-to-end machine-learning configuration is a first end-to-end machine-learning configuration and the method further comprises:
obtaining one or more metrics that indicate a current operating environment for the end-to-end communication;
identifying (830) a second end-to-end machine-learning configuration based on at least the one or more metrics that indicate the current operating environment; and
directing (840) the at least two devices (110, 120) to update the one or more deep neural networks based on the second end-to-end machine-learning configuration.

4. The method (2500) as recited in any one of claims 1 to 3, wherein determining (2510) the end-to-end machine-learning configuration comprises:
determining, as a first portion of the end-to-end machine-learning configuration, a first neural network formation configuration for a user equipment-side deep neural network (1918);
determining, as a second portion of the end-to-end machine-learning configuration, a second neural network formation configuration for a base station-side deep neural network (1916); and
determining, as a third portion of the end-to-end machine-learning configuration, a third neural network formation configuration for a core network server-side deep neural network (1914).

5. The method (2500) as recited in any one of claims 1 to 4, wherein the determining (2510) the end-to-end machine-learning configuration further comprises:
obtaining at least one quality-of-service parameter or quality-of-service characteristic associated with the end-to-end communication; and
determining the end-to-end machine-learning configuration based, at least in part, on the at least one quality-of-service parameter or quality-of-service characteristic.

6. The method (2500) as recited in claim 5, wherein the at least one quality-of-service parameter or quality-of-service characteristic comprises at least one of:
a priority level;
a packet delay budget;
a packet error rate;
a maximum data burst volume; or
an averaging window.

7. The method (2500) as recited in any one of claims 1 to 6, wherein the end-to-end machine-learning configuration is a first end-to-end machine-learning configuration, the end-to-end communication is a first quality-of-service flow, the deep neural network is a first deep neural network, and the method further comprises:
determining to establish a second quality-of-service flow between the at least two devices (110, 120);
determining a second end-to-end machine-learning configuration to process information exchanged through the second quality-of-service flow; and
directing the at least two devices (110, 120) to process the information exchanged through the second quality-of- service flow by forming a second deep neural network based on the second end-to-end machine-learning configuration.

8. The method (2500) as recited in any of claims 1 to 7, wherein end-to-end communication is associated with exchanging information associated with one of:
an augmented reality application;
a virtual reality application;
an audio streaming application;
a real-time gaming application;
a video streaming application;
a Voice-over-Internet-Protocol application;
a social media application;
a file transfer;
a vehicle-to-everything communication;
an Internet-of-things communication;
automation; or
remote control.

9. The method (2500) as recited in any one of claims 1 to 8, wherein the at least two devices (110, 120) include a user equipment (110), and
wherein the determining (2510) the end-to-end machine-learning configuration further comprises:
receiving, from the user equipment (110) a request for a specific neural network formation configuration; and
determining the end-to-end machine-learning configuration based on the specific neural network formation configuration.

10. The method (2500) as recited in any one of claims 1 to 9, wherein the determining (2510) the end-to-end machine-learning configuration comprises either:
determining, as the end-to-end machine-learning configuration, an architecture configuration and one or more parameter configurations that define a deep neural network; or
analyzing one or more metrics of a current operating environment; and determining, as the end-to-end machine-learning configuration and based, in part, on the one or more metrics, one or more parameter configurations that define an update to a deep neural network.

11. A method (2600) performed by a user equipment (110), the method comprising:
transmitting (2605) one or more machine-learning capabilities supported by the user equipment (110);
receiving (2610) a neural network formation configuration based on an end-to-end machine-learning configuration determined based on the machine-learning capabilities to process information exchanged through an end-to-end communication;
forming (2615) a deep neural network using the neural network formation configuration; and
using (2620) the deep neural network to process the information exchanged through the end-to-end communication.

12. The method (2600) as recited in claim 11, wherein the transmitting (2605) the one or more machine-learning capabilities supported by the user equipment (110) comprises transmitting at least one of:
a maximum kernel size capability;
a memory limitation; or
a computation capability.

13. The method (2600) as recited in claim 11 or claim 12, wherein the end-to-end communication is a first quality-of-service flow associated with interactive communications, the neural network formation configuration is a first neural network formation configuration, the deep neural network is a first deep neural network, the information exchanged through the end-to-end communication comprises information associated with the interactive communications, and the method further comprises:
transmitting a request to establish a second quality-of-service flow,
receiving a second neural network formation configuration to process information exchanged through the second quality-of-service flow;
forming a second deep neural network based on the second neural network formation configuration; and
using the second deep neural network for the processing information exchanged through the second quality-of-service flow.

14. A network entity (120) comprising:
a processor (260); and
computer-readable storage media (262) comprising instructions that implement an end-to-end machine-learning controller (318) to perform any one of the methods of claims 1 to 10.

15. A user equipment (110) comprising:
a processor (210); and
computer-readable storage media (212) comprising instructions, responsive to execution by the processor (210), for directing the user equipment (110) to perform one of the methods of claims 11 to 13.

## Patentansprüche

1. Verfahren (2500), das von einer End-zu-End-Maschinenlernsteuerung (318) in einem drahtlosen Kommunikationsnetzwerk durchgeführt wird, wobei das Verfahren Folgendes umfasst:
Erlangen (2505) von Maschinenlernfähigkeiten von mindestens zwei Vorrichtungen, die an einer End-zu-End-Kommunikation beteiligt sind, durch die End-zu-End-Maschinenlernsteuerung (318);
Bestimmen (2510), basierend auf den Maschinenlernfähigkeiten der mindestens zwei Vorrichtungen (110, 120), einer End-zu-End-Maschinenlernkonfiguration, um Informationen zu verarbeiten, die durch die End-zu-End-Kommunikation ausgetauscht werden; und
Anleiten (2515) der mindestens zwei Vorrichtungen (110, 120) zum Verarbeiten der Informationen, die durch die End-zu-End-Kommunikation ausgetauscht werden, durch Bilden eines tiefen neuronalen Netzes basierend auf der End-zu-End-Maschinenlernkonfiguration.

2. Verfahren (2500) gemäß Anspruch 1, wobei das Bestimmen (2510) der End-zu-End-Maschinenlernkonfiguration ferner Folgendes umfasst:
Partitionieren der End-zu-End-Maschinenlernkonfiguration über die mindestens zwei Vorrichtungen (110, 120) durch:
Bestimmen einer ersten neuronalen Netzbildungskonfiguration, die einem ersten Abschnitt der End-zu-End-Maschinenlernkonfiguration entspricht, basierend auf Maschinenlernfähigkeiten einer ersten Vorrichtung (110) der mindestens zwei Vorrichtungen (110, 120); und
Bestimmen einer zweiten neuronalen Netzbildungskonfiguration, die einem zweiten Abschnitt der End-zu-End-Maschinenlernkonfiguration entspricht, basierend auf Maschinenlernfähigkeiten einer zweiten Vorrichtung (120) der mindestens zwei Vorrichtungen (110, 120),
wobei die Maschinenlernfähigkeiten der ersten Vorrichtung (110) verfügbare Verarbeitungsleistung der ersten Vorrichtung (110) beinhalten, und
wobei die Maschinenlernfähigkeiten der zweiten Vorrichtung (120) verfügbare Verarbeitungsleistung der zweiten Vorrichtung (120) beinhalten.

3. Verfahren (2500) gemäß Anspruch 1 oder Anspruch 2, wobei die End-zu-End-Maschinenlernkonfiguration eine erste End-zu-End-Maschinenlernkonfiguration ist und das Verfahren ferner Folgendes umfasst:
Erlangen einer oder mehrerer Metriken, die eine aktuelle Betriebsumgebung für die End-zu-End-Kommunikation angeben;
Identifizieren (830) einer zweiten End-zu-End-Maschinenlernkonfiguration basierend auf mindestens der einen oder den mehreren Metriken, die die aktuelle Betriebsumgebung angeben; und
Anleiten (840) der mindestens zwei Vorrichtungen (110, 120) zum Aktualisieren des einen oder der mehreren tiefen neuronalen Netze basierend auf der zweiten End-zu-End-Maschinenlernkonfiguration.

4. Verfahren (2500) gemäß einem der Ansprüche 1 bis 3, wobei das Bestimmen (2510) der End-zu-End-Maschinenlernkonfiguration Folgendes umfasst:
Bestimmen, als einen ersten Teil der End-zu-End-Maschinenlernkonfiguration, einer ersten neuronalen Netzbildungskonfiguration für ein benutzergeräteseitiges tiefes neuronales Netzwerk (1918);
Bestimmen, als einen zweiten Teil der End-zu-End-Maschinenlernkonfiguration, einer zweiten neuronalen Netzbildungskonfiguration für ein basisstationsseitiges tiefes neuronales Netzwerk (1916); und
Bestimmen, als einen dritten Teil der End-zu-End-Maschinenlernkonfiguration, einer dritten neuronalen Netzbildungskonfiguration für ein kernnetzwerkserverseitiges tiefes neuronales Netz (1914).

5. Verfahren (2500) gemäß einem der Ansprüche 1 bis 4, wobei das Bestimmen (2510) der End-zu-End-Maschinenlernkonfiguration ferner Folgendes umfasst:
Erlangen mindestens eines Dienstgüteparameters oder einer Dienstgüteeigenschaft, der/die der End-zu-End-Kommunikation zugeordnet ist; und
Bestimmen der End-zu-End-Maschinenlernkonfiguration, mindestens teilweise basierend auf dem/der mindestens einen Dienstgüteparameter oder Dienstgüteeigenschaft.

6. Verfahren (2500) gemäß Anspruch 5, wobei der bzw. die mindestens eine Dienstgüteparameter oder Dienstgüteeigenschaft mindestens eines der Folgenden umfasst:
eine Prioritätsstufe;
ein Paketverzögerungsbudget;
eine Paketfehlerrate;
ein maximales Datenburst-Volumen; oder
ein Mittelungsfenster.

7. Verfahren (2500) gemäß einem der Ansprüche 1 bis 6, wobei die End-zu-End-Maschinenlernkonfiguration eine erste End-zu-End-Maschinenlernkonfiguration ist, die End-zu-End-Kommunikation ein erster Dienstgüte-Fluss ist, das tiefe neuronale Netz ein erstes tiefes neuronales Netz ist, und das Verfahren ferner Folgendes umfasst:
Bestimmen, einen zweiten Dienstgüte-Fluss zwischen den mindestens zwei Vorrichtungen (110, 120) einzurichten;
Bestimmen einer zweiten End-zu-End-Maschinenlernkonfiguration, um Informationen zu verarbeiten, die durch den zweiten Dienstgüte-Fluss ausgetauscht werden; und
Anleiten der mindestens zwei Vorrichtungen (110, 120) zum Verarbeiten der durch den zweiten Dienstgüte-Fluss ausgetauschten Informationen durch Bilden eines zweiten tiefen neuronalen Netzes basierend auf der zweiten End-zu-End-Maschinenlernkonfiguration.

8. Verfahren (2500) gemäß einem der Ansprüche 1 bis 7, wobei die End-zu-End-Kommunikation dem Austausch von Informationen zugeordnet ist, die einem der folgenden zugeordnet sind:
einer Augmented-Reality-Anwendung;
einer Virtual-Reality-Anwendung;
einer Audio-Streaming-Anwendung;
einer Echtzeit-Gaming-Anwendung;
einer Video-Streaming-Anwendung;
einer Voice-over-Internet-Protokoll-Anwendung;
einer Social-Media-Anwendung;
einem Dateitransfer;
einer Fahrzeug-zu-Alles-Kommunikation;
einer Internet-of-Things-Kommunikation;
Automatisierung; oder
Fernbedienung.

9. Verfahren (2500) gemäß einem der Ansprüche 1 bis 8, wobei die mindestens zwei Vorrichtungen (110, 120) ein Benutzergerät (110) beinhalten, und
wobei das Bestimmen (2510) der End-zu-End-Maschinenlernkonfiguration ferner Folgendes umfasst:
Empfangen einer Anforderung für eine spezifische neuronale Netzbildungskonfiguration von dem Benutzergerät (110); und
Bestimmen der End-zu-End-Maschinenlernkonfiguration basierend auf der spezifischen neuronalen Netzbildungskonfiguration.

10. Verfahren (2500) gemäß einem der Ansprüche 1 bis 9, wobei das Bestimmen (2510) der End-zu-End-Maschinenlernkonfiguration eines der Folgendes umfasst:
Bestimmen einer Architekturkonfiguration und einer oder mehrerer Parameterkonfigurationen, die ein tiefes neuronales Netz definieren, als End-zu-End-Maschinenlernkonfiguration; oder
Analysieren einer oder mehrerer Metriken einer aktuellen Betriebsumgebung; und Bestimmen einer oder mehrerer Parameterkonfigurationen, die eine Aktualisierung eines tiefen neuronalen Netzes definieren, als die End-zu-End-Maschinenlernkonfiguration und teilweise basierend auf der einen oder den mehreren Metriken.

11. Verfahren (2600), das von einem Benutzergerät (110) durchgeführt wird, wobei das Verfahren Folgendes umfasst:
Übertragen (2605) einer oder mehrerer Maschinenlernfähigkeiten, die von dem Benutzergerät (110) unterstützt werden;
Empfangen (2610) einer neuronalen Netzbildungskonfiguration basierend auf einer End-zu-End-Maschinenlernkonfiguration, die basierend auf den Maschinenlernfähigkeiten bestimmt wurde, um Informationen zu verarbeiten, die durch eine End-zu-End-Kommunikation ausgetauscht werden;
Bilden (2615) eines tiefen neuronalen Netzes unter Verwendung der neuronalen Netzbildungskonfiguration; und
Verwenden (2620) des tiefen neuronalen Netzes zum Verarbeiten der Informationen, die durch die End-zu-End-Kommunikation ausgetauscht werden.

12. Verfahren (2600) gemäß Anspruch 11, wobei das Senden (2605) der einen oder mehreren Maschinenlernfähigkeiten, die von dm Benutzergerät (110) unterstützt werden, das Senden von mindestens einem der Folgendem umfasst:
einer maximalen Kernelgrößenfähigkeit;
einer Speicherbegrenzung; oder
einer Rechenleistung.

13. Verfahren (2600) gemäß Anspruch 11 oder Anspruch 12, wobei die End-zu-End-Kommunikation ein erster Dienstgüte-Fluss ist, der interaktiven Kommunikationen zugeordnet ist, die neuronale Netzbildungskonfiguration eine erste neuronale Netzbildungskonfiguration ist, das tiefe neuronale Netz ein erstes tiefes neuronales Netz ist, die Informationen, die durch die End-zu-End-Kommunikation ausgetauscht werden, Informationen umfassen, die den interaktiven Kommunikationen zugeordnet sind, und das Verfahren ferner Folgendes umfasst:
Senden einer Anforderung zum Aufbauen eines zweiten Dienstgüte-Flusses,
Empfangen einer zweiten neuronalen Netzbildungskonfiguration, um Informationen zu verarbeiten, die durch den zweiten Dienstgüte-Fluss ausgetauscht werden;
Bilden eines zweiten tiefen neuronalen Netzes basierend auf der zweiten neuronalen Netzbildungskonfiguration; und
Verwenden des zweiten tiefen neuronalen Netzes zur Verarbeitung von Informationen, die durch den zweiten Dienstgüte-Fluss ausgetauscht werden.

14. Netzwerkentität (120), umfassend:
einen Prozessor (260); und
computerlesbare Speichermedien (262), die Anweisungen umfassen, die eine End-zu-End-Maschinenlernsteuerung (318) implementieren, um eines der Verfahren der Ansprüche 1 bis 10 durchzuführen.

15. Benutzergerät (110), umfassend:
einen Prozessor (210); und
computerlesbare Speichermedien (212), die Anweisungen umfassen, um als Reaktion auf die Ausführung durch den Prozessor (210) das Benutzergerät (110) anzuweisen, ein Verfahren gemäß einem der Ansprüche 11 bis 13 durchzuführen.

## Revendications

1. Procédé (2500) réalisé par un dispositif de commande d'apprentissage automatique de bout en bout (318) dans un réseau de communication sans fil, le procédé comprenant :
l'obtention (2505), par le dispositif de commande d'apprentissage automatique de bout en bout (318), de capacités d'apprentissage automatique d'au moins deux dispositifs impliqués dans une communication de bout en bout ;
la détermination (2510), sur la base des capacités d'apprentissage automatique des au moins deux dispositifs (110, 120), d'une configuration d'apprentissage automatique de bout en bout pour traiter les informations échangées via la communication de bout en bout ; et
la direction (2515) des au moins deux dispositifs (110, 120) pour qu'ils traitent les informations échangées via la communication de bout en bout en formant un réseau neuronal profond basé sur la configuration d'apprentissage automatique de bout en bout.

2. Procédé (2500) selon la revendication 1, dans lequel la détermination (2510) de la configuration d'apprentissage automatique de bout en bout comprend également :
la répartition de la configuration d'apprentissage automatique de bout en bout sur au moins deux dispositifs (110, 120) en :
déterminant une première configuration de formation de réseau neuronal qui correspond à une première partie de la configuration d'apprentissage automatique de bout en bout sur la base des capacités d'apprentissage automatique d'un premier dispositif (110) des au moins deux dispositifs (110, 120) ; et
déterminant une deuxième configuration de formation de réseau neuronal qui correspond à une deuxième partie de la configuration d'apprentissage automatique de bout en bout sur la base des capacités d'apprentissage automatique d'un second dispositif (120) des au moins deux dispositifs (110, 120),
dans lequel les capacités d'apprentissage automatique du premier dispositif (110) comportent la puissance de traitement disponible du premier dispositif (110), et
dans lequel les capacités d'apprentissage automatique du second dispositif (120) comportent la puissance de traitement disponible du second dispositif (120).

3. Procédé (2500) selon la revendication 1 ou la revendication 2, dans lequel la configuration d'apprentissage automatique de bout en bout est une première configuration d'apprentissage automatique de bout en bout et le procédé comprend également :
l'obtention d'une ou plusieurs mesures qui indiquent un environnement d'exploitation actuel pour la communication de bout en bout ;
l'identification (830) d'une deuxième configuration d'apprentissage automatique de bout en bout sur la base d'au moins les une ou plusieurs mesures qui indiquent l'environnement d'exploitation actuel ; et
la direction (840) des au moins deux dispositifs (110, 120) pour qu'ils mettent à jour les un ou plusieurs réseaux neuronaux profonds sur la base de la deuxième configuration d'apprentissage automatique de bout en bout.

4. Procédé (2500) selon l'une quelconque des revendications 1 à 3, dans lequel la détermination (2510) de la configuration d'apprentissage automatique de bout en bout comprend :
la détermination, en tant que première partie de la configuration d'apprentissage automatique de bout en bout, d'une première configuration de formation de réseau neuronal pour un réseau neuronal profond côté équipement utilisateur (1918) ;
la détermination, en tant que deuxième partie de la configuration d'apprentissage automatique de bout en bout, d'une deuxième configuration de formation de réseau neuronal pour un réseau neuronal profond côté station de base (1916) ; et
la détermination, en tant que troisième partie de la configuration d'apprentissage automatique de bout en bout, d'une troisième configuration de formation de réseau neuronal pour un réseau neuronal profond côté serveur de réseau central (1914).

5. Procédé (2500) selon l'une quelconque des revendications 1 à 4, dans lequel la détermination (2510) de la configuration d'apprentissage automatique de bout en bout comprend également :
l'obtention d'au moins un paramètre de qualité de service ou d'une caractéristique de qualité de service associée à la communication de bout en bout ; et
la détermination de la configuration d'apprentissage automatique de bout en bout en fonction, au moins en partie, d'au moins un paramètre de qualité de service ou d'une caractéristique de qualité de service.

6. Procédé (2500) selon la revendication 5, dans lequel l'au moins un paramètre de qualité de service ou une caractéristique de qualité de service comprend au moins l'un des éléments suivants :
un niveau de priorité ;
un budget de retard de paquets ;
un taux d'erreur de paquet ;
un volume maximal de données en rafale ; ou
une fenêtre de moyenne.

7. Procédé (2500) selon l'une quelconque des revendications 1 à 6, dans lequel la configuration d'apprentissage automatique de bout en bout est une première configuration d'apprentissage automatique de bout en bout, la communication de bout en bout est un premier flux de qualité de service, le réseau neuronal profond est un premier réseau neuronal profond, et le procédé comprend également :
la détermination de l'établissement d'un second flux de qualité de service entre les au moins deux dispositifs (110, 120) ;
la détermination d'une deuxième configuration d'apprentissage automatique de bout en bout pour traiter les informations échangées via le second flux de qualité de service ; et
la direction des au moins deux dispositifs (110, 120) pour qu'ils traitent les informations échangées via le second flux de qualité de service en formant un second réseau neuronal profond basé sur la deuxième configuration d'apprentissage automatique de bout en bout.

8. Procédé (2500) selon l'une quelconque des revendications 1 à 7, dans lequel la communication de bout en bout est associée à l'échange d'informations associées à l'un des éléments suivants :
une application de réalité augmentée ;
une application de réalité virtuelle ;
une application de diffusion audio en continu ;
une application de jeu en temps réel ;
une application de diffusion vidéo en continu ;
une application de voix sur protocole Internet ;
une application de réseaux sociaux ;
un transfert de fichier ;
une communication de véhicule à tout ;
une communication Internet des objets ;
une automatisation ; ou
une télécommande.

9. Procédé (2500) selon l'une quelconque des revendications 1 à 8, dans lequel les au moins deux dispositifs (110, 120) comportent un équipement utilisateur (110), et
dans lequel la détermination (2510) de la configuration d'apprentissage automatique de bout en bout comprend également :
la réception, de la part de l'équipement utilisateur (110), d'une demande de configuration spécifique de formation de réseau neuronal ; et
la détermination de la configuration d'apprentissage automatique de bout en bout sur la base de la configuration spécifique de formation du réseau neuronal.

10. Procédé (2500) selon l'une quelconque des revendications 1 à 9, dans lequel la détermination (2510) de la configuration d'apprentissage automatique de bout en bout comprend soit :
la détermination, en tant que configuration d'apprentissage automatique de bout en bout, d'une configuration d'architecture et d'une ou plusieurs configurations de paramètres qui définissent un réseau neuronal profond ; soit
l'analyse d'une ou plusieurs mesures d'un environnement d'exploitation actuel ; et la détermination, en tant que configuration d'apprentissage automatique de bout en bout et sur la base, en partie, des une ou plusieurs mesures, d'une ou plusieurs configurations de paramètres qui définissent une mise à jour d'un réseau neuronal profond.

11. Procédé (2600) réalisé par un équipement utilisateur (110), le procédé comprenant :
la transmission (2605) d'une ou plusieurs capacités d'apprentissage automatique prises en charge par l'équipement utilisateur (110) ;
la réception (2610) d'une configuration de formation de réseau neuronal sur la base d'une configuration d'apprentissage automatique de bout en bout déterminée sur la base des capacités d'apprentissage automatique pour traiter les informations échangées via une communication de bout en bout ;
la formation (2615) d'un réseau neuronal profond en utilisant la configuration de formation de réseau neuronal ; et
l'utilisation (2620) du réseau neuronal profond pour traiter les informations échangées via la communication de bout en bout.

12. Procédé (2600) selon la revendication 11, dans lequel la transmission (2605) des une ou plusieurs capacités d'apprentissage automatique prises en charge par l'équipement utilisateur (110) comprend la transmission d'au moins l'un des éléments suivants :
une capacité de taille maximale du noyau ;
une limitation de mémoire ; ou
une capacité de calcul.

13. Procédé (2600) selon la revendication 11 ou la revendication 12, dans lequel la communication de bout en bout est un premier flux de qualité de service associé à des communications interactives, la configuration de formation de réseau neuronal est une première configuration de formation de réseau neuronal, le réseau neuronal profond est un premier réseau neuronal profond, les informations échangées via la communication de bout en bout comprennent des informations associées aux communications interactives, et le procédé comprend également :
la transmission d'une demande d'établissement d'un second flux de qualité de service,
la réception d'une deuxième configuration de formation de réseau neuronal pour traiter les informations échangées via le second flux de qualité de service ;
la formation d'un second réseau neuronal profond sur la base de la configuration de formation du second réseau neuronal ; et
l'utilisation du second réseau neuronal profond pour le traitement des informations échangées via le second flux de qualité de service.

14. Entité réseau (120) comprenant :
un processeur (260) ; et
des supports de stockage lisibles par ordinateur (262) comprenant des instructions qui mettent en œuvre un dispositif de commande d'apprentissage automatique de bout en bout (318) pour qu'il réalise l'un quelconque des procédés des revendications 1 à 10.

15. Équipement utilisateur (110) comprenant :
un processeur (210) ; et
des supports de stockage lisibles par ordinateur (212) comprenant des instructions, en réponse à l'exécution par le processeur (210), pour diriger l'équipement utilisateur (110) pour qu'il réalise l'un des procédés selon les revendications 11 à 13.
